# EUROPEAN PATENT SPECIFICATION

(11) **EP 4 608 620 B1**
(45) Date of publication and mention of the grant of the patent: **29.04.2026**
(21) Application number: 23794312.1
(22) Date of filing: 23.10.2023
(51) Int. Cl.: B27N 1/00, B27N 3/00, B27N 1/02, B27N 3/02, B27N 3/04, B27N 7/00

(54) **PROCESS OF PRODUCING A LIGNOCELLULOSIC COMPOSITE AND CORRESPONDING BINDER COMPOSITION, LIGNOCELLULOSIC COMPOSITE, KIT AND USE**
VERFAHREN ZUR HERSTELLUNG EINES LIGNOCELLULOSEVERBUNDS UND ENTSPRECHENDE BINDEMITTELZUSAMMENSETZUNG, LIGNOCELLULOSEVERBUND, KIT UND VERWENDUNG
PROCÉDÉ DE PRODUCTION D'UN COMPOSITE LIGNOCELLULOSIQUE ET COMPOSITION DE LIANT CORRESPONDANTE, COMPOSITE LIGNOCELLULOSIQUE, KIT ET UTILISATION

(30) Priority: 28.10.2022 EP 22204410
(43) Date of publication of application: 03.09.2025
(73) Proprietor: BASF SE, 67056 Ludwigshafen am Rhein (DE)
(72) Inventor: WEINKOETZ, Stephan, 67056 Ludwigshafen am Rhein (DE); SOMMER, Gereon Antonius, 67056 Ludwigshafen am Rhein (DE)
(74) Representative: BASF IP Association
(86) International application number: PCT/EP2023/079441
(87) International publication number: WO 2024/088944

(56) References cited:
- JP-A- 2004 230 736
- US-A1- 2017 190 902

## Description

The present invention relates to a process of producing a multilayer lignocellulosic composite comprising two, three or more lignocellulosic composite layers or a single-layer lignocellulosic composite. This process comprises a step of applying a high-frequency electrical field to a corresponding mixture during and/or after compacting, so that the binder hardens. The invention also relates to a single-layer or multilayer lignocellulosic composite, which is preparable according to a process of the invention, and to a construction product comprising such lignocellulosic composite. The invention also relates to a binder composition for producing a single-layer or multilayer lignocellulosic composite and a kit for producing such binder composition. Furthermore, the invention relates to the use of a lignocellulosic composite of the present invention as a building element in a construction product.

The invention is defined in the claims as attached.

More specifically, the present invention relates to a process of producing a multilayer lignocellulosic composite or a single-layer lignocellulosic composite, wherein a high-frequency electrical field is applied, typically for heating an intermediate material mixture, and in many cases for hardening the binder present in such mixture.

EP 3230028 B1 and WO 2016/091918 A1 (BASF SE) disclose a method for producing single or multi-layer lignocellulose (i.e., lignocellulosic) materials by hardening in a high frequency electric field.

WO 2015/104349 A2 (BASF SE) discloses a method for the production of lignocellulose materials.

WO 2016/091797 A1 (BASF SE) discloses a method for producing multi-layered lignocellulose materials having a core and an upper and a lower cover layer.

EP 2885116 B1 (Knauf Insulation) discloses a process for production of wood boards, more particularly particle boards, with excellent swelling properties.

WO 2008/089847 A1 (Knauf Insulation) discloses a composite wood board comprising wood particles and an organic binder.

WO 2008/127936 A2 (Knauf Insulation) discloses composite Maillard-resole binders to produce or promote cohesion in non-assembled or loosely assembled matter.

US 2020/0017688 A1 (BASF SE) discloses a method for producing lignocellulosic materials.

US 2017/0361489 A1 (BASF SE) discloses a process for the batchwise or continuous, preferably continuous production of multilayer lignocellulose materials with a core and with at least one upper and one lower outer layer.

JP 2004/230736 A (BASF Dispersions Co Ltd) discloses a manufacturing method for a wooden formed board.

WO 2010/031718 A1 (BASF SE) discloses multi-layered lignocellulosic molded bodies with low formaldehyde emissions.

Further publications that might be of interest in the context of the present invention are: EP 0583086 B2, EP 1225193 B2, EP 1578879 B1, EP 1700883 B1, EP 2399956 B1, EP 2485989 B1, EP 2867292 B1, WO 1997/031059 A1, WO 1999/002591 A1, WO 2007/014236 A2, WO 2009/006356 A1, WO 2015/084372 A1, WO 2016/009062 A1, and WO 2017/072186 A1.

Generally, in a process of producing a multilayer or single-layer lignocellulosic composite, a mixture of lignocellulosic particles (i.e. particles consisting essentially of lignocellulose) and a binder is provided or prepared. This mixture is typically scattered, e.g. to give a first layer of a multilayer mat or to give a single-layer mat. When producing a multilayer composite, successively two or more mixtures of lignocellulosic particles are scattered to give a mat with two, three or more individual layers. The resulting mat is then compacted, and the compacted mat or mixture is hardened during and/or after compaction, i.e. the mixture is treated in a manner so that the binder undergoes a hardening process. When a high-frequency electrical field is used in such process, it mainly serves to heat the mixture so that the binder hardens due to this heat treatment.

However, although the use of high-frequency electrical fields for heating (and hardening) binders of a mixture also comprising lignocellulosic particles is known for a considerable time, and although the corresponding processes and products possess valuable advantages over other processes of producing lignocellulosic composites, it is considered to be a disadvantage of such processes that the binder systems used in the production process contain hazardous substances like formaldehyde and isocyanates. Furthermore, in industrial production processes for making lignocellulosic composites when a high-frequency electrical field is applied in a production step, the binders used are typically based on petrochemical substances.

Furthermore, it is known that lignocellulosic particles release/emit formaldehyde during and/or after thermal treatment independently of which binder system and/or heating means is used for the production of lignocellulosic composites. Marutzky et. al have described that process in *"*Über die Abspaltung von Formaldehyd bei der thermischen Behandlung von Holzspänen" (Holzforschung, Bd. 31, 1977, S. 8-12).

There is a demand in industry for an improved process of producing a multilayer or single-layer lignocellulosic composite, wherein preferably a high-frequency electrical field is applied to a mixture comprising lignocellulosic particles and a binder, wherein binder components are used which can be obtained from non-petrochemical resources and which do not contain a significant amount of hazardous substances like formaldehyde and isocyanates, or substances which emit formaldehyde during the production process of the composites. Furthermore, there is a demand for an improved process of producing a multilayer or single-layer lignocellulosic composite wherein the (natural) emission of formaldehyde from lignocellulosic particles upon heat treatment is as low as possible. Insofar, any measures should be carefully chosen so that the product properties of the resulting multilayer or single-layer lignocellulosic composite (in particular, the typical physical and mechanical parameters) meet the high expectations of the industry in the usual manner.

It was a primary object of the present invention to provide for such an improved process of producing a multilayer lignocellulosic composite comprising two, three or more lignocellulosic composite layers or a single-layer lignocellulosic composite. The improved process should preferably include a step of applying a high-frequency electrical field in order to cause or assist hardening of the binder.

Furthermore, the improved process should use different binder components or different combinations of binder components in comparison with the prior art so that at least some of the binder components can be obtained from renewable resources and/or so that the binder components and/or the lignocellulosic particles and/or the lignocellulosic composite emit a reduced amount of formaldehyde during and/or after the production process.

The present invention concerns in its categories a process of producing a multilayer lignocellulosic composite comprising two or more, preferably three, lignocellulosic composite layers or a single-layer lignocellulosic composite; a single-layer or multilayer lignocellulosic composite, which is preparable according to a process of the invention; a construction product comprising such lignocellulosic composite; the use of such a lignocellulosic composite; a binder composition for producing such a lignocellulosic composite; and a kit for producing such a binder composition. Embodiments, aspects or features disclosed for or in connection with one of these categories in each case analogously apply for the other categories of the invention.

If not stated otherwise, preferred embodiments, aspects or features of the present invention can be combined with other embodiments, aspects or features, especially with other preferred embodiments, aspects or features, irrespectively of the categories to which the embodiments, aspects or features relate. The combination of preferred embodiments, aspects or features with other preferred embodiments, aspects or features in each case again results in preferred embodiments, aspects or features.

In accordance with the primary object of the invention as stated above, the present invention relates to a process of producing a multilayer lignocellulosic composite comprising two, three or more, preferably three, lignocellulosic composite layers or a single-layer lignocellulosic composite, and comprising at least the following steps:
S1) providing or preparing a mixture at least comprising
   - lignocellulosic particles,
      and
   - a binder comprising as components at least
      b1) one, two or more polymers comprising multiple carboxyl groups,
      b2) for crosslinking said polymers via esterification, one, two or more polymer or monomer compounds having two or more hydroxy groups,
         and
      b3) urea,
S2) compacting the mixture,
S3) applying a high-frequency electrical field to the mixture during and/or after compacting, so that the binder hardens via esterification and binds the lignocellulosic particles, so that a single-layer lignocellulosic composite or a layer of a multilayer lignocellulosic composite results.

Herein, if the process according to the present invention is a process of producing a multilayer lignocellulosic composite comprising two, three or more, preferably three, lignocellulosic composite layers, in step S3) a layer of a multilayer lignocellulosic composite results. Thus, at least one lignocellulosic composite layer of the two, three or more, preferably three, lignocellulosic composite layers is produced according to process steps S1), S2) and S3).

Preferably, if the process according to the present invention is a process of producing a multilayer lignocellulosic composite comprising a core layer (as defined below) at least the core layer of the multilayer lignocellulosic composite is produced according to process steps S1), S2) and S3).

Thus, preferably, if the process according to the present invention is a process of producing a three-layer lignocellulosic composite comprising a core layer and two surface layers (as defined below) at least the core layer of the three-layer lignocellulosic composite is produced according to process steps S1), S2) and S3). The core layer correspondingly comprises a mixture provided or prepared according to step S1) of the present invention, i.e. a mixture at least comprising lignocellulosic particles, and a binder comprising as components at least b1) one, two or more polymers comprising multiple carboxyl groups, b2) for crosslinking said polymers via esterification, one, two or more polymer or monomer compounds having two or more hydroxy groups, and b3) urea, and optionally component b4) as defined below. The surface layers of the three-layer lignocellulosic composite on the other hand are in many cases made from a different mixture than the core layer.

Herein, if as a result of step S3) a first lignocellulosic composite layer of a multilayer lignocellulosic composite results, it is preferred that a second lignocellulosic composite layer or more or all further lignocellulosic composite layers of the final multilayer lignocellulosic composite are also prepared by conducting steps S1) to S3) as defined above, wherein the specifics of respective steps S1) and preferably steps S2), and in individual cases the specifics of steps S3) conducted for individual lignocellulosic composite layers (first, second and further layers) are independent of each other. E.g., for making a first lignocellulosic composite layer the lignocellulosic particles and the binder used in step S1), and the compacting conditions (used in step S2)) are each selected in accordance with the individual requirements, and for making a second or for making further lignocellulosic composite layers the selections might be the same or different.

Typically, and most preferably, step S3) is the very same step for all lignocellulosic composite layers of a multilayer lignocellulosic composite (in particular for all lignocellulosic composite layers of a three-layer lignocellulosic composite), and the specifics of step S3) are preferably selected in order to meet the requirements of all the lignocellulosic composite layers present. In this preferred case all lignocellulosic composite layers of a multilayer lignocellulosic composite are jointly and simultaneously subjected to the conditions of step S3).

In many preferred cases also step S2) is the very same step for all lignocellulosic composite layers of a multilayer lignocellulosic composite. In these preferred cases all lignocellulosic composite layers of a multilayer lignocellulosic composite are jointly and simultaneously subjected to the conditions of step S2).

Particularly preferred is therefore a process according to the present invention, wherein all of the two, three or more, preferably three, lignocellulosic composite layers of a multilayer lignocellulosic composite are jointly and simultaneously subjected to the very same process steps S2) and S3) as defined above.

More preferably, all of the two, three or more, preferably three, lignocellulosic composite layers of a multilayer lignocellulosic composite are subjected to process steps S1), S2) and S3) as defined above.

Herein, and throughout the present text, the term "one, two or more polymers comprising multiple carboxyl groups" designates polymers having in their protonated form multiple carboxyl groups (COOH). Throughout the text, when referring to a polymer having (multiple) carboxyl groups a reference to the corresponding (partially) neutralized/deprotonated form is incorporated. The skilled person in accordance with the requirements of the individual technical situation will adjust the pH of the binder in order to provide for the required reactivity. Thus, in a process of the present invention the composition of the binder and/or the composition of the mixture provided or prepared in step S1) is preferably adjusted by addition of an additional acidic or basic compound. This is preferably conducted in order to influence or adjust the pH of the binder, and more preferably and specifically in order to influence or adjust the reactivity of the components present for hardening the binder via esterification, i.e. said components b1) and b2), and optional b4) (see below for definition of binder component b4)).

Herein, and throughout the present text, the term "one, two or more polymer or monomer compounds having two or more hydroxy groups" designates polymers or monomers having at least two hydroxy groups (OH).

In order to allow for esterification hydroxy groups (OH) and acidic carboxyl groups (COOH) must be present. Correspondingly, said components b1) and b2), and optional b4) (see below for definition of binder component b4)) facilitate hardening of the binder via esterification. Thus, the skilled person in accordance with the requirements of the individual technical situation will adjust the pH of the binder in order to provide for the required reactivity. Thus, and for the reasons stated above, in a process of the present invention the composition of the binder and/or the composition of the mixture provided or prepared in step S1) is preferably adjusted by addition of an additional acidic or basic compound.

Thus, according to the process of the present invention in step S1) there is provided or prepared a mixture comprising lignocellulosic particles and a specific binder. According to step S3), a high-frequency electrical field is applied to the mixture during and/or after compacting (see step S2)). The high-frequency electrical field is applied so that the binder hardens via esterification.

Esterification takes place at least between binder components b1) and b2), and optional b4) (see below for definition of binder component b4)). An esterification reaction is possible because the binder used in step S1) comprises one, two or more polymers comprising multiple carboxyl groups (component b1)) and for crosslinking said polymers via esterification, additionally comprises one, two or more polymer or monomer compounds having two or more hydroxy groups (component b2)). Esterification is the reaction of said hydroxy groups and said carboxyl groups. When said hydroxy groups and said carboxyl groups react with each other in an esterification reaction, the corresponding compounds are (cross)linked, and correspondingly the binder hardens and binds the lignocellulosic particles, so that a single-layer lignocellulosic composite or a layer of a multilayer lignocellulosic composite results. The crosslinking reaction necessitates the presence of at least two, preferably more than two carboxyl groups and/or hydroxy groups in said components b1) and/or b2) respectively. The use of polymers comprising multiple carboxyl groups as (esterification) component b1) allows for a very effective crosslinking and hardening of the binder upon application of a high-frequency electrical field.

Binder compositions comprising compounds having two or more hydroxy groups as well as compounds having two or more carboxyl groups which can be hardened via esterification of said groups are known from the prior art, but were typically considered to be rather delicate when subjected to a high-frequency electrical field.

Specific binder systems comprising hydroxy compounds and carboxyl compounds have been disclosed before, but not in combination with the use of a high-frequency electrical field:
EP 2485989 B1 discloses binder systems for use in manufacturing both fiberglass insulation and non-woven mats, which are cross-linked through an esterification reaction.

EP 0583086 B2 discloses a curable aqueous composition comprising a polymeric polyacid containing at least two carboxylic acid groups, anhydride groups, or the salts thereof; a polyol containing at least two hydroxyl groups; and a phosphorous-containing accelerator.

EP 1578879 B1 discloses an aqueous binder composition for coating glass fibers comprising: a polycarboxy polymer; a poly alcohol having at least two hydroxyl groups; and a watersoluble extender, the extender being present in an amount sufficient to establish an extender-polycarboxy polymer weight ratio of at least 1: 10.

EP 1700883 B1 discloses a composition comprising a polycarboxy polymer and a polyol or a hydroxy-functional, carboxy-functional polymer; and a polybasic carboxylic acid, or an anhydride or salt thereof; and a strong acid; and water.

EP 2399956 B1 discloses an aqueous binder composition comprising one or more polymeric polyacid and a carbohydrate component.

EP 2867292 B1 discloses an aqueous binder composition in the form of a dispersion comprising starch; and one or more acrylic component(s).

WO 1997/031059 A1 discloses a binder containing a polymer obtained by radical polymerization consisting to the extent of 5 to 100 wt% of an ethylenically unsaturated acid anhydride or bicarboxylic acid, the carboxylic acid groups of which can form an anhydride group; and an alkanol amine with at least two hydroxyl groups.

WO 2009/006356 A1 discloses a polymer composition suitable for wood treatment or binding, said composition comprising a reaction product of at least a polyol and at least a crosslinking agent; said crosslinking agent having at least 2 carboxylic acid groups per molecule.

WO 2016/009062 A1 discloses an aqueous curable binder composition comprising starting materials required for forming a thermoset resin upon curing and a matrix polymer, wherein the starting materials comprise a polyhydroxy component and a polycarboxylic acid component, or an anhydride, ester or salt derivative thereof and/or reaction product thereof.

WO 2017/072186 A1 discloses an aqueous curable binder composition comprising a carbohydrate compound, a first cross linker and a second cross linker, wherein the first cross linker is selected from carboxyl function bearing compounds, which form esters with the carbohydrate compound.

EP 2697293 B1 discloses a composite material comprising 10-95 wt.% of a particulate or fibrous filler derived from plant- or animal based materials and at least 5 wt.% of a polyester derived from an aliphatic polyalcohol with 2-15 carbon atoms and a polyacid, wherein the polyacid comprises at least 10 wt.% of citric acid as tricarboxylic acid.

However, although such binder compositions were known for a considerable time, they were never used in production processes for lignocellulosic composites, in combination with the application of a high-frequency electrical field.

Document US 2020/017688 A1 discloses polymer-based binders which comprise a polymer N composed of the following monomers: a) 70% to 100% by weight of at least one ethylenically unsaturated mono- and/or dicarboxylic acid (monomer(s) N₁) and b) 0% to 30% by weight of at least one other ethylenically unsaturated monomer which differs from the monomers N₁ (monomer(s) N₂), and optionally a low-molecular-weight crosslinking agent having at least two functional groups selected from the group of hydroxy, carboxylic acid and derivatives thereof, primary, secondary, and tertiary amine, epoxy, and aldehyde. Document US 2020/017688 A1 further discloses Energy Input by Applying Electrical Field.

Document JP 2004 230736 A discloses: A) The polymer obtained by the radical polymerization which 5 to 100 weight% of a polymer becomes from ethylenic unsaturated dicarboxylic acid with which an ethylenic unsaturated acid anhydride or a carboxylic acid group can form an acid-anhydride group, And B) It is the alkylamine which has at least 2 hydroxyl group, and let the hydroxyl group be a bridge crosslinking component. Document JP 2004 230736 A further discloses: although a hot pressing is then carried out, a heat-transfer board heating, a high frequency dielectric heating, or a microwave heating is used together.

However, documents US 2020/017688 A1 and JP 2004 230736 A do not disclose a binder system comprising b1) one, two or more polymers comprising multiple carboxyl groups, b2) one, two or more polymer or monomer compounds having two or more hydroxy groups, and b3) urea.

The inventors of the present invention have found that binder component b3) urea is essential for reducing the emission of formaldehyde from the binder and/or lignocellulosic particles upon heat treatment via application of a high-frequency electrical field.

Surprisingly it has also been found that binder component b3), urea, has a positive effect on the mechanical properties of the resulting multilayer or single-layer lignocellulosic composites. In particular, the swelling in thickness after 24 h ("24 h swelling"), the transverse tensile strength ("internal bond strength") and the surface and edge screw holding of the lignocellulosic composites (boards) as produced in a process according to the present invention are significantly improved. Accordingly, urea does not only serve as a formaldehyde scavenger but furthermore (and unexpectedly) seems to improve the hardening process of the (esterification) binder and the product properties of the resulting composite when a high-frequency electrical field is applied. We refer to the Examples described below.

US 2011/0171473 A1 discloses a multilayer lignocellulose-containing molding comprising a covering layer or a plurality of covering layers comprising lignocellulose-containing particles which is/are obtainable by using a binder (b), the binder (b) comprising the following components: an aqueous component (I) comprising (i) a polymer A which is composed of the following monomers: a) from 70 to 100% by weight of at least one ethylenically unsaturated mono- and/or dicarboxylic acid (monomer(s) A1) and b) from 0 to 30% by weight of at least one further ethylenically unsaturated monomer which differs from the monomers A1 (monomer(s) A2) and, optionally, (ii) a low molecular weight crosslinker having at least two functional groups which are selected from the group consisting of hydroxyl, carboxyl and derivatives thereof, primary, secondary and tertiary amine, epoxy, aldehyde, the binder (b) comprising formaldehyde scavengers. Examples of suitable formaldehyde scavengers are: ammonia, urea, melamine, organic C₁-C₁₀-amines, polymers which carry at least one amino group, such as polyamines, polyimines, polyureas, polylysines, polyvinylamine, polyethylenimine. Accordingly, the utilization of said binder (b) is only described for the surface layers (i.e., covering layers) of such a multi-layer lignocellulose-containing molding.

US 2011/0171473 A1 thus does not disclose a single-layer lignocellulosic composite or the production of a single-layer lignocellulosic composite.

Furthermore, US 2011/0171473 A1 thus does not disclose the utilization of said binder (b) in the core layer (middle layer in the language of US 2011/0171473 A1) of a multilayer lignocellulosic composite.

US 2011/0171473 A1 also discloses a process for the production of the multilayer lignocellulose-containing molding, which comprises pressing layers at elevated temperature.

US 2011/0171473 A1 thus does not disclose the application of a high-frequency electrical field for hardening a binder according to step S3) of the present invention.

As such, unprecedented in the state of the art is i) the specific binder comprised in the mixture provided or prepared according to step S1) of the process according to the present invention, which comprises esterification components b1) and b2) and further comprises component b3) urea in combination with ii) hardening said provided or prepared mixture at least comprising said specific binder and lignocellulosic particles by applying a high-frequency electrical field, i.e. step S3) of the process according to the present invention.

The inventors have also found out that the (esterification/urea) binder according to the present invention (as defined above, below and in the claims) and hardening said binder via esterification by application of a high-frequency electrical field to a provided or prepared mixture comprising said binder and lignocellulosic particles, i.e. step S3), are not limited to the specific products, layers or embodiments disclosed in US 2011/0171473 A1 in the production of lignocellulosic composites. Instead, the process according to the present invention is very versatile and applicable for:
- single-layer lignocellulosic composites (not disclosed in US 2011/0171473 A1),
   or
- two, three or more layers of a multilayer lignocellulosic composite, wherein said two, three or more layers preferably constitute the core layer, one or both surface layer(s) and/or any layer(s) in between the core layer and the respective surface layers of the multilayer lignocellulosic composite,
   or
- all layers of a multilayer lignocellulosic composite; e.g. to the lower surface layer, the core layer and the upper surface layer of a three-layered lignocellulosic composite (not disclosed in US 2011/0171473 A1 are multilayer lignocellulosic composites having polymers comprising multiple carboxyl groups and/or polymer or monomer compounds having two or more hydroxy groups in all layers),
- the core layer (middle layer) of a three-layer lignocellulosic composite (US 2011/0171473 A1 only discloses core (i.e. middle) layers on the basis of (a1) formaldehyde resins and (a2) an organic isocyanate having at least two isocyanate groups).

The term "core layer" in the present text designates the (one) lignocellulosic composite layer located in the geometric centre of a multilayer lignocellulosic composite, and correspondingly having no direct contact with the outside (exterior), i.e. not constituting a surface layer (as defined below). The core layer has an approximately equal distance to the upper and the lower surface (outer face) and/or the upper and lower surface layers of the multilayer lignocellulosic composite, and of all layers it has the maximum distance to the surfaces/outer faces of the multilayer lignocellulosic composite. For example: A three-layer lignocellulosic composite/board (being the preferred embodiment of a multilayer lignocellulosic composite according to the invention) consists of three lignocellulosic composite layers (each of the three layers comprising a specific mixture at least comprising lignocellulosic particles and a binder). Said three layers "S₁/C/S₂" are: a lower surface layer S₁ in direct contact with the core layer C and constituting a first outside (exterior); a core layer C in direct contact with both surface layers S₁ and S₂, and not in direct contact with the outside of the composite; and an upper surface layer S₂ in direct contact with the core layer C and constituting a second outside (exterior) of the composite, wherein the first and the second outside of the composite are on opposite sides (upper and lower side, respectively) of the composite. The terms "in direct contact with..." and "not in direct contact with..." herein relates to the material contacted by the surface of the respective layer in an orientation parallel to the plane of the layer.

The term "surface layer" in the present text designates a lignocellulosic composite layer in direct contact with the outside (exterior), i.e. having an outer face. Accordingly, a three-layer lignocellulosic composite/board (being the preferred embodiment of a multilayer lignocellulosic composite according to the invention) comprises two surface layers on opposite sides, which are each in direct contact with both the outside (exterior) and the core layer C. Preferably, both surface layers of a three-layer lignocellulosic composite/board (i.e., both the upper and the lower surface layer) have an identical composition and/or identical dimensions. In particular, preferably both surface layers consist of the same composition and have an identical thickness to give a sandwich type layer structure.

Throughout the text, if not indicated otherwise, the terms "core layer" and "surface layer" designate layers, which comprise a mixture at least comprising lignocellulosic particles and a binder. Thus, both "core layer" and "surface layer" are lignocellulosic composite layers.

Correspondingly, in addition to lignocellulosic composite layers comprising a mixture at least comprising lignocellulosic particles and a binder, a multilayer lignocellulosic composite comprising two, three or more lignocellulosic composite layers (as prepared in a process of the present invention as defined above and/or in the claims as attached, preferably prepared in a preferred process as defined herein) may comprise additional layers not comprising lignocellulosic particles. Said additional layers are not designated as lignocellulosic composite layers, and specifically are not designated as core layer or surface layer (in view of the above definitions). E.g., preferred multilayer (preferably three layer) lignocellulosic composites comprise exterior (i.e., coating) layers not comprising any lignocellulosic particles, wherein an upper exterior (coating) layer is in contact with the outside (exterior) of an upper surface layer and a lower exterior (coating) layer is in contact with the outside (exterior) of a lower surface layer.

It is preferred that the multilayer lignocellulosic composite comprising two, three or more lignocellulosic composite layers, as prepared in a process of the present invention as defined above and/or in the claims as attached, preferably prepared in a preferred process as defined herein, does not comprise a core layer (i.e. middle layer using the language of US 2011/0171473 A1) comprising a completely or partially hardened binder selected from the group consisting of (a1) formaldehyde resins and (a2) an organic isocyanate having at least two isocyanate groups.

Preferably, the multilayer lignocellulosic composite comprising two, three or more lignocellulosic composite layers or the single-layer lignocellulosic composite, as prepared in a process of the present invention, does not comprise a completely or partially hardened binder selected from the group consisting of (a1) formaldehyde resins and (a2) an organic isocyanate having at least two isocyanate groups and does (correspondingly) not comprise a binder (a) as defined in claim 1 of US 2011/0171473 A1.

More preferably, the multilayer lignocellulosic composite comprising two, three or more lignocellulosic composite layers or the single-layer lignocellulosic composite, as prepared in a process of the present invention, does not comprise a completely or partially hardened binder comprising either (a1) formaldehyde resins or (a2) an organic isocyanate, as respectively defined in claim 1 of US 2011/0171473 A1.

The term "lignocellulosic particles" used herein designates and includes any type, size and shape of lignocellulosic particles, such as fibres, chips, strands, flakes, sawmill shavings and saw dust or mixtures thereof. In addition, any type of lignocellulosic biomass such as birch, beech, alder, pine, spruce, larch, eucalyptus, linden, poplar, ash, fir, tropical wood, sisal, jute, flax, coconut, kenaf, hemp, banana, straw, cotton stalks, bamboo and the like can be used as a source for said lignocellulosic particles. Lignocellulosic particles from both virgin wood and/or waste wood, such as old furniture, can be used to produce the lignocellulosic composite of the present invention. According to the present invention, it is further possible to use mixtures of different types of lignocellulosic particles in the production of a lignocellulosic composite.

The term "high-frequency electrical field" used herein designates and includes any kind of high-frequency electrical or electromagnetic field such as microwave irradiation or a high-frequency electrical field, which results after applying a high-frequency alternating voltage at a plate capacitor between two capacitor plates. Suitable frequencies for the high-frequency electrical field are in the range of from 100 kHz to 30 GHz, preferably 6 MHz to 3 GHz, more preferably 13 MHz to 41 MHz. Especially suitable and preferred are the respective nationally and internationally approved frequencies such as 13,56 MHz, 27,12 MHz, 40,68 MHz, 2,45 GHz, 5,80 GHz, 24,12 GHz, more preferably 13,56 und 27,12 MHz. The electrical power used to create such a high-frequency electrical field in the processes of the present invention preferably is in the range of from 10 to 10.000 kWh, more preferably of from 100 to 5.000 kWh, most preferably of from 500 to 2.000 kWh.

The term "single-layer lignocellulosic composite" used herein designates and includes any single-layered composite material, which contains lignocellulosic particles and a hardened binder that binds the lignocellulosic particles. Furthermore, the term "single-layer" specifies that the lignocellulosic composite comprises only one layer of lignocellulosic material and binder, wherein the single layer preferably is produced by a process comprising a single step of scattering lignocellulosic particles. The "single-layer lignocellulosic composite" can be of any shape such as rectangular, square, round, triangular and the like. The "single-layer lignocellulosic composite" can also be of any thickness, density and colour as long as it contains lignocellulosic particles and a hardened binder. The "single-layer lignocellulosic composite" can also comprise several other compounds different from lignocellulosic particles and binders. The lignocellulosic particles used in the production of a "single-layer lignocellulosic composite" are of the same type or of different types of lignocellulosic biomass (see above for preferred types). As similarly stated above for multilayer lignocellulosic composites, a single-layer lignocellulosic composite may preferably comprise one or two exterior (i.e., coating) layers not comprising lignocellulosic particles, wherein more preferably an upper exterior (coating) layer is in contact with the upper outside (exterior) of the single layer (i.e., the single lignocellulosic composite layer) and a lower exterior (coating) layer is in contact with the lower outside (exterior) of the single layer.

Preferably, a "multilayer lignocellulosic composite" as defined herein contains (individual) lignocellulosic composite layers, which are distinguishable from an adjacent layer. The multilayer lignocellulosic composite comprises two, preferably three or more distinguishable (individual) lignocellulosic composite layers, more preferably a lignocellulosic composite core layer and distinguishable therefrom an upper and a lower lignocellulosic composite surface layer (three-layered composite/board). The adjacent layers of the multilayer lignocellulosic composite are preferably distinguishable in terms of their composition, density, colour or any other properties, and adjacent layers comprise identical types of lignocellulosic particles and/or binders or different types of lignocellulosic particles and/or binders. The (individual) lignocellulosic composite layers may also comprise other materials in addition to lignocellulosic particles and/or binders, such as plastics, fabrics, paint coat or the like, for examples derived from foreign matter in waste wood. The lignocellulosic particles used in the production of an individual lignocellulosic composite layer of a "multilayer lignocellulosic composite" are of the same type or of different types of lignocellulosic biomass (see above for preferred types). The lignocellulosic particles used in the production of separate (individual) lignocellulosic composite layers of a "multilayer lignocellulosic composite" are of the same type or of different types of lignocellulosic biomass (see above for preferred types) or are identical or different mixtures of two or more of such types of lignocellulosic biomass. Furthermore, the term "multilayer" specifies that the lignocellulosic composite comprises individual layers, wherein at least two of these individual layers comprise lignocellulosic material and binder, wherein two, three or more or all of said lignocellulosic composite layers preferably are produced in a multi-step-process comprising for each (individual) layer of lignocellulosic material and binder a step of scattering lignocellulosic particles.

Thus, the present invention relates to a process of producing a multilayer lignocellulosic composite comprising two, three or more lignocellulosic composite layers or a single-layer lignocellulosic composite, wherein preferably
i) each individual lignocellulosic composite layer, i.e. the single-layer lignocellulosic composite or a layer of a multilayer lignocellulosic composite, comprises
   - only one type of lignocellulosic particles (lignocellulosic biomass), e.g. only spruce chips or only birch flakes,
      or
   - a mixture of different types of lignocellulosic particles (lignocellulosic biomass), e.g. a mixture of both spruce chips and birch flakes,
   and/or wherein
ii) said multilayer lignocellulosic composite comprises
   - only one and the same type of lignocellulosic particles (lignocellulosic biomass) in all lignocellulosic composite layers, e.g. only spruce chips or only birch flakes in all lignocellulosic composite layers, or
   - different types of lignocellulosic particles (lignocellulosic biomass) in the individual lignocellulosic composite layers, e.g. only spruce chips in a first individual layer and only birch flakes in a second individual layer, or
   - identical mixtures of lignocellulosic particles (lignocellulosic biomass) in all lignocellulosic composite layers, e.g. an identical mixture of both spruce chips and birch flakes in all layers, or
   - different mixtures of lignocellulosic particles (lignocellulosic biomass) in the individual lignocellulosic composite layers, e.g. a first mixture of both spruce chips and birch flakes in a first individual layer and a second mixture of pine chips and flax fibres in a second individual layer.

Other terms used in for describing the present invention have their typical meaning or are explained or defined in the present description.

Preferred is a process of the present invention, wherein the binder comprises as an additional binder component, preferably for hardening the binder via esterification:
b4) one or more non-polymeric, preferably non-polymeric biobased, compounds having two or more carboxyl groups and/or one or more non-polymeric, preferably non-polymeric biobased, compounds having at least one carboxyl group and at least one hydroxy group.

In a first preferred aspect of the present invention the one non-polymeric, preferably non-polymeric biobased, compound having two or more carboxyl groups or at least one of the more than one non-polymeric, preferably non-polymeric biobased, compounds having two or more carboxyl groups is selected from the group consisting of hydroxy carboxylic acids, preferably is selected from the group consisting of alpha-hydroxy carboxylic acids, more preferably is selected from the group consisting of citric acid, malic acid and tartaric acid, and most preferably is citric acid. Two or more of said preferred or particularly preferred compounds can be used in combination with each other.

In a second preferred aspect of the present invention the one non-polymeric, preferably non-polymeric biobased, compound having at least one carboxyl group and at least one hydroxy group or at least one of the more than one non-polymeric, preferably non-polymeric biobased, compounds having at least one carboxyl group and at least one hydroxy group is selected from the group consisting of monohydroxy-monocarboxylic acids, preferably is selected from the group consisting of alpha-hydroxy monohydroxy-monocarboxylic acids, more preferably is selected from the group consisting of lactic acid, glycolic acid, and mandelic acid, and most preferably is lactic acid. Two or more of said preferred or particularly preferred compounds can be used in combination with each other.

Herein, the term "biobased" means that the respective compound is at least partially preparable or prepared from substances that are present in biological products. Preferably, the compound is completely preparable or prepared from such substances. More preferably, the (biobased) compounds are plant-based, i.e. they are at least partially preparable or prepared from substances that are present in plants.

Said non-polymeric, preferably non-polymeric biobased, compounds having two or more carboxyl groups (COOH) and/or having at least one carboxyl group (COOH) and at least one hydroxy group (OH) can undergo esterification reactions with binder components b1) and/or b2) and thus also facilitate hardening of the binder via esterification.

Preferred is a process of the present invention (preferably a process as defined herein as being preferred), wherein the one or at least one, preferably all, of the two or more polymer or monomer compounds having two or more hydroxy groups of component b2) is a biobased polymer or biobased monomer compound having two or more hydroxy groups.

In a first preferred aspect of the present invention said one or at least one, preferably all, of the two or more polymer or monomer compounds having two or more hydroxy groups of component b2) is (are) selected from the group consisting of carbohydrates, preferably selected from the group consisting of mono-saccharides, disaccharides, oligosaccharides, polysaccharides and starch, more preferably selected from the group consisting of dextrose, fructose, saccharose, non-hydrolyzed starch and (partially) hydrolyzed starch like maltodextrin or corn sirup, even more preferably selected from the group consisting of dextrose, fructose and maltodextrin. The term "(partially) hydrolyzed starch" as used herein comprises the meanings of partially hydrolyzed starch (preferably comprising maltodextrin and/or corn sirup, more preferably the partially hydrolyzed starch is selected from the group consisting of maltodextrin and corn sirup) and hydrolyzed starch. Two or more of said preferred or particularly preferred compounds can be used in combination with each other.

In a second preferred aspect of the present invention said one or at least one, preferably all, of the two or more polymer or monomer compounds having two or more hydroxy groups of component b2) is selected from the group consisting of polyvinylalcohol, glycerol and sugar alcohols, the latter preferably selected from the group consisting of mannitol, sorbitol, xylitol, lactitol, isomalt, maltitol, erythritol and hydrogenated starch hydrolysates. More preferably said one or at least one of the two or more polymer or monomer compounds having two or more hydroxy groups of component b2) is glycerol. Two or more of said preferred or particularly preferred compounds can be used in combination with each other.

In a third preferred aspect of the present invention said one or at least one, preferably all, of the two or more polymer or monomer compounds having two or more hydroxy groups of component b2) is selected from the group consisting of compounds selected from the group consisting of triols (preferably triethanolamine), tetrols, pentols and hexols, wherein the selected compounds are not carbohydrates, not sugar alcohols, and not alkylamines. Two or more of said preferred or particularly preferred compounds can be used in combination with each other.

If two or more polymer or monomer compounds having two or more hydroxy groups of component b2) are present in the binder, said compounds may be selected from two or more of the above-described preferred aspects, i.e. said different groups of compounds for component b2). For example said two or more polymer or monomer compounds having two or more hydroxy groups of component b2) can comprise or consist of dextrose (belonging to the group of carbohydrates) and glycerol (belonging to the group of sugar alcohols). It is particularly preferred that at least one of the two or more polymer or monomer compounds having two or more hydroxy groups of component b2) is one of the biobased compounds dextrose, fructose, maltodextrin or glycerol.

Whereas in particular US 2011/0171473 A1 (as discussed above) focusses on alkylamines (triethanolamine) as compounds having two or more hydroxy groups, the inventors of the present invention have found out that biobased alternatives selected from the group of carbohydrates, sugar alcohols and other triols, tetrols, pentols and hexols which are not alkylamines show an even better performance in terms of the mechanical properties of the resulting lignocellulosic composites. Accordingly, it is preferred that the one or at least one of the two or more, preferably all, polymer or monomer compounds having two or more hydroxy groups of component b2) is/are selected from the group consisting of carbohydrates and sugar alcohols, and even more preferred from the group consisting of biobased compounds dextrose, fructose, maltodextrin and glycerol.

It is also preferred that the total amount of said one, two or more polymer or monomer compounds, preferably the total amount of said one, two or more biobased polymer or biobased monomer compounds, of component b2) is above 5 mass-%, more preferably above 10 mass-%, and even more preferably above 15 mass-%, and is below 90 mass-%, more preferably below 80 mass-%, and even more preferably below 60 mass-% relative to the combined total masses of binder components b1), b2) and any present component b4).

As a non-limiting example, a binder according to this preferred aspect of the present invention comprises a polycarboxylate as component b1), glycerol as component b2) and citric acid as component b4), wherein the mass ratio of polycarboxylate to glycerol to citric acid is 50:25:25.

Preferred is a process of the present invention (preferably a process as defined herein as being preferred), wherein the one or at least one of the two or more, preferably all, polymers comprising multiple carboxyl groups of component b1) is selected from the group consisting of polymers of one or more unsaturated carboxylic acids, preferably acrylic acid, and mixtures thereof, preferably co-polymers of acrylic acid and more preferably copolymers of acrylic acid and maleic anhydride and/or maleic acid.

These polymers comprising multiple carboxyl groups preferably are partially neutralized. Partially neutralized means that (i) at least some, preferably more than 10%, more preferably more than 20% and (ii) less than 50%, preferably less than 35%, of the acidic carboxyl groups (COOH) of the polymers comprising multiple carboxyl groups are neutralized by reaction with basic compounds, wherein neutralization refers to the conversion of carboxyl groups (COOH) into carboxylate groups (COO-) (acid-base reaction). Basic compounds for partial neutralization may be hydroxides like sodium hydroxide, potassium hydroxide, calcium hydroxide, or carbonates, like sodium carbonate, or ammonia, or primary, secondary and tertiary amines, like ethylamine, propylamine, isoproylamine, butylamine, hexylamine, ethanolamine, dimethylamine, diethylamine, Di-n-propylamine, tributylamine, triethanolamine, dimethoxyethylamine, 2-ethoxyethylamine, 3-ethoxypropylamine, dimethylethenanolamine, diisopropanolamine and morpoholine. Preferred basic compounds are hydroxides, more preferably sodium hydroxide is used as basic compound.

Preferred is a process of the present invention (preferably a process as defined herein as being preferred), wherein the one or at least one of the two or more, preferably all, polymers comprising multiple carboxyl groups of component b1) is selected from the group consisting of biobased polyesters having two or more carboxyl groups, wherein preferably one, two or more of said, preferably biobased, polyesters are prepared by reacting:
- one or more alpha-hydroxy carboxylic acids, preferably citric acid,
   and
- one, two or more compounds selected from the group consisting of:
   - carbohydrates, preferably selected from the group consisting of monosaccharides, disaccharides, oligosaccharides, polysaccharides and starch, more preferably selected from the group consisting of dextrose, fructose, saccharose, non-hydrolyzed starch, hydrolyzed starch and partially hydrolyzed starch, the latter preferably comprising maltodextrin and/or corn sirup, more preferably selected from the group consisting of maltodextrin and corn sirup;
   - sugar alcohols, preferably selected from the group consisting of mannitol, sorbitol, xylitol, lactitol, isomalt, maltitol, erythritol, hydrogenated starch hydrolysates and glycerol, more preferably glycerol, and
   - compounds selected from the group consisting of triols (preferably triethanolamine), tetrols, pentols and hexols, wherein the compounds are not carbohydrates, not sugar alcohols, and not alkylamines,
   preferably glycerol.

Preferred is a process of the present invention (preferably a process as defined herein as being preferred), wherein the binder as components at least comprises
(b1) one, two or more polymers comprising multiple carboxyl groups, selected from the group consisting of polymers of one or more unsaturated carboxylic acid, preferably acrylic acid, and mixtures thereof, preferably copolymers of acrylic acid and more preferably copolymers of acrylic acid and maleic anhydride and/or maleic acid,
   and
(b2) for crosslinking said polymers via esterification, one, two or more polymer or monomer compounds having two or more hydroxy groups, wherein at least glycerol is present, wherein the ratio of the total mass of said polymers of component (b1) to the total mass of glycerol present is in the range of from 80:20 to 50:50.

As a non-limiting example, a binder according to this preferred aspect of the present invention comprises a copolymer of acrylic acid and maleic anhydride as component b1) and glycerol as component b2), wherein the mass ratio of the copolymers of acrylic acid and maleic anhydride to glycerol is 70:30 or 60:40, or is ≥ 60:40 and ≤ 70:30, respectively.

More preferably the binder comprises as an additional binder component, preferably for hardening the binder via esterification, component b4) as defined above, wherein even more preferably the total amount of said additional binder component b4) is 30 mass-% or lower, more preferably is in the range of from 5 mass-% to 30 mass-%, relative to the combined total masses of binder components b1), b2) and component b4).

As a non-limiting example, a binder according to this preferred aspect of the present invention comprises a copolymer of acrylic acid and maleic anhydride as component b1), glycerol as component b2) and lactic acid as component b4), wherein the mass ratio of the copolymer of acrylic acid and maleic anhydride to glycerol to lactic acid is 50:25:25.

Preferred is a process of the present invention (preferably a process as defined herein as being preferred), wherein
- the binder in step S1) of the process comprises water and has a pH in the range of from 1.0 to 3.5, preferably in the range of from 1.0 to 3.0, more preferably of from 1.0 to 2.5,
   and/or (preferably "and")
- an aqueous extract prepared according to the extraction process defined in the description (see below) from the mixture prepared or provided in step S1) of the process has a pH in the range of from 1.0 to 6.0, preferably in the range of from 2.0 to 5.0, more preferably of from 2.5 to 4.5.

According to this preferred aspect of the present invention, the pH of the binder is adjusted to be in the range of from 1.0 to 3.5, preferably in the range of from 1.0 to 3.0, more preferably of from 1.0 to 2.5. It has been found that a binder in step S1) of the process, which has a pH in the range or preferred ranges provided here before, contributes to a reduced amount of formaldehyde emissions during and/or after the production of a multilayer or single-layer lignocellulosic composite. It has also been found that the resulting lignocellulosic composites feature better mechanical properties, when the binder used in step S1) of the process has a pH in the range or preferred ranges provided here before.

Insofar, it is preferred that for preparing or providing said binder in step S1) binder components for hardening via esterification - where necessary - are mixed with a basic or acidic compound, preferably sodium hydroxide or sulfuric acid, in order to adjust the pH. In another preferred embodiment, partially neutralized polymers comprising multiple carboxyl groups are used as starting material for adjusting the pH of the binder as stated above. By adjusting the pH of the binder, the molar ratio of COOH groups to COO⁻ groups (in particular in the components present for hardening the binder via esterification) is influenced in the usual manner. In yet another preferred embodiment the ratio of the binder components b1) to b2) to b3) (and if present b4)) are selectively chosen for adjusting the pH of the binder as stated above. The person skilled in the art is capable of calculating and/or measuring the pH value of the binder by means known in the art, e.g. by utilization of tabulated pH values or standard pH meters.

According to yet another preferred aspect of the present invention, the aqueous extract prepared according to the extraction process defined in the description (see below under item 1.10) from the mixture prepared or provided in step S1) of the process, i.e. from the mixture comprising lignocellulosic particles and a binder, has a pH in the range of from 1.0 to 6.0, preferably in the range of from 2.0 to 5.0, more preferably of from 2.5 to 4.5. It has been found that an adjustment of the mixture prepared or provided in S1) in such a way, that a pH of said aqueous extract in the range or preferred ranges provided here before also positively reduces the formaldehyde emissions during and/or after the production of a multilayer or single-layer lignocellulosic composite and contributes to better mechanical properties of the resulting lignocellulosic composites. Accordingly, the present invention takes into account that not only the pH of the binder alone, but also the pH of the mixture comprising lignocellulosic particles and a binder (which of course can only be measured from an aqueous extract of that mixture) is decisive for the properties/behavior during and/or after applying a high-frequency electrical field to the mixture, so that the binder hardens via esterification and binds the lignocellulosic particles, so that a single-layer lignocellulosic composite or a layer of a multilayer lignocellulosic composite results. Again the person skilled in the art is capable of adjusting, calculating and/or measuring the pH value of the aqueous extract by means described herein before and by means known in the art, e.g. by utilization of tabulated pH values or standard pH meters. The influence on the pH of the respective type of lignocellulosic particles used, e.g. birch chips or hemp fibres, can be assessed upon simple experiments.

It is particularly preferred that both, the binder in step S1) of the process and the aqueous extract prepared according to the extraction process defined in the description (see below) from the mixture prepared or provided in step S1) of the process, have a pH in the range or preferred ranges provided here before.

Preferred is a process of the present invention (preferably a process as defined herein as being preferred), wherein component b3) of the binder (i.e., urea) is present in a total amount in the range of from ≥ 5 to ≤ 50 mass-%, preferably of from ≥ 10 to ≤ 35 mass-% and more preferably of from ≥ 15 to ≤ 35 mass-%, relative to the combined total masses of components b1), b2) and any present component b4) of the binder.

According to this preferred aspect of the present invention, the total amount of binder component b3), urea, relative to the combined total masses of components b1), b2) and any present component b4) of the binder, i.e. all binder components present for hardening via esterification, is in the range or preferred ranges defined here before. It has firstly been found by thorough investigation in the form of experimental series utilizing different amounts/ratios of urea that these (relatively low) preferred amounts of urea are sufficient to significantly reduce the emission of formaldehyde from the lignocellulosic particles in a process according to the invention. Furthermore, and secondly, the herein provided range or preferred ranges of the total amount of urea relative to the combined total masses of components b1), b2) and any present component b4) of the binder have surprisingly been found to have a positive effect on the mechanical properties of the resulting lignocellulosic composites. In particular, the swelling in thickness after 24 h ("24 h swelling"), the transverse tensile strength ("internal bond strength") and the surface and edge screw holding of the lignocellulosic composites (boards) produced in a process according to the present invention could be improved significantly.

Preferred is a process of the present invention (preferably a process as defined herein as being preferred), wherein in the mixture provided or prepared in step S1) of the process, component b3) of the binder (i.e., urea) is present in a total amount in the range of from ≥ 0.25 to ≤ 2.5 mass-%, preferably of from ≥ 0.5 to ≤ 1.75 mass-% and more preferably of from ≥ 0.75 to ≤ 1.75 mass-%, relative to the total mass of the lignocellulosic particles in an oven-dry state of the mixture.

According to this preferred aspect of the present invention, in the mixture provided or prepared in step S1) of the process the total amount of binder component b3), urea, relative to the total mass of the lignocellulosic particles in an oven-dry state of the mixture is in the range or preferred ranges provided here before. Again, it has been found by thorough investigation in the form of experimental series utilizing different amounts/ratios of urea that these (relatively low) preferred amounts of urea are sufficient to reduce the emission of formaldehyde from the lignocellulosic particles in a process according to the invention. Furthermore, the herein provided range or preferred ranges of the total amount of urea in the mixture provided or prepared in step S1) of the process relative to the total mass of the lignocellulosic particles in an oven-dry state of the mixture have surprisingly been found to have a positive effect on the mechanical properties of the resulting lignocellulosic composites. In particular, the swelling in thickness after 24 h ("24 h swelling"), the transverse tensile strength ("internal bond strength") and the surface and edge screw holding of the lignocellulosic composites (boards) produced in a process according to the present invention could be improved significantly.

Preferred is a process of the present invention (preferably a process as defined herein as being preferred), wherein in the mixture provided or prepared in step S1) of the process, the total combined amounts of component b1), b2) and any present component b4) is in the range of from 3 to 8 mass-%, preferably of from 3.5 to 7.5 mass-%, and more preferably of from 4 to 6.5 mass-%, relative to the total mass of the lignocellulosic particles in an oven-dry state of the mixture.

According to this preferred aspect of the present invention, the mixture provided or prepared in step S1) comprises a relatively low amount of binder components present for hardening via esterification, i.e. components b1), b2) and any present component b4), in relation to the amount of the lignocellulosic particles. More particularly, the ratio of the weight of the solid content of all binder components present for hardening via esterification to the weight of the lignocellulosic particles in an oven-dry state is below 8 %, preferably below 7.5 % and more preferably below 6.5 %. The relatively low preferred amounts of the solid content of all binder components present for hardening via esterification is advantageous as it leads to sustainable processes and/or sustainable products, i.e. multilayer lignocellulosic composite comprising two, three or more, preferably three, lignocellulosic composite layers or a single-layer lignocellulosic composite.

Surprisingly, in the process of the present invention a relatively low amount of binder suffices to bind a large amount of lignocellulosic particles, as in step S3) of the process a high-frequency electrical field is applied which allows for an efficient hardening of the mixture also in the center of the compacted mixture, in contrast to other hardening treatments (e.g. the use of a hot press as disclosed in US 2011/0171473 A1 and many other prior art documents). In other words, the binder is used more efficiently in the process of the present invention.

Specifically, the process of the present invention allows for the production of a multilayer lignocellulosic composite comprising two, three or more lignocellulosic composite layers and for the production of a single-layer lignocellulosic composite having favorable physical and mechanical properties, without any need for the presence of
(i) a co-binder selected from the group consisting of (a1) formaldehyde resins and (a2) an organic isocyanate having at least two isocyanate groups, in the core layer of a multilayer lignocellulosic composite or the single layer of a single-layer lignocellulosic composite,
   or
(ii) a co-binder selected from the group consisting of (a1) formaldehyde resins and (a2) an organic isocyanate having at least two isocyanate groups, in a multilayer or single-layer lignocellulosic composite,
   or
(iii) a co-binder comprising either (a1) formaldehyde resins or (a2) an organic isocyanate, as respectively defined in claim 1 of US 2011/0171473 A1, in a multilayer or single-layer lignocellulosic composite.

As explained above, in a preferred process of the present invention A1) the mixture provided or prepared in step S1) does not comprise a co-binder as defined under items (i), (ii), and/or (iii) and/or A2) the resulting lignocellulosic composite does not comprise a completely or partially hardened co-binder as defined under items (i), (ii), and/or (iii).

Preferred is a process of the present invention (preferably a process as defined herein as being preferred), wherein the mixture prepared or provided in step S1) of the process comprises, as additional constituent or constituents, one or more hydrophobizing agents selected from the group consisting of paraffin and mixtures comprising paraffin, preferably paraffin emulsions. Such additional constituents are typically not constituents of a binder used for preparing the mixture in step S1) of the process of the invention. Thus, the pH of the binder (as discussed above) is typically not influenced by such additional constituents.

In particular, the addition of hydrophobizing agents, preferably paraffin and mixtures comprising paraffin, more preferably paraffin emulsions, to the mixture improves the internal bond strength and/or the thickness swelling after 24 hours in water at 20 °C of a resulting lignocellulosic composite or a layer of a lignocellulosic composite.

Even more preferred is a process of the present invention, wherein the ratio of the total mass of paraffin to the total mass of the lignocellulosic particles in an oven-dry state in the mixture is in the range of from 0.2 % to 1.5 %. It is also preferred that the ratio of the total mass of paraffin to the total mass of all present binder components b1) to b4) in the mixture is in the range of from 2 % to 40 %, preferably in the range of from 5 % to 30 % and more preferably in the range of from 7.5 % to 20 %.

Preferred is a process of the present invention (preferably a process as defined herein as being preferred), wherein the mixture prepared or provided in step S1) of the process comprises one, two or more additional constituents selected from the group consisting of:
- water,
- alkali salts and alkaline earth salts, preferably sodium nitrate,
- dyes, pigments,
- antifungal agents and antibacterial agents;
- rheology modifiers, fillers
- release agents and
- surfactants, tensides.

Preferred is a process of the present invention (preferably a process as defined herein as being preferred), wherein the lignocellulosic composite is a lignocellulosic board selected from the group consisting of high-density fiberboard (HDF), medium-density fiberboard (MDF), low-density fiberboard (LDF), wood fiber insulation board, oriented strand board (OSB), chipboard, and natural fiber board, preferably with fibers from the group consisting of sisal, jute, flax, coconut, kenaf, hemp, banana, and mixtures thereof.

According to this preferred aspect of the present invention, the lignocellulosic composite produced in a process of the present invention - i.e. the lignocellulosic composite obtained after step S1) of providing or preparing a mixture at least comprising lignocellulosic particles and a binder, step S2) of compacting the mixture, and step S3) of applying a high-frequency electrical field to the mixture during and/or after compacting, so that the binder hardens via esterification and binds the lignocellulosic particles - is a board as listed above. Thus, any type of lignocellulosic particles such as fibers, chips, strands, flakes, sawmill shavings and saw dust or mixtures thereof as well as any type of lignocellulosic biomass such as birch, beech, alder, pine, spruce, larch, eucalyptus, linden, poplar, ash, fir, tropical wood, sisal, jute, flax, coconut, kenaf, hemp, banana, straw, cotton stalks, bamboo and the like or mixtures thereof can be used as a source for the production of said boards listed above.

In a preferred aspect of the present invention, the lignocellulosic board is a single-layer lignocellulosic board, more preferably a single-layer lignocellulosic fiberboard with a thickness in the range of from 1 to 15 mm, preferably of from 2 to 12 mm, more preferably of from 2 to 4 mm. According to this preferred aspect of the present invention, only one mixture at least comprising lignocellulosic particles and a binder is provided or prepared in step S1). Said mixture is then compacted in step S2) and subjected to a high-frequency electrical field during and/or after compacting, so that the binder hardens via esterification and binds the lignocellulosic particles, so that a single-layer lignocellulosic composite results (step S3)). It has been found that the combination of a binder system according to the present invention (preferably a binder as defined herein as being preferred) and process step S3) lead to the formation of high quality boards with low formaldehyde emission and improved mechanical properties. In particular, the swelling in thickness after 24 h ("24 h swelling"), the transverse tensile strength ("internal bond strength") and the surface and edge screw holding of the single-layer lignocellulosic composites (boards) produced in a process according to the present invention could be improved significantly.

In another preferred aspect of the present invention, the lignocellulosic board is a multilayer lignocellulosic board. The multilayer lignocellulosic board is more preferably a multilayer lignocellulosic board having a core layer and having an upper surface layer and a lower surface layer, preferably consisting of said core layer and said upper surface layer and lower surface layer, and even more preferably a multilayer lignocellulosic chipboard having a core layer and having an upper surface layer and a lower surface layer, with a total thickness in the range of from 14 to 25 mm.

It is particularly preferred that the multilayer lignocellulosic board is a three-layer board consisting of a core layer and an upper surface layer and a lower surface layer. Even more preferred the multilayer lignocellulosic board is a three-layer board, wherein all three layers, i.e. the core layer and the upper surface layer and the lower surface layer, result from process steps S1), S2) and S3). Accordingly, all layers of the three-layer board are provided or prepared from mixtures comprising lignocellulosic particles and a binder comprising as components at least b1) one, two or more polymers comprising multiple carboxyl groups, b2) for crosslinking said polymers via esterification, one, two or more polymer or monomer compounds having two or more hydroxy groups and b3) urea.

It has been found that the combination of a binder system according to the present invention (preferably a binder as defined herein as being preferred) and process step S3) of applying a high-frequency electrical field lead to the formation of high quality boards with low formaldehyde emission and improved mechanical properties. In particular, the swelling in thickness after 24 h ("24 h swelling"), the transverse tensile strength ("internal bond strength") and the surface and edge screw holding of the multi-layer lignocellulosic composites (boards), preferably those three-layer boards described above, produced in a process according to the present invention could be improved significantly.

Correspondingly, the process according to the present invention is very flexible and can be used for the production of multilayer lignocellulosic composites comprising one or more lignocellulosic composite layers or a single-layer lignocellulosic composite.

In another preferred aspect of the present invention, the lignocellulosic composite is a board having a core, wherein in a cross section oriented perpendicularly to the plane of the board the difference between density maximum of the board and density minimum in the core of the board is at most 100 kg/m³, preferably is at most 80 kg/m³, and more preferably is at most 60 kg/m³. Thus, from the perspective of the skilled person the density distribution within the board is almost homogeneous, which is considered to be an advantage over boards having a (heterogeneous) large difference of more than 100 kg/m³ between the density maximum of the board and the density minimum in the core of the board. A density difference below 100 kg/m³, preferably below 80 kg/m³, and more preferably below 60 kg/m³, in above described preferred boards has several advantages, such as consistent and reliable mechanical properties in every cross section of the board.

In the process of the present invention, step S3) of applying a high-frequency electrical field to the mixture during and/or after compacting, so that the binder hardens via esterification and binds the lignocellulosic particles, so that a lignocellulosic composite or a layer of a lignocellulosic composite results, is relevant for achieving the homogeneous density distribution characterized by a difference of at most 100 kg/m³ between the density maximum of the board and the density minimum in the core of the board. The advantageous property is attributed to a fast and even heating between the surfaces (and including the core) when using a high-frequency electrical field. In contrast to that, a conventional hot press process results in a slow heat transfer from surface to core and consequently leads to boards having large density differences between the core layer or section and the outer layers or sections.

In another preferred aspect of the present invention, in step S3) of applying a high-frequency electrical field, the temperature at the center of said mixture is increased to a maximum temperature in the range of from 130 °C to 200 °C, preferably in the range of from 140 °C to 180 °C, wherein preferably the maximum temperature is reached in less than 40 s ·(d/mm) after the start of applying a high-frequency electrical field, where d is the thickness of the compacted mixture in mm at the end of step S3).

When according to said preferred aspect the temperature at the center of said mixture is increased to a maximum temperature in the range of from 130 °C to 200 °C, preferably in the range of from 140 °C to 180 °C, the maximum temperature is preferably reached in less than 40 s ·(d/mm), more preferably in less than 30 s ·(d/mm), even more preferably in less than 20 s ·(d/mm), most preferably in less than 15 s ·(d/mm) after the start of applying a high-frequency electrical field, where d is the thickness of the compacted mixture in mm at the end of step S3). E.g., if the thickness d of the compacted mixture in mm at the end of step S3) is 10 mm, the maximum temperature is preferably reached in less than 400 s, more preferably in less than 300 s, even more preferably in less than 200 s, most preferably in less than 150 s after the start of applying a high-frequency electrical field.

Preferably, the temperature at the center of said mixture in accordance with said aspect is increased to a maximum temperature in the range of from 130 °C to 200 °C, more preferably in the range of from 140 °C to 180 °C and most preferably in the range of from 150 °C to 170 °C, wherein the temperature increase is controlled, preferably automatically controlled, and preferably is also controlled so that said binder hardens via esterification and binds the lignocellulosic particles.

Preferably, in a preferred process of the present invention the temperature at the center of said mixture is monitored and/or controlled, preferably controlled, in step S3) of applying a high-frequency electrical field. It is particularly preferred to control the temperature at the center of said mixture, so that the binder hardens via esterification of said compounds and binds the lignocellulosic particles in a controlled manner. The temperature, which is preferably monitored and/or controlled, more preferably controlled, is preferably adjusted to allow the binder to harden via esterification in a controlled manner. The monitored and/or controlled, preferably controlled, temperature at the center of said mixture is preferably adjusted to be in a range of from 110 °C to 220 °C, more preferably in a range of from 130 °C to 200 °C, even more preferably in a range of from 140 °C to 180 °C and most preferably in a range of from 150 °C to 170 °C.

The term "center of (said) mixture" as used in this text designates the location which is approximately in the middle between the surfaces of the three-dimensional object defined by said mixture in step c) of the process of the present invention.

The above described preferred processes of the present invention which relate to the temperature at the center of said mixture allow for a fast and/or effective production of a multi-layer lignocellulosic composite comprising two, three or more, preferably three or more, lignocellulosic composite layers or a single-layer lignocellulosic composite.

In another preferred aspect of the present invention, at least steps S2) and S3), more preferably steps S1), S2) and S3), are semi-continuous or continuous process steps, wherein preferably step S3) is conducted in a dielectric heating and pressing unit, and wherein most preferably the process of producing a multilayer lignocellulosic composite comprising two, three or more lignocellulosic composite layers or a single-layer lignocellulosic composite is a semi-continuous or continuous process.

According to this preferred aspect, the production of a lignocellulosic composite is carried out semi-continuously or continuously. This production method allows for a fast and effective production in an industrial scale. Furthermore, the utilization of a dielectric heating and pressing unit in step S3) of applying a high-frequency electrical field to the mixture during and/or after compacting, so that the binder hardens via esterification and binds the lignocellulosic particles, so that a single-layer lignocellulosic composite or a layer of a multilayer lignocellulosic composite results, allows for a very effective hardening of the binder via esterification.

Preferred is a process of the present invention (preferably a process as defined herein as being preferred), wherein the process of producing a multilayer lignocellulosic composite comprising two, three or more lignocellulosic composite layers or a single-layer lignocellulosic composite comprises one, two, three, more than three, or all of the following steps, which are preferably conducted semi-continuously or continuously:
- in step S1) for preparing said mixture blending said lignocellulosic particles with one or more or all components of the binder or spraying one or more or all components of the binder onto said lignocellulosic particles, wherein before blending or spraying said components of the binder are pre-mixed or not pre-mixed,
- preparing, preferably preparing by scattering, a layer of the mixture provided or prepared in step S1), and in step S2) compacting this layer,
- for preparing a multilayer lignocellulosic composite comprising more than one lignocellulosic composite layer, providing or preparing at least a first and a second individual mixture, and using said first and second individual mixtures for making a first and a second layer of the multilayer lignocellulosic composite, wherein the first and the second layer preferably are in contact with each other, and/or wherein the first and the second individual mixture have the same or a different composition,
- for preparing a multilayer lignocellulosic composite comprising more than one lignocellulosic composite layer, preparing two or more layers, preferably preparing two or more layers by scattering individual layers on top of each other, each layer comprising lignocellulosic particles and a binder, wherein in the two or more layers the lignocellulosic particles and/or the binders are the same or different,
- in step S2) compacting the mixture in two stages, wherein in the first stage the mixture is pre-compacted to give a pre-compacted mat, and wherein in the second stage this pre-compacted mat is further compacted,
- during or after compacting in step S2), hot pressing the mixture,
- during or after applying a high-frequency electrical field in step S3), hot pressing the mixture,
   and
- applying in step S3) a high-frequency electrical field monitoring and/or controlling the temperature at the center of said mixture.

According to these preferred aspects the process of producing a lignocellulosic composite comprises one, two, three or more preferred steps, which are either specific embodiments of steps S1), S2), or S3), respectively, or are additional steps. Each of these preferred steps is optional and can be conducted individually or in combination with one or more of the other preferred steps.

One of the preferred steps relates to step S1) of preparing said mixture consisting of said lignocellulosic particles and said binder. According to this preferred aspect, the lignocellulosic particles are blended with one or more or all ingredients of the binder or one or more or all ingredients of the binder are sprayed onto said lignocellulosic particles. Specifically, ingredients of the binder are blended with or sprayed onto the lignocellulosic particles simultaneously (e.g. in a mixture with each other) or successively, preferably successively. A sequential addition of ingredients of the binder is conducted in any order and in any combination of the respective binder ingredients. Specific ingredients of the binder are pre-mixed or not pre-mixed, preferably two or more of the ingredients of the binder are pre-mixed, before blending with or spraying onto said lignocellulosic particles in said step S1). More preferably, all binder components for hardening the binder via esterification, i.e. components b1), b2) and b4), are premixed. According to this preferred aspect the skilled person selects (i) a desired sequence for the addition of binder ingredients (simultaneously or successively), preferably successively, (ii) a desired method for mixing ingredients of the binder, such as blending or spraying, preferably spraying, and the skilled person (iii) provides or prepares one, two or more pre-mixtures with any kind of combination of specific binder ingredients.

Another preferred step of the present invention is the step of preparing, preferably preparing by scattering, a layer of the mixture provided or prepared in step S1), and in step S2) compacting this layer. The preparation of a layer by scattering is a preferred additional step for the production of a lignocellulosic composite.

According to a preferred aspect of the present invention, for preparing a multilayer lignocellulosic composite, at least a first and a second individual mixture, preferably two individual mixtures are provided or prepared. Said first and second individual mixtures are then used for making a first and a second layer of the multilayer lignocellulosic composite. Preferably, the first and the second layer are in contact with each other. According to this preferred aspect, the first and the second individual mixture have the same or a different composition, even more preferably the first and the second individual mixture have a different composition. Thus, the different individual mixtures and/or layers of the prepared multilayer lignocellulosic composite preferably differ in specific properties such as density, color, and the like and/or they differ in terms of their composition, wherein differing compositions are obtained by using different binders, lignocellulosic particles and/or other (additional) components such as plastics, fabrics, paint coat or the like, for example derived from foreign matter in waste wood. Individual layers preferably (i) comprise different binders and different lignocellulosic particles or (ii) comprise identical binders, but different lignocellulosic particles or (iii) comprise identical binders and identical lignocellulosic particles, but in different ratios.

According to another preferred aspect of the present invention, for preparing a three-layer lignocellulosic composite, a first and a second individual mixture, M1 and M2 respectively, are provided or prepared, preferably both mixtures M1 and M2 are provided or prepared in accordance with step S1) of the present invention. Said first individual mixture M1 is then used for making a first surface layer (lower surface layer; S) of the three-layer lignocellulosic composite. Said second individual mixture M2 is then used for making the core layer (C) of the three-layer lignocellulosic composite, wherein the lower surface layer (S) and the core layer (C) are in contact with each other. Said first individual mixture M1 is then used (again) for making a second surface layer (upper surface layer; S) of the three-layer lignocellulosic composite, wherein the upper surface layer (S) and the core layer (C) are in contact with each other. The resulting three-layer lignocellulosic composite thus consists of two surface layers (2x S) and a core layer (C), wherein the surface layers (S) are derived from a first individual mixture M1 and wherein the core layer (C) is derived from a second individual mixture M2.

According to a technically related preferred process of the present invention the preparation of a multilayer lignocellulosic composite comprises the preparation of two, three or more layers, preferably three layers, each layer comprising lignocellulosic particles and a binder. Preferably, the lignocellulosic particles and/or the binders in said two, three or more layers preferably three layers, are the same or different, even more preferably the lignocellulosic particles are different and the binders are different.

Preferably, in step S2) of compacting the mixture provided or prepared in step S1), the compacting of the mixture is conducted in two stages. This means, that in a first stage the mixture is pre-compacted to give a pre-compacted mat, and in a second stage this pre-compacted mat is further compacted. Preferably, the first stage of pre-compacting the mixture to give a pre-compacted mat is carried out before step S3) of applying a high-frequency electrical field. The second stage of further compacting the pre-compacted mat is preferably carried out during step S3) of applying a high-frequency electrical field. This two-stage compacting allows for a flexible process for the production of a lignocellulosic composite or a layer of a lignocellulosic composite.

In a preferred process of the present invention the preparation of a single-layer lignocellulosic composite or a multilayer lignocellulosic composite comprises the following steps:
- providing or preparing one, two or more than two mixtures at least comprising lignocellulosic particles and a binder according to the invention,
- scattering this mixture/these mixtures to give one, two or more than two layers, wherein the layer(s) form a mat,
- in a first compacting step pre-compacting this single-layer or multilayer mat to give a pre-compacted mat, and thereafter
- in a second compacting step compacting the pre-compacted mat while applying a high-frequency electrical field.

Preferably, the pre-compacted (single-layer or multilayer) mat obtained in the first compacting step is pre-heated (i) with vapor, preferably with water vapor, and/or (ii) by applying microwave radiation and/or (iii) by applying a high-frequency electrical field before the second compacting step.

In the second compacting step the binder present in the mat is hardened, partially or completely.

Hot pressing the mixture during or after compacting in step S2), and/or during or after, more preferably during, applying a high-frequency electrical field in step S3), is another process step that in specific cases is preferred in the process of the present invention.

According to the present invention hot pressing is a process step, in which an optionally pre-compacted mat is in contact with heated press surfaces which have temperatures in the range of from 80 to 300 °C. When hot pressing is conducted after applying a high-frequency electrical field in step S3) the heated press surfaces preferably have temperatures from 80 to 300 °C, more preferably from 120 to 280 °C, most preferably from 150 to 250 °C. When hot pressing is conducted during applying a high-frequency electrical field in step S3) the heated press surfaces preferably have temperatures in the range of from 80 to 200°C, more preferably from 90 to 180 °C, most preferably from 100 to 150 °C.

In accordance with the primary object of the invention as stated above, the present invention also relates to a binder composition for producing a lignocellulosic composite, preferably in a process of the present invention as defined herein and in the claims as attached, comprising as components at least b1) one, two or more polymers comprising multiple carboxyl groups, b2) one, two or more polymer or monomer compounds having two or more hydroxy groups, and b3) urea,
wherein preferably the one or at least one of the two or more polymer or monomer compounds having two or more hydroxy groups of component b2) is selected from the group consisting of
▪ carbohydrates, preferably selected from the group consisting of monosaccharides, disaccharides, oligosaccharides, polysaccharides and starch, more preferably selected from the group consisting of dextrose, fructose, saccharose, non-hydrolyzed starch, hydrolyzed starch and partially hydrolyzed starch, the latter preferably comprising maltodextrin and/or corn sirup, more preferably selected from the group consisting of maltodextrin and corn sirup;
▪ glycerol, polyvinylalcohol and sugar alcohols, the latter preferably selected from the group consisting of mannitol, sorbitol, xylitol, lactitol, isomalt, maltitol, erythritol and hydrogenated starch hydrolysates; wherein more preferably the one or at least one of the two or more polymer or monomer compounds having two or more hydroxy groups of component b2) is glycerol;
   and preferably
▪ compounds selected from the group consisting of triols, preferably triethanolamine; tetrols, pentols and hexols, wherein the selected compounds are not carbohydrates, not sugar alcohols, and not alkylamines.

Generally, all aspects of the present invention discussed herein in the context of the process of producing a lignocellulosic composite according to the present invention and/or in the context of the lignocellulosic composite of the present invention apply *mutatis mutandis* to the binder of the present invention, as defined herein. And *vice versa,* all aspects of the present invention discussed herein in the context of the binder of the present invention apply mutatis mutandis to the process of producing a lignocellulosic composite according to the present invention and/or to the lignocellulosic composite of the present invention. Etc.

It is particularly preferred that at least one of the two or more polymer or monomer compounds having two or more hydroxy groups of component b2) is one of the biobased compounds dextrose, fructose, maltodextrin or glycerol.

Furthermore, the present invention relates to a binder composition for producing a lignocellulosic composite, preferably in a process as defined above, wherein the binder composition comprises water and has a pH in the range of from 1.0 to 3.5, preferably in the range of from 1.0 to 3.0, more preferably of from 1.0 to 2.5.

Furthermore, the present invention relates to a binder composition for producing a lignocellulosic composite, preferably in a process as defined above, wherein the binder composition comprises as an additional binder component: b4) one or more non-polymeric, preferably non-polymeric biobased, compounds having two or more carboxyl groups and/or one or more non-polymeric, preferably non-polymeric biobased, compounds having at least one carboxyl group and at least one hydroxy group, as defined above.

It is particularly preferred that said one non-polymeric, preferably non-polymeric biobased, compound having two or more carboxyl groups or at least one of the more than one non-polymeric, preferably non-polymeric biobased, compounds having two or more carboxyl groups is selected from the group consisting of hydroxy carboxylic acids, preferably is selected from the group consisting of alpha-hydroxy carboxylic acids, more preferably is selected from the group consisting of citric acid, malic acid and tartaric acid, and most preferably is citric acid. Two or more of said preferred or particularly preferred compounds can be used in combination with each other.

It is particularly preferred that said one non-polymeric, preferably non-polymeric biobased, compound having at least one carboxyl group and at least one hydroxy group or at least one of the more than one non-polymeric, preferably non-polymeric biobased, compounds having at least one carboxyl group and at least one hydroxy group is selected from the group consisting of monohydroxy-monocarboxylic acids, preferably is selected from the group consisting of alpha-hydroxy monohydroxy-monocarboxylic acids, more preferably is selected from the group consisting of lactic acid, glycolic acid, and mandelic acid, and most preferably is lactic acid. Two or more of said preferred or particularly preferred compounds can be used in combination with each other.

Said non-polymeric, preferably non-polymeric biobased, compounds having two or more carboxyl groups (COOH) and/or having at least one carboxyl group (COOH) and at least one hydroxy group (OH) can undergo esterification reactions with binder components b1) and/or b2) and thus also facilitate hardening of the binder via esterification.

Furthermore, the present invention pertains to a binder composition for producing a lignocellulosic composite, preferably in a process as defined above, wherein component b3) of the binder (i.e., urea) is present in a total amount in the range of from ≥ 5 to ≤ 50 mass-%, preferably of from ≥ 10 to ≤ 35 mass-% and more preferably of from ≥ 15 to ≤ 35 mass-%, relative to the combined total masses of components b1), b2) and any present component b4) of the binder.

According to this preferred aspect of the present invention, the total amount of binder component b3), urea, relative to the combined total masses of components b1), b2) and any present component b4) of the binder, i.e. all binder components present for hardening via esterification, is in the range or preferred ranges defined here before. It has been found by thorough investigation in the form of experimental series utilizing different amounts/ratios of urea that these (relatively low) preferred amounts of urea are sufficient to reduce the emission of formaldehyde in a process according to the invention. Furthermore, the herein provided range or preferred ranges of the total amount of urea relative to the combined total masses of components b1), b2) and any present component b4) of the binder have surprisingly been found to have a positive effect on the mechanical properties of the resulting lignocellulosic composites. In particular, the swelling in thickness after 24 h ("24 h swelling"), the transverse tensile strength ("internal bond strength") and the surface and edge screw holding of the lignocellulosic composites (boards) produced in a process according to the present invention could be improved significantly.

The present invention also relates to a single-layer or multilayer lignocellulosic composite, obtainable or obtained according to a process of the present invention (preferably a process of the invention as defined above or in the attached claims as being preferred), and to a construction product (for a definition see below) comprising such single-layer or multilayer lignocellulosic composite.

Generally, all aspects of the present invention discussed herein in the context of the process of producing a lignocellulosic composite according to the present invention and/or all aspects of the present invention discussed herein in the context of the binder according the present invention apply *mutatis mutandis* to the single-layer or multilayer lignocellulosic composite of the present invention, as defined here above and below. And *vice versa,* all aspects of the present invention discussed herein in the context of the single-layer or multilayer lignocellulosic composite of the present invention apply *mutatis mutandis* to the process of producing a lignocellulosic composite according to the present invention and/or to the binder according the present invention.

Preferred are a single-layer or multilayer lignocellulosic composite of the present invention, preparable according to a process of the present invention (preferably as defined herein as being preferred), and a (construction) product comprising or being such a single-layer or multilayer lignocellulosic composite, wherein the lignocellulosic composite is a lignocellulosic board.

Preferably, said lignocellulosic board is a lignocellulosic board having a core, wherein in a cross section oriented perpendicularly to the plane of the board the difference between density maximum of the board and density minimum in the core of the board is at most 100 kg/m³; preferably is at most 80 kg/m³, and more preferably is at most 60 kg/m³.

Preferably, said lignocellulosic board is a lignocellulosic board selected from the group consisting of chipboard, high-density fiberboard (HDF), medium-density fiberboard (MDF) and oriented strand board (OSB).

Preferably, said lignocellulosic board is a lignocellulosic board which has a thickness in the range of from 1 to 30 mm, preferably in the range of from 2 to 25 mm.

Preferably, said lignocellulosic board is a single-layer lignocellulosic fiberboard with a thickness in the range of from 1 to 15 mm, preferably of from 2 to 12 mm, more preferably of from 2 to 4 mm.

Preferably, said lignocellulosic board is a multilayer lignocellulosic chipboard having a core layer and having an upper surface layer and a lower surface layer, i.e. a three-layer board, with a total thickness in the range of from 14 to 25 mm, wherein the multilayer lignocellulosic chipboard preferably consists of said core layer and said upper surface layer and lower surface layer.

Preferably, said lignocellulosic board is a lignocellulosic board which has an internal bond strength, determined according to DIN EN 319:1993-08, of at least 0.4 N/mm², preferably of at least 0.5 N/mm², more preferably of at least 0.6 N/mm².

Preferably, said lignocellulosic board is a lignocellulosic board which has a thickness swelling after 24 hours in water at 20 °C, determined according to DIN EN 317:1993-08, of less than 50 %, preferably less than 45 %, more preferably less than 40 %.

Preferably, said lignocellulosic board is a lignocellulosic board comprising one or more lignocellulosic composite layers, wherein preferably all lignocellulosic composite layers comprised by the lignocellulosic board are lignocellulosic composite layers obtainable or obtained according to a process of the present invention (preferably a process of the invention as defined above or in the attached claims as being preferred).

Preferably, said lignocellulosic board is a multilayer lignocellulosic board having a core layer and having an upper surface layer and a lower surface layer, i.e. a three-layer board, wherein at least the core layer comprises a mixture according to step S1), preferably all layers comprise a mixture according to step S1), wherein the multilayer lignocellulosic board preferably consists of said core layer and said upper surface layer and lower surface layer.

The present invention also relates to a kit for producing a binder composition according to the present invention, preferably for producing a binder composition as defined herein as being preferred, for use in the production of a lignocellulosic composite (preferably for producing a lignocellulosic composite in a process of the present invention), comprising as individual components at least:
b1) one, two or more polymers comprising multiple carboxyl groups, preferably as defined herein as being preferred,
b2) for crosslinking said polymers via esterification, one, two or more polymer or monomer compounds having two or more hydroxy groups, preferably as defined herein as being preferred,
   and
b3) urea,
and preferably further comprising as an additional binder component:
   b4) one or more non-polymeric, preferably non-polymeric biobased, compounds having two or more carboxyl groups and/or one or more non-polymeric, preferably non-polymeric biobased, compounds having at least one carboxyl group and at least one hydroxy group,
   wherein at least one, two or more individual component(s) of the individual components b1), b2), b3), and optionally b4) of the kit is/are spatially separated from the other individual components.

Preferably, a kit for producing a binder composition according to the present invention comprises two spatially separated substances or mixtures, respectively. E.g., said kit comprises a first spatially separated substance or mixture comprising individual components b1), b2) and b4) and a second spatially separated substance or mixture comprising individual component b3) or said kit comprises a first spatially separated substance or mixture comprising individual components b1) and b3) and a second spatially separated substance or mixture comprising individual components b2) and b4), etc.

Generally, all aspects of the present invention discussed herein in the context of the process of producing a lignocellulosic composite according to the present invention and/or all aspects of the present invention discussed herein in the context of the binder according the present invention and/or all aspects of the present invention discussed herein in the context of the single-layer or multilayer lignocellulosic composite of the present invention apply *mutatis mutandis* to the kit for producing a binder composition according to the present invention, as defined here above and below. And *vice versa,* all aspects of the present invention discussed herein in the context of the kit for producing a binder composition according to the present invention apply *mutatis mutandis* to the process of producing a lignocellulosic composite according to the present invention and/or to the binder according the present invention and/or to the single-layer or multilayer lignocellulosic composite of the present invention. Etc.

Preferably, said kit for producing a binder composition according to the present invention, comprises component b3) of the binder, urea, in a total amount in the range of from ≥ 5 to ≤ 50 mass-%, preferably of from ≥ 10 to ≤ 35 mass-% and more preferably of from ≥ 15 to ≤ 35 mass-%, relative to the combined total masses of components b1), b2) and any present component b4) of the kit.

Preferably, said kit for producing a binder composition according to the present invention, comprises an additional binder component b4) as defined above, wherein preferably the total amount of said additional binder component b4) is 30 mass-% or lower, more preferably is in the range of from 5 mass-% to 30 mass-%, relative to the combined total masses of binder components b1), b2) and component b4) in the kit.

Preferably, said kit for producing a binder composition according to the present invention, comprises binder components b1), b2), b3, and optionally b4), wherein said binder components b1), b2), b3, and optionally b4) comprise compounds selected from the preferred groups as defined above.

Preferably, said kit for producing a binder composition according to the present invention, comprises binder components b1), b2), b3, and optionally b4), and the total amounts (ratios) of the respective compounds of said components b1), b2), b3, and optionally b4) are in the ranges and preferred ranges as defined above.

Preferably, said kit for producing a binder composition according to the present invention, in one or more binder components b1), b2), b3), and b4) or in a spatially separate component additionally comprises one, two or more additional constituents selected from the group consisting of:
- water,
- hydrophobizing agents selected from the group consisting of paraffin and mixtures comprising paraffin, preferably paraffin emulsions,
- alkali salts and alkaline earth salts, preferably sodium nitrate,
- dyes, pigments,
- antifungal agents and antibacterial agents;
- rheology modifiers, fillers
- release agents and
- surfactants, tensides.

More preferably in a kit for producing a binder composition according to the present invention, said additional constituents from the list above are spatially separated from said components b1), b2), b3 and b4).

The present invention also relates to the use of a lignocellulosic composite of the present invention (as defined above or preparable according to a process of the present invention, preferably as defined herein as being preferred) as a building element in a construction product, preferably as a building element in furniture or parts of furniture, more preferably as a building element in a hollow construction in furniture or parts of furniture.

Generally, all aspects of the present invention discussed herein in the context of the process of producing a lignocellulosic composite according to the present invention and/or all aspects of the present invention discussed herein in the context of the binder according the present invention and/or all aspects of the present invention discussed herein in the context of the single-layer or multilayer lignocellulosic composite of the present invention and/or all aspects of the present invention in the context of the kit for producing a binder composition according to the present invention apply *mutatis mutandis* to the use of a lignocellulosic composite of the present invention, as defined here above and below. And *vice versa,* all aspects of the present invention discussed herein in the context of the use of a lignocellulosic composite of the present invention apply *mutatis mutandis* to the process of producing a lignocellulosic composite according to the present invention and/or to the lignocellulosic composite of the present invention and/or to the binder of the present invention and/or to the kit for producing a binder composition invention.

The term "construction product" as used in this text designates products used for constructions such as decking, doors, windows, floors, panels, furniture or parts of furniture. The construction product of the present invention is preferably selected from the group consisting of furniture and parts of furniture.

The term "furniture" as used in this text designates all kinds of furniture. In the context of the present invention, furniture is preferably selected from the group consisting of chairs, tables, desks, closets, beds and shelves.

The term "building element" as used in this text designates lignocellulosic composite products (e.g., boards, see above) which constitute a part (element) of a construction product (e.g., a part of furniture). Such building elements preferably are parts of furniture, and more preferably such parts of furniture are selected from the group consisting of shelves, table plates, side boards or shelves or doors of cabinets, and side walls of beds.

The term "hollow construction" as used in this text designates construction products, preferably furniture, and building elements, preferably parts of furniture, comprising an amount of enclosed empty space that is not filled with construction material. Such hollow constructions allow for the making of construction products, preferably furniture, and building elements, preferably parts of furniture, which are exceptionally light and strong, although a low amount (by weight) of construction material is used. Board-on-frame (BoF) products are typical examples for such hollow constructions. In a BoF product a frame made from lignocellulosic composite products (e.g. chipboards) is covered with lignocellulosic boards (e.g. thin high-density fiberboard). A further hollow construction is a board-on-stile (BoS) product, in which stripes of lignocellulosic composite products are used instead of a complete frame.

The present invention is explained in more detail below with reference to the attached schematic figures.
- **Fig. 1:**: Schematic structure of a single-layer lignocellulosic composite according to the invention.
- **Fig. 2:**: Schematic structure of a single-layer lignocellulosic composite according to the invention with two additional coating layers.
- **Fig. 3:**: Schematic structure of a multilayer lignocellulosic composite according to the invention in the form of a three-layered board.
- **Fig. 4:**: Schematic structure of a multilayer lignocellulosic composite according to the invention in the form of a three-layered board with two additional coating layers.

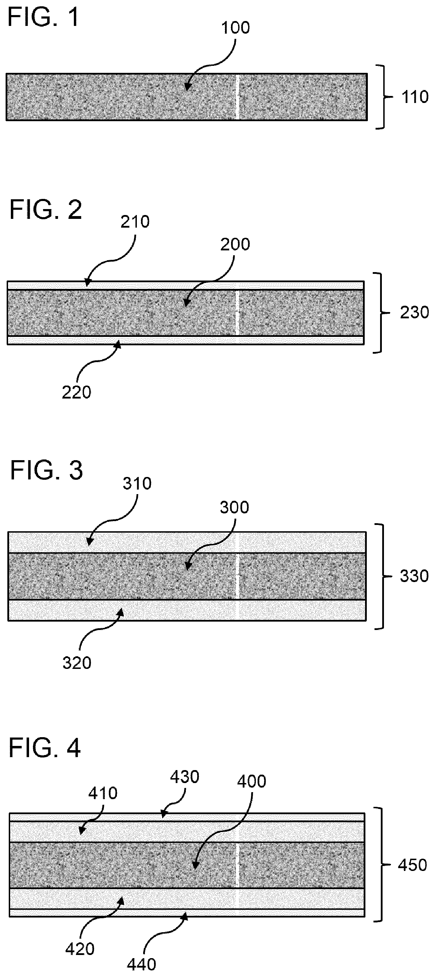

Figure 1 shows a single-layer lignocellulosic composite **110** according to the present invention. The single-layer lignocellulosic composite **110** consists of a single layer **100,** which contains lignocellulosic particles and a hardened binder.

**Figure 2** shows a coated single-layer lignocellulosic composite **230** according to the present invention. The single-layer lignocellulosic composite **230** comprises a single layer **200,** which contains lignocellulosic particles and a hardened binder. The single-layer lignocellulosic composite **230** additionally comprises two exterior (i.e., coating) layers **210** and **220** not comprising lignocellulosic particles. The upper exterior (coating) layer **210** is in contact with the upper outside (exterior) of the single layer **200.** The lower exterior (coating) layer **220** is in contact with the lower outside (exterior) of the single layer **200.**

**Figure 3** shows a multilayer lignocellulosic composite according to the invention in the form of a three-layered board **330.** The multilayer lignocellulosic composite **330** consists of three lignocellulosic composite layers **300, 310** and **320** (each of the three layers comprising a specific mixture at least comprising lignocellulosic particles and a binder). Lignocellulosic composite layer **300** is the core layer of the three-layered board, which is located in the geometric centre of the multilayer lignocellulosic composite, and correspondingly has no direct contact with the outside (exterior). Lignocellulosic composite layers **310** and **320** are the surface layers of the multilayer lignocellulosic composite, which are in direct contact with the outside (exterior), i.e. having an outer face. Accordingly, the lower surface layer **320** is in direct contact with the core layer **300** and constitutes a first outside (exterior). The core layer **300** is in direct contact with both surface layers **310** and **320,** and not in direct contact with the outside of the composite. The upper surface layer **310** is in direct contact with the core layer **300** and constitutes a second outside (exterior) of the composite. As depicted in **Figure 3****,** preferably both surface layers **310** and **320** of the three-layer lignocellulosic composite/board **330** have an identical composition and/or identical dimensions. In particular, preferably both surface layers **310** and **320** consist of the same composition and have an identical thickness.

**Figure 4** shows a multilayer lignocellulosic composite according to the invention in the form of a coated three-layered board **450.** The multilayer lignocellulosic composite **450** consists of three lignocellulosic composite layers **400, 410** and **420** (each of the three layers comprising a specific mixture at least comprising lignocellulosic particles and a binder). The multilayer lignocellulosic composite **450** additionally comprises two exterior (i.e., coating) layers **430** and **440** not comprising lignocellulosic particles. The upper exterior (coating) layer **430** is in contact with the outside (exterior) of the upper surface layer **410** and the lower exterior (coating) layer **440** is in contact with the outside (exterior) of the lower surface layer **420.** Lignocellulosic composite layer **400** is the core layer of the three-layered board, which is located in the geometric centre of the multilayer lignocellulosic composite, and correspondingly has no direct contact with the outside (exterior). Lignocellulosic composite layers **410** and **420** are the surface layers of the multilayer lignocellulosic composite, which are in direct contact with the outside (exterior), i.e. in direct contact with the coating layers **430** and **440** respectively. The lower surface layer **420** is in direct contact with the core layer **400** and the lower exterior (coating) layer **440.** The lower surface layer **420** constitutes a first outside (exterior). The core layer **400** is in direct contact with both surface layers **410** and **420,** and not in direct contact with the outside of the composite. The upper surface layer **410** is in direct contact with the core layer **400** and the upper exterior (coating) layer **430.** The upper surface layer **410** constitutes a second outside (exterior) of the composite. As depicted in **Figure 4****,** preferably both surface layers **410** and **420** of the three-layer lignocellulosic composite/board **450** have an identical composition and/or identical dimensions. In particular, preferably both surface layers **410** and **420** consist of the same composition and have an identical thickness.

### Examples:

The following examples according to the present invention are meant to further explain and illustrate the present invention without limiting its scope.

### 1. Measuring methods:

### 1.1 Determination of the weight average molecular weight M_{w} of polymers comprising multiple carboxyl groups:

The M_{w} of polymers comprising multiple carboxyl groups was determined by gel permeation chromatography under the following conditions:
- Apparatus: Modular GPC system with a combination of columns and refractive index detector (Agilent)
- Eluent: 0.01 mol/l Phosphate buffered saline, pH 7.4 + 0.01 mol/l sodium azide in demineralized water
- Sample preparation: The polymer was dissolved in the eluent on a shaking device at room temperature for 6 h to give a concentration of approximately 4 g/L. Samples are filtrated through Sartorius RC 0.2 µm filters prior to injection.
- Injection volume: 100 µl
- Columns: 2 x TSKgel GMPWXL, 300 x 7.8 mm, 7 µm (TOSOH Bioscience GmbH)
- Column temperature: 35 °C
- Flow: 0.5 ml/min
- RID temperature: 35 °C
- Detection: refractive index (8 µl)
- Calibration: Narrow distributed poly(acrylic acid) sodium salt calibration standards in the range of 1250 g/mol to 143000 g/mol (PSS, Mainz, Germany), as well as 1770 g/mol and 900 g/mol (American Polymer Standards Corp.). The oligomer peaks of the standard with 900 g/mol were used as additional calibration points (225, 297, and 585 g/mol).

### 1.2 Residual particle moisture content ("drying oven method"):

The moisture content of the lignocellulosic particles before providing or preparing a mixture comprising lignocellulosic particles and a binder was measured according to DIN EN 322:1993-08 by placing the lignocellulosic particles in a drying oven at a temperature of 103 ± 2 °C until constant mass has been reached, i.e. an oven-dry state of the lignocellulosic particles. This method is also be used to check the water content of the resulting mixtures comprising lignocellulosic particles and a binder.

### 1.3 The solid content of amino resins:

The solid content of amino resins (UF) was determined by weighing out 1 g of the amino resin in a weighing dish, drying it in a drying cabinet at 120° C for 2 hours and weighing the residue in a desiccator after it has been equilibrated to room temperature as described in Zeppenfeld, Grunwald, Klebstoffe in der Holz-und Möbelindustrie [Adhesives in the Wood and Furniture Industry], DRW Verlag, 2nd edition, 2005, page 286.

### 1.4 Thickness and density of the lignocellulosic composites (boards):

The thickness and the density of the lignocellulosic composites (boards) were measured according to DIN EN 323:1993-08 and is reported as the arithmetic average of ten 50 x 50 mm samples of the same board.

### 1.5 Transverse tensile strength of the boards ("internal bond strength"):

The transverse tensile strength of the lignocellulosic composites (boards) ("internal bond strength") was determined according to DIN EN 319:1993-08 and is reported as the arithmetic average of ten 50 x 50 mm samples of the same lignocellulosic composite (board).

### 1.6 Swelling in thickness ("24 h swelling"):

The swelling in thickness after 24 h ("24 h swelling") of the lignocellulosic composites (boards) was determined according to DIN EN 317:1993-08 and is reported as the arithmetic average of ten 50 x 50 mm samples of the same lignocellulosic composite (board).

### 1.7 Surface and edge screw holding:

The surface screw holding and the edge screw holding of the lignocellulosic composites (boards) were determined according to IKEA's Test Method: specification no. IOS-TM-0057, Date: 2018-07-13, Version no: AA-2120821-1.

### 1.8 Ratio of the weight of the solid content of all binder components present for hardening via esterification to the weight of the lignocellulosic particles in an oven-dry state (esterification binder amount):

The ratio of the weight of the solid content of all binder components present for hardening via esterification to the weight of the lignocellulosic particles in an oven-dry state (esterification binder amount) in the examples according to the present invention are reported as the total weight of the sum of the respective binder components present for hardening the binder via esterification. Such components are polymers comprising multiple carboxyl groups, polymer or monomer compounds having two or more hydroxy groups, non-polymeric compounds having two or more carboxyl groups and non-polymeric compounds having at least one carboxyl group and at least one hydroxy group. Other binder components such as urea and additional compounds such as alkali salts and alkaline earth salts, hydrophobizing agents, dyes, pigments, antifungal agents, antibacterial agents, rheology modifiers, fillers, release agents, surfactants and tensides are not included in the esterification binder amount. The ratios of the weight of the solid content of all binder components present for hardening via esterification to the weight of the lignocellulosic particles in an oven-dry state (esterification binder amount) are given in wt.-% based on the weight of the lignocellulosic particles in an oven-dry state.

The ratios of the weight of the binder component urea to the weight of the lignocellulosic particles (urea amount) are reported as the weight of urea in wt.-% based on the weight of the lignocellulosic particles in an oven-dry state.

The ratios of the weight of the solid content of the binder components to the weight of the lignocellulosic particles in an oven-dry state (binder amounts) in the comparative examples with UF resins (Kaurit^{®} glues) are reported as the weight of the UF resin solids in wt.-% based on the weight of the lignocellulosic particles in an oven-dry state.

### 1.9 Measuring of the pH value of the binder (pH binder):

The pH values of the binders were measured at 23 ± 2 °C using an ISFET electrode (CPS441D) from Endres + Hauser.

### 1.10 Determining the pH value of an aqueous extract of a mixture comprising lignocellulosic particles and a binder (pH extract):

The pH values of an aqueous extract of a mixture comprising lignocellulosic particles and a binder (pH extract) were measured according to the procedure described in Hennecke, U., Roffael, E. "Charakterisierung einiger auswaschbarer Stoffe in thermomechanisch gewonnenen Holzstoffen der Buche" Holz Roh Werkst 63, 408-413 (2005), https://doi.org/10.1007/s00107-005-0017-4.

Accordingly, 5.0 g of a mixture comprising lignocellulosic particles and the respective amount of binder components were put in an Erlenmeyer flask (500 mL). Then 150 mL of demineralized water were added to that mixture. Then the Erlenmeyer flask was sealed with a glass stopper and placed on a shaker for 24 hours. Then the mixture (extract) was filtrated over a pleated filter and the pH-value of the filtered aqueous extract was measured at 23 ± 2 °C using a glas pH electrode (SI-Analytics, PL81-120pHT, PTB08ATEX2021).

### 1.11 Formaldehyde emission (FA emission):

The formaldehyde emission (FA emission) of the of the single-layer and multilayer lignocellulosic composites (boards) were determined according to EN ISO 12460-3:2020 (Gas analysis method).

### 2. Chemicals:

### 2.1 Components for hardening the binder via esterification:

### 2.1.1 Polymer or monomer compounds having two or more hydroxy groups selected from the group of carbohydrates and sugar alcohols:

Dextrose monohydrate ("Dex", > 99%), Sigma Aldrich, Spain
Fructose ("Fru", > 99%), Sigma Aldrich, US
Glycerine ("Gly", > 99%), Cremer OLEA, Germany
Maltodextrin ("MD", dextrose equivalent 13.0 - 17.0), Sigma Aldrich, US

### 2.1.2 Polymer or monomer compounds having two or more hydroxy groups selected from the group of alkylamines:

Triethanolamine ("TEtA", 98%), Sigma Aldrich

### 2.1.3 Non-polymeric compounds having two or more carboxyl groups:

Citric acid monohydrate ("CA", > 99%), Bernd Kraft, Austria
Lactic acid ("LA", 88%), Fisher Scientific, Spain

### 2.1.4 Polymers comprising multiple carboxyl groups:

Polymer A ("A"): 44.5 wt.-% aqueous solution of a copolymer consisting of 75 wt.-% of acrylic acid units and 25 wt.-% of maleic acid units with a weight average molecular weight of 58,600 g/mol (pH = 0.8).

Polymer B ("B"): 50 wt.-% aqueous solution of a copolymer consisting of 70 wt.-% of acrylic acid units and 30 wt.-% of maleic acid units, partially neutralized (pH = 4.0), with a weight average molecular weight of 91,600 g/mol.

Polymer C ("C"): 45 wt.-% aqueous solution of a copolymer consisting of 66 wt.-% of acrylic acid units and 34 wt.-% of maleic acid units with a weight average molecular weight of 80,800 g/mol (pH = 0.8).

Polymers A and C were synthesized by free radical solution polymerization of acrylic acid and maleic anhydride in water. For example, for Polymer C 70 wt.-% of acrylic acid and 30 wt.-% of maleic anhydride was polymerized, resulting in a copolymer consisting of 66 wt.-% of acrylic acid units and 34 wt.-% of maleic acid units.

### 2.2 Other binder components:

Urea (technical grade), BASF SE

### 2.3 Additional compounds:

Paraffin emulsion (60% paraffin in water), HydroWax 138, Sasol Wax GmbH
Sodium hydroxide (NaOH)

### 2.4 Urea formaldehyde resins (comparative binders):

Urea formaldehyde resin ("UF", "KL 347", 66% solid content), Kaurit Glue 347, BASF

### 3. Lignocellulosic particles (wood chips):

### 3.1 Spruce wood chips (lignocellulosic particles):

The spruce wood chips were produced in a disc chipper. Spruce trunk sections (length 250 mm) from Germany were pressed with the long side against a rotating steel disc, into which radially and evenly distributed knife boxes are inserted, each of which consists of a radially arranged cutting knife and several scoring knives positioned at right angles to it. The cutting knife separates the chip from the round wood and the scoring knives simultaneously limit the chip length. Afterwards the produced chips were collected in a bunker and from there they were transported to a cross beater mill (with sieve insert) for reshredding with regard to chip width. Afterwards the reshredded chips were conveyed to a flash drier and dried at approx. 120 °C. The spruce wood chips were then screened into two useful fractions (B: ≤ 2.0 mm x 2.0 mm and > 0.32 mm x 0.5 mm; C: ≤ 4.0 mm x 4.0 mm and > 2.0 mm x 2.0 mm), a coarse fraction (D: > 4.0 mm x 4.0 mm), which is reshredded, and a fine fraction (A: ≤ 0.32 mm x 0.5 mm).

Fraction B of the spruce wood chips (hereafter referred to as "spruce surface layer chips") is used in the surface layer of three-layered chipboards. A mixture of 60 wt.-% of fraction B and 40 wt.-% of fraction C of the spruce wood chips (hereafter referred to as "spruce core layer chips") is either used in the core layer of three-layered chipboards or in single-layered chipboards.

### 3.2 Industrial wood chips (lignocellulosic particles):

The industrial wood chips ("industrial surface layer chips" and "industrial core layer chips") were produced in a Slovakian industrial chipboard production plant. The industrial wood chips were dried at approx. 120 °C before use in a convection oven.

### 5. Preparation of binders:

### 5.1 Preparation of comparative binders:

### 5.2 Preparation of binders comprising as components for hardening via esterification one, two or more polymers comprising multiple carboxyl groups, and for crosslinking said polymers one, two or more polymer or monomer compounds having two or more hydroxy groups:

*Binder 1:* Binder 1 is the mixture of 333 g of Polymer C ("C", 45 wt.-% in water), 100 g of triethanolamine ("TEtA") and 66.6 g of water. The resulting solid content of all binder components present for hardening via esterification is 50.0 wt.-%. The ratio by weight between C and TEtA is 60:40.

*Binder 2:* Binder 2 is the mixture of 444 g of Polymer C ("C", 45 wt.-% in water), 50.0 g of triethanolamine ("TEtA") and 6.0 g of water. The resulting solid content of all binder components present for hardening via esterification is 50.0 wt.-%. The ratio by weight between C and TEtA is 80:20.

*Binder 3:* Binder 3 is the mixture of 333 g of Polymer C ("C", 45 wt.-% in water), 100 g of Glycerine ("Gly") and 66.6 g of water. The resulting solid content of all binder components present for hardening via esterification is 50.0 wt.-%. The ratio by weight between C and Gly is 60:40.

*Binder 4:* Binder 4 is the mixture of 444 g of Polymer C ("C", 45 wt.-% in water), 50.0 g of Glycerine ("Gly") and 6.0 g of water. The resulting solid content of all binder components present for hardening via esterification is 50.0 wt.-%. The ratio by weight between C and Gly is 80:20.

*Binder 5:* Binder 5 is the mixture of 337 g of Polymer A ("A", 44.5 wt.-% in water), 100 g of triethanolamine ("TEtA") and 63.0 g of water. The resulting solid content of all binder components present for hardening via esterification is 50.0 wt.-%. The ratio by weight between A and TEtA is 60:40.

*Binder 6:* Binder 6 is the mixture of 337 g of Polymer A ("A", 44.5 wt.-% in water), 100 g of Glycerine ("Gly") and 63.0 g of water. The resulting solid content of all binder components present for hardening via esterification is 50.0 wt.-%. The ratio by weight between A and Gly is 60:40.

*Binder* 7: Binder 7 is the mixture of 444 g of Polymer C ("C", 45 wt.-% in water), 55.0 g of Dextrose monohydrate (corresponding to 50.0 g Dextrose "Dex") and 1.0 g of water. The resulting solid content of all binder components present for hardening via esterification is 50.0 wt.-%. The ratio by weight between C and Dex is 80:20.

*Binder 8:* Binder 8 is the mixture of 444 g of Polymer C ("C", 45 wt.-% in water), 50.0 g of Fructose ("Fru") and 6.0 g of water. The resulting solid content of all binder components present for hardening via esterification is 50.0 wt.-%. The ratio by weight between C and Fru is 80:20.

*Binder 9:* Binder 9 is the mixture of 444 g of Polymer C ("C", 45 wt.-% in water), 50.0 g of Maltodextrin ("MD") and 6.0 g of water. The resulting solid content of all binder components present for hardening via esterification is 50.0 wt.-%. The ratio by weight between C and MD is 80:20.

*Binder 10:* Binder 10 is the mixture of 420 g of Polymer A ("A", 44.5 wt.-% in water), 80.0 g of Glycerine ("Gly") and 34.0 g of water. The resulting solid content of all binder components present for hardening via esterification is 50.0 wt.-%. The ratio by weight between A and Gly is 70:30.

### 5.3 Preparation of binders comprising as components for hardening via esterification one, two or more polymers comprising multiple carboxyl groups, and for crosslinking said polymers one, two or more polymer or monomer compounds having two or more hydroxy groups, and one or more non-polymeric, preferably non-polymeric biobased, compounds having two or more carboxyl groups:

*Binder 11:* Binder 11 is the mixture of 360 g of Polymer A ("A", 44.5 wt.-% in water), 87.9 g of Citric acid monohydrate (corresponding to 80.1 g of citric acid "CA"), 80.0 g of Glycerine ("Gly") and 113 g of water. The resulting solid content of all binder components present for hardening via esterification is 50 wt.-%. The ratio by weight between A, CA and Gly is 50:25:25.

*Binder 12:* Binder 12 is the mixture of 360 g of Polymer A ("A", 44.5 wt.-% in water), 52.6 g of Citric acid monohydrate (corresponding to 48.1 g of citric acid "CA"), 32.0 g of Lactic Acid ("LA"), 80.0 g of Glycerine ("Gly") and 116 g of water. The resulting solid content of all binder components present for hardening via esterification is 50 wt.-%. The ratio by weight between A, CA, LA and Gly is 50:15:10:25.

*Binder 13:* Binder 13 is the mixture of 360 g of Polymer B ("B", 50 wt.-% in water), 87.9 g of Citric acid monohydrate (corresponding to 80.1 g of citric acid "CA"), 80.0 g of Glycerine ("Gly") and 152 g of water. The resulting solid content of all binder components present for hardening via esterification is 50 wt.-%. The ratio by weight between A, CA and Gly is 50:25:25.

*Binder 14:* Binder 14 is the mixture of 500 g of Polymer A ("A", 44.5 wt.-% in water), 55.6 g of Glycerine ("Gly") and 56.2 g of water. The resulting solid content of all binder components present for hardening via esterification is 50.0 wt.-%. The ratio by weight between A and Gly is 80:20.

*Binder 15:* Binder 15 is the mixture of 500 g of Polymer A ("A", 44.5 wt.-% in water), 55.6 g of triethanolamine ("TEtA") and 56.2 g of water. The resulting solid content of all binder components present for hardening via esterification is 50.0 wt.-%. The ratio by weight between A and TEtA is 80:20.

### 6. Preparation of single-layer lignocellulosic composites (chipboards):

### 6.1 11 mm single-layer chipboards (Boards No. S1 to S20):

### 6.1.a Providing or preparing a mixture at least comprising lignocellulosic particles and a binder:

11 mm single-layer chipboards (Boards No. S1 to S20) were prepared without paraffin and with an esterification binder amount of 6.0 wt.-% (ratio of the weight of the solid content of all binder components present for hardening via esterification to the weight of the lignocellulosic particles in an oven-dry state). The urea amount was 0 wt.-%, 1 wt.-% and 5 wt.-% respectively (the weight of urea in wt.-% based on the weight of the lignocellulosic particles in an oven-dry state). Urea was added to the binders at ambient temperature under intense stirring before spraying to the chips (which applies to all examples comprising urea as a binder component).

The pH values of the respective binders were determined (according to the measuring methods described above). In the examples with urea (1.0 wt.-% or 5.0 wt.-%) the pH values of the binder was determined after addition of urea.

### For boards without urea (S7* and S8*):

20.0 g of water was sprayed within 1 min to 820 g (800 g dry weight) of spruce core layer chips (lignocellulosic particles, moisture content 2.5 %) while mixing in a paddle mixer. Subsequently, 96.0 g of the respective binder (with a solid content of all binder components present for hardening via esterification of 50 wt.-%) was sprayed to this mixture within 1 min while mixing. After completion of the spraying, mixing in the mixer was continued for 15 sec and the respective mixtures comprising lignocellulosic particles and a binder were obtained. The pH values of the aqueous extract of the respective mixtures comprising lignocellulosic particles and a binder (pH extract) were determined (according to the measuring methods described above).

### For boards with 1.0 wt.-% of urea (S3*, S4*, S5*, S6*, S11, S12, S15, S16, S17, S18, S19 and S20):

20.8 g of water was sprayed within 1 min to 820 g (800 g dry weight) of spruce core layer chips (lignocellulosic particles, moisture content 2.5 %) while mixing in a paddle mixer. Subsequently, a mixture of 96.0 g of the respective binder (with a solid content of all binder components present for hardening via esterification of 50 wt.-%) and 8.00 g of urea was sprayed to this mixture within 1 min while mixing. After completion of the spraying, mixing in the mixer was continued for 15 sec and the respective mixtures comprising lignocellulosic particles and a binder (containing urea) were obtained. The pH values of the aqueous extract of the respective mixtures comprising lignocellulosic particles and a binder (pH extract) were determined (according to the measuring methods described above).

### For boards with 5.0 wt.-% of urea (S1*, S2*, S9, S10, S13 and S14):

24.0 g of water was sprayed within 1 min to 820 g (800 g dry weight) of spruce core layer chips (lignocellulosic particles, moisture content 2.5 %) while mixing in a paddle mixer. Subsequently, a mixture of 96.0 g of the respective binder (with a solid content of all binder components present for hardening via esterification of 50 wt.-%) and 40.0 g of urea was sprayed to this mixture within 1 min while mixing. After completion of the spraying, mixing in the mixer was continued for 15 sec and the respective mixtures comprising lignocellulosic particles and a binder (containing urea) were obtained. The pH values of the aqueous extract of the respective mixtures comprising lignocellulosic particles and a binder (pH extract) were determined (according to the measuring methods described above).

### 6.1.b Compacting the mixture:

After 30 min, 900 g of the resulting mixtures comprising lignocellulosic particles and a binder were scattered into a 320 mm x 380 mm mold and pre-pressed (compacted) under ambient conditions and a pressure of 1.2 N/mm² resulting in a pre-pressed chip mat (compacted mixture).

### 6.1.c Applying a high-frequency electrical field to the mixture during and/or after compacting, so that the binder hardens via esterification and binds the lignocellulosic particles, so that a single-layer liqnocellulosic composite results (HF pressing method, Boards No. S7-S20):

Subsequently, the pre-pressed chip mat (compacted mixture) thus obtained was removed from the mold. For monitoring the temperature in the center of said (compacted) mixture, i.e. in the approximate middle of the mat, a temperature sensor was introduced into the center of said pre-pressed chip mat. Nonwoven separators were then provided to the upper and lower side of the pre-pressed chip mat. The pre-pre-pressed chip mat was inserted in a HLOP 170 press from Hoefer Presstechnik GmbH, whereby a birch plywood (thickness 6 mm) was placed between the nonwoven separator and the press plate on each side of the mat. The pre-pressed chip mat was then compacted to 11 mm thickness in the press within a period of 2 s, and then heated by applying a high-frequency electrical field (27.12 MHz) while the press was remaining closed. When 170 °C ("HF temperature") was reached in the center, the press was opened.

### 6.1.d Hot pressing (comparative examples, Boards No. S1*-S6*):

Nonwoven separators were provided to the upper and lower side of the pre-pressed chip mat. The pre-pressed chip mat was further compacted to 11 mm thickness in a lab hot press from Hoefer Presstechnik GmbH at a temperature of 200 °C (press plate temperature). The press was opened after 110 sec (press time factor 10 s/mm).

*6.1.e* After 3 d at ambient conditions the resulting single-layer chipboards (single-layer lignocellulosic composites) were sanded. 0.25 mm were sanded off on both the top and bottom side of the single-layer chipboard. After conditioning (at 65% humidity and 20° C) to constant mass, the thickness, the density, the internal bond strength, the formaldehyde emission and the 24 h swelling of the resulting single-layer chipboards were determined (according to the measuring methods described above).

**Table 1** shows the respective esterification binder composition used, the amount of urea (ratio of the weight of urea to the weight of the lignocellulosic particles in an oven-dry state), the pressing method, the density, the internal bond strength, the 24 h swelling and the FA emission of the resulting 11 mm single-layer chipboards No. S1 to S20. Boards No. S1 to S8 are comparative examples (hot pressing method or no urea). Table 1 also shows the pH values of the respective binders used and the pH values of the aqueous extract of the respective mixtures comprising lignocellulosic particles and a binder (pH extract).

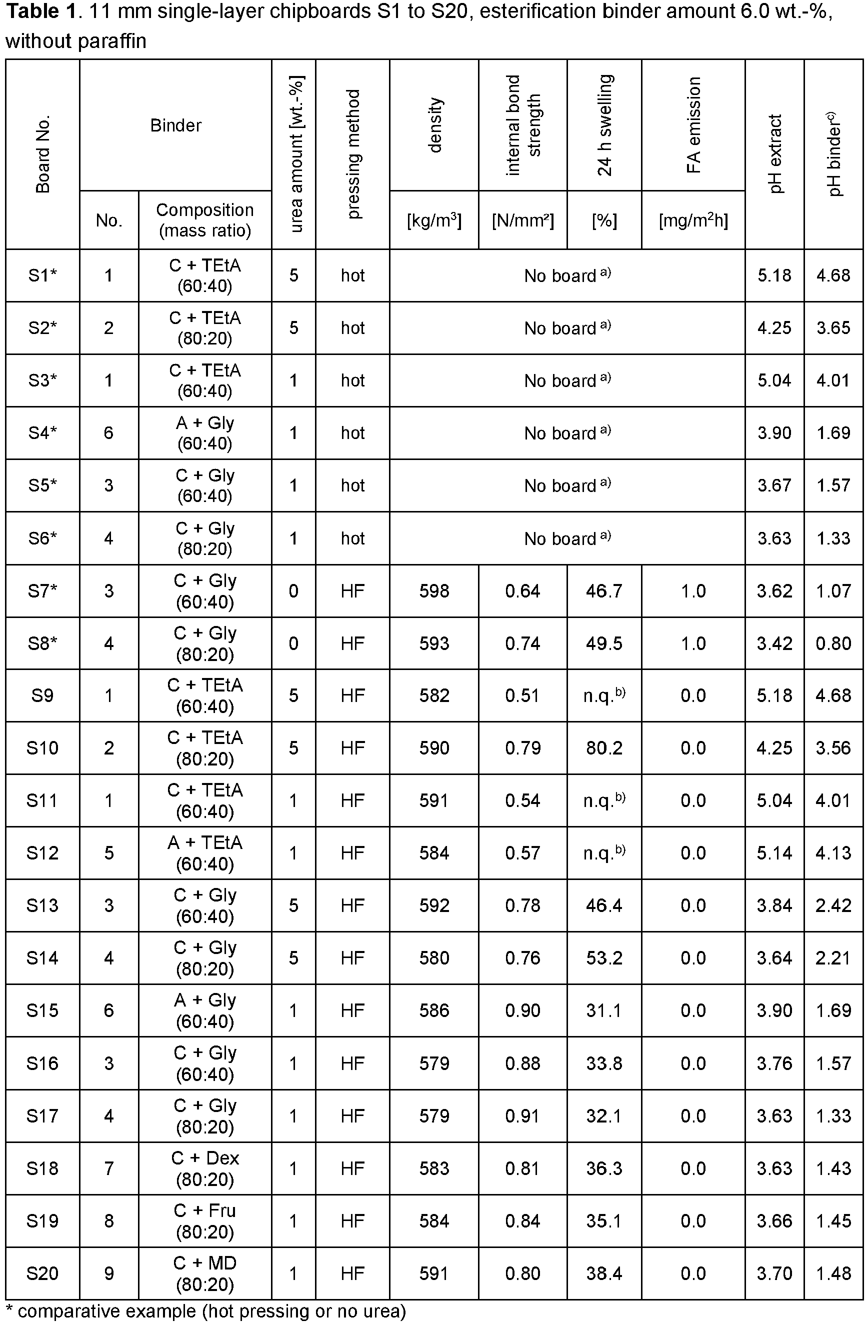

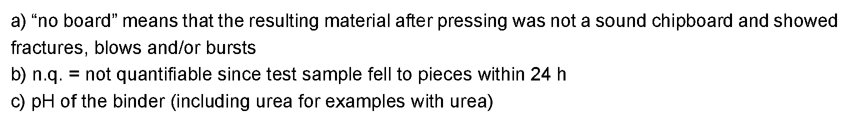

The results show that a lignocellulosic composite was prepared according to a process of the present invention, wherein the lignocellulosic composite is a 11 mm single-layer chipboard (Boards No. S9 to S20). All of these Boards No. S9 to S20 were produced by process steps S1, S2) and S3, i.e. by providing or preparing a mixture at least comprising lignocellulosic particles and a binder; by compacting the mixture; and by applying a high-frequency electrical field to the mixture during and/or after compacting, so that the binder hardens via esterification and binds the lignocellulosic particles, so that a single-layer lignocellulosic composite results. All of these Boards No. S9 to S20 were prepared from a binder comprising as components b1) one, two or more polymers comprising multiple carboxyl groups, b2) for crosslinking said polymers via esterification, one, two or more polymer or monomer compounds having two or more hydroxy groups, and b3) urea.

The results show that lignocellulosic composites (Boards No. S9 to S20), which were prepared according to a process of the present invention and with a binder according to the present invention, show a formaldehyde emission, determined according to EN ISO 12460-3:2020, during and/or after the production of the single-layer lignocellulosic composite of as low as 0.0 mg/m²h.

The results thus show that in the mixture provided or prepared in step S1) of the process, the presence of urea (as component b3) of the binder) in a total amount of 1 mass-% relative to the total mass of the lignocellulosic particles in an oven-dry state of the mixture, suffices to minimize the formaldehyde emission, determined according to EN ISO 12460-3:2020, to a value of as low as 0.0 mg/m²h (cf. "urea amount" in Boards No. S11, S12 and S15 to S20).

The resulting single-layer lignocellulosic composites (Boards No. S9 to S20) feature an internal bond strength, determined according to DIN EN 319:1993-08, of at least 0.51 N/mm².

The resulting single-layer lignocellulosic composites (Boards No. S13 to S20) prepared from a binder comprising compounds selected from the group consisting of glycerin, dextrose, fructose and maltodextrin as component b2), feature a thickness swelling after 24 hours in water at 20 °C, determined according to DIN EN 317:1993-08, of less than 60 %.

This shows that it is particularly preferred that component b2) of the binder comprises compounds selected from the group consisting of glycerin, dextrose, fructose and maltodextrin.

The results also show that in the mixture provided or prepared in step S1) of the process, the presence of components b1), b2) and any present component b4) in a total combined amount of 6 mass-% relative to the total mass of the lignocellulosic particles in an oven-dry state of the mixture, suffices to produce single-layer lignocellulosic composites with excellent mechanical properties such as the internal bond strength and thickness swelling after 24 hours in water at 20 °C as explained above (cf. "esterification binder amount" in Boards No. S9 to S20).

Comparative examples Boards No. S1 to S6 (resulting material after pressing was not a sound chipboard and showed fractures, blows and/or bursts) show that the step of applying a high-frequency electrical field to the mixture during and/or after compacting, so that the binder hardens via esterification and binds the lignocellulosic particles, is advantageous compared to a conventional hot pressing.

Comparative examples Boards No. S7 and S8 (with no component b3), urea, in the binder) featuring a formaldehyde emission, determined according to EN ISO 12460-3:2020, during and/or after the production of the single-layer lignocellulosic composite of 1.0 mg/m²h show that the presence of binder component b3), urea, is advantageous for reducing the formaldehyde emission and for improving internal bond strength and thickness swelling.

### 6.2 10 mm single-layer chipboards (Boards No. S21 to S35):

### 6.2.a Providing or preparing a mixture at least comprising lignocellulosic particles and a binder:

10 mm single-layer chipboards (Boards No. S21 to S35) were prepared with 0.5 wt.-% paraffin amount (mass ratio of the weight of paraffin to the weight of the lignocellulosic particles in an oven-dry state).

### For boards S21*, S27*, S30*, S32* and S34* (6.0 wt.-% esterification binder content, 0.0 wt.-% urea):

A mixture of 6.67 g of Hydrowax 138 (60 wt.-% paraffin in water) and 21.5 g of water was sprayed within 1 min to 816 g (800 g dry weight) of spruce core layer chips (lignocellulosic particles, moisture content 2.0 %) while mixing in a paddle mixer. Subsequently, 96.0 g of the respective binder (with a solid content of all binder components present for hardening via esterification of 50 wt.-%) was sprayed to this mixture within 1 min while mixing. (For board S30* a 50 wt.-% aqueous solution of NaOH was added to the respective binder before spraying to adjust the pH value to 3.49). After completion of the spraying, mixing in the mixer was continued for 15 sec and the respective mixtures comprising lignocellulosic particles and a binder were obtained.

### For board S24* (4.0 wt.-% esterification binder content, 0.0 wt.-% urea):

A mixture of 6.67 g of Hydrowax 138 (60 wt.-% paraffin in water) and 32.0 g of water was sprayed within 1 min to 816 g (800 g dry weight) of spruce core layer chips (lignocellulosic particles, moisture content 2.0 %) while mixing in a paddle mixer. Subsequently, 64.0 g of the respective binder (with a solid content of all binder components present for hardening via esterification of 50 wt.-%) was sprayed to this mixture within 1 min while mixing. After completion of the spraying, mixing in the mixer was continued for 15 sec and the respective mixtures comprising lignocellulosic particles and a binder were obtained.

### For board S25 (4.0 wt.-% esterification binder content and 0.8 wt.-% of urea):

A mixture of 6.67 g of Hydrowax 138 (60 wt.-% paraffin in water) and 36.5 g of water was sprayed within 1 min to 816 g (800 g dry weight) of spruce core layer chips (lignocellulosic particles, moisture content 2.0 %) while mixing in a paddle mixer. Subsequently, a mixture of 64.0 g of the respective binder (with a solid content of all binder components present for hardening via esterification of 50 wt.-%) and 6.40 g of urea was sprayed to this mixture within 1 min while mixing. After completion of the spraying, mixing in the mixer was continued for 15 sec and the respective mixtures comprising lignocellulosic particles and a binder (containing urea) were obtained.

### For boards S22, S28, S29, S31, S33 and S35 (6.0 wt.-% esterification binder content and 1.2 wt.-% of urea):

A mixture of 6.67 g of Hydrowax 138 (60 wt.-% paraffin in water) and 22.6 g of water was sprayed within 1 min to 816 g (800 g dry weight) of spruce core layer chips (lignocellulosic particles, moisture content 2.0 %) while mixing in a paddle mixer. Subsequently, a mixture of 96.0 g of the respective binder (with a solid content of all binder components present for hardening via esterification of 50 wt.-%) and 9.60 g urea was sprayed to this mixture within 1 min while mixing. (For board S29 and S31 a 50 wt.-% aqueous solution of NaOH was added to the respective binder before spraying to adjust the pH value to 1.75, or 3.49). After completion of the spraying, mixing in the mixer was continued for 15 sec and the respective mixtures comprising lignocellulosic particles and a binder (containing urea) were obtained.

### For board S26 (4.0 wt.-% esterification binder content and with 1.4 wt.-% of urea):

A mixture of 6.67 g of Hydrowax 138 (60 wt.-% paraffin in water) and 37.0 g of water was sprayed within 1 min to 816 g (800 g dry weight) of spruce core layer chips (lignocellulosic particles, moisture content 2.0 %) while mixing in a paddle mixer. Subsequently, a mixture of 64.0 g of the respective binder (with a solid content of all binder components present for hardening via esterification of 50 wt.-%) and 11.2 g urea was sprayed to this mixture within 1 min while mixing. After completion of the spraying, mixing in the mixer was continued for 15 sec and the respective mixtures comprising lignocellulosic particles and a binder (containing urea) were obtained.

### For board S23 (6.0 wt.-% esterification binder content and 2.1 wt.-% of urea):

A mixture of 6.67 g of Hydrowax 138 (60 wt.-% paraffin in water) and 23.4 g of water was sprayed within 1 min to 816 g (800 g dry weight) of spruce core layer chips (lignocellulosic particles, moisture content 2.0 %) while mixing in a paddle mixer. Subsequently, a mixture of 96.0 g of the respective binder (with a solid content of all binder components present for hardening via esterification of 50 wt.-%) and 16.8 g urea was sprayed to this mixture within 1 min while mixing. After completion of the spraying, mixing in the mixer was continued for 15 sec and the respective mixtures comprising lignocellulosic particles and a binder (containing urea) were obtained.

The pH values of the respective binders were determined (according to the measuring methods described above). In the examples with urea (0.8, 1.2, 1.4 or 2,1 wt.-% respectively) the pH values of the binder were determined after addition of urea.

### 6.2.b Compacting the mixture:

After 30 min, 830 g of the resulting mixtures comprising lignocellulosic particles and a binder were scattered into a 320 mm x 380 mm mold and pre-pressed (compacted) under ambient conditions and a pressure of 1.2 N/mm² resulting in a pre-pressed chip mat (compacted mixture).

### 6.2.c Applying a high-frequency electrical field to the mixture during and/or after compacting, so that the binder hardens via esterification and binds the lignocellulosic particles, so that a single-layer lignocellulosic composite results (HF pressing method):

Subsequently, the pre-pressed chip mat (compacted mixture) thus obtained was removed from the mold. For monitoring the temperature in the center of said (compacted) mixture, i.e. in the approximate middle of the mat, a temperature sensor was introduced into the center of said pre-pressed chip mat. Nonwoven separators were then provided to the upper and lower side of the pre-pressed chip mat. The pre-pressed chip mat was inserted in a HLOP 170 press from Hoefer Presstechnik GmbH, whereby a birch plywood (thickness 6 mm) was placed between the nonwoven separator and the press plate on each side of the mat. The pre-pressed chip mat was then compacted to 10 mm thickness in the press within a period of 2 s, and then heated by applying a high-frequency electrical field (27.12 MHz) while the press was remaining closed. When 160 °C or 170 °C ("HF temperature") was reached in the center, the press was opened.

*6.2.d* After 3 d at ambient conditions the resulting single-layer chipboards (single-layer lignocellulosic composites) were sanded. 0.25 mm were sanded off on both the top and bottom side of the single-layer chipboard. After conditioning (at 65% humidity and 20° C) to constant mass, the thickness, the density, the internal bond strength, the formaldehyde emission and the 24 h swelling of the resulting single-layer chipboards were determined (according to the measuring methods described above).

**Table 2** shows the respective esterification binder composition used, the esterification binder amount (ratio of the weight of the solid content of all binder components present for hardening via esterification to the weight of the lignocellulosic particles in an oven-dry state), the respective amount of urea (ratio of the weight of urea to the weight of the lignocellulosic particles in an oven-dry state), the density, the internal bond strength, the 24 h swelling and the FA emission of the resulting 10 mm single-layer chipboards No. S21 to S33. Boards No. S21, S24, S27, S30 and S32 are comparative examples (no urea). Table 2 also shows the pH values of the respective binders used.

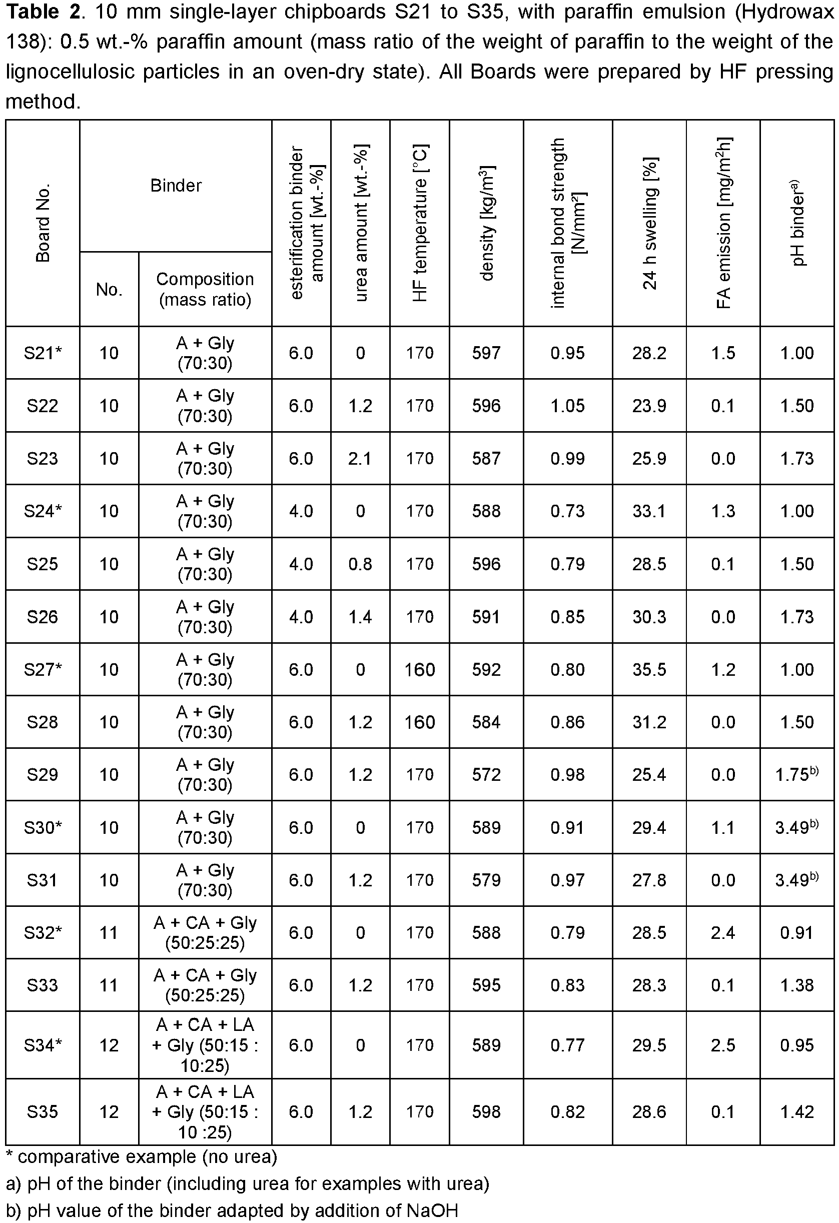

The results show that a lignocellulosic composite was prepared according to a process of the present invention, wherein the lignocellulosic composite is a 10 mm single-layer chipboard (Boards No. S22, S23, S25, S25, S28, S29, S31, S33 and S35). All of these Boards were produced by process steps S1, S2) and S3, i.e. by providing or preparing a mixture at least comprising lignocellulosic particles and a binder; by compacting the mixture; and by applying a high-frequency electrical field to the mixture during and/or after compacting, so that the binder hardens via esterification and binds the lignocellulosic particles, so that a single-layer lignocellulosic composite results. All of these Boards were prepared from a binder comprising as components b1) one, two or more polymers comprising multiple carboxyl groups, b2) for crosslinking said polymers via esterification, one, two or more polymer or monomer compounds having two or more hydroxy groups, and b3) urea. Boards No. 33 and No 35 were prepared from binders comprising citric acid or citric acid and lactic acid as component b4) one or more non-polymeric, preferably non-polymeric biobased, compounds having two or more carboxyl groups and/or one or more non-polymeric, preferably non-polymeric biobased, compounds having at least one carboxyl group and at least one hydroxy group.

The results show that lignocellulosic composites (Boards No. S22, S23, S25, S25, S28, S29, S31, S33 and S35), which were prepared according to a process of the present invention and with a binder according to the present invention, show a formaldehyde emission, determined according to EN ISO 12460-3:2020, during and/or after the production of the single-layer lignocellulosic composite of as low as 0.0 or 0.1 mg/m²h.

The results thus show that in the mixture provided or prepared in step S1) of the process, the presence of urea (as component b3) of the binder) in a total amount of 0.8 to 1.4 mass-% relative to the total mass of the lignocellulosic particles in an oven-dry state of the mixture, suffices to minimize the formaldehyde emission, determined according to EN ISO 12460-3:2020, to values as low as 0.0 or 0.1 mg/m²h (cf. "urea amount" in Boards No. S22, S23, S25, S25, S28, S29, S31, S33 and S35).

The resulting single-layer lignocellulosic composites (Boards No. S22, S23, S25, S25, S28, S29, S31, S33 and S35) feature an internal bond strength, determined according to DIN EN 319:1993-08, of at least 0.77 N/mm².

The resulting single-layer lignocellulosic composites (Boards No. S22, S23, S25, S25, S28, S29, S31, S33 and S35) feature a thickness swelling after 24 hours in water at 20 °C, determined according to DIN EN 317:1993-08, of less than 40 %.

The results also show that a binder comprising glycerin as component b2) is particularly well suited in order to reach those good mechanical properties as described above.

Comparative examples Boards No. S21, S24, S27, S30, S32 and S34 (with no component b3), urea, in the binder) featuring a formaldehyde emission, determined according to EN ISO 12460-3:2020, during and/or after the production of the single-layer lignocellulosic composite, of as high as 1.1 to 2.4 mg/m²h show that the presence of binder component b3), urea, is advantageous for reducing the formaldehyde emission and for improving internal bond and swelling.

### 6.3 10 mm single-layer chipboards (Boards No. S36 to S41):

Boards No. S36, S38 and S40 are comparative examples (no urea).

### 6.3.a Providing or preparing a mixture at least comprising lignocellulosic particles and a binder:

### For boards S36* and S38* (6.0 wt.-% esterification binder content, 0.0 wt.-% urea):

A mixture of 6.67 g of Hydrowax 138 (60 wt.-% paraffin in water) and 21.5 g of water was sprayed within 1 min to 816 g (800 g dry weight) of spruce core layer chips (lignocellulosic particles, moisture content 2.0 %) while mixing in a paddle mixer. Subsequently, 96.0 g of the respective binder (with a solid content of all binder components present for hardening via esterification of 50 wt.-%) was sprayed to this mixture within 1 min while mixing. After completion of the spraying, mixing in the mixer was continued for 15 sec and the respective mixtures comprising lignocellulosic particles and a binder were obtained.

### For boards S37 and S39 (6.0 wt.-% esterification binder content and 1.2 wt.-% of urea):

A mixture of 6.67 g of Hydrowax 138 (60 wt.-% paraffin in water) and 22.6 g of water was sprayed within 1 min to 816 g (800 g dry weight) of spruce core layer chips (lignocellulosic particles, moisture content 2.0 %) while mixing in a paddle mixer. Subsequently, a mixture of 96.0 g of the respective binder (with a solid content of all binder components present for hardening via esterification of 50 wt.-%) and 9.60 g urea was sprayed to this mixture within 1 min while mixing. After completion of the spraying, mixing in the mixer was continued for 15 sec and the respective mixtures comprising lignocellulosic particles and a binder (containing urea) were obtained.

### For board S40* (8.0 wt.-% esterification binder content, 0.0 wt.-% of urea, without paraffin):

A mixture of 128.0 g of binder 15 (with a solid content of all binder components present for hardening via esterification of 50 wt.-%) and 85.3 g water was sprayed within 1 min to 816 g (800 g dry weight) of spruce core layer chips (lignocellulosic particles, moisture content 2.0 %) while mixing in a paddle mixer. After completion of the spraying, mixing in the mixer was continued for 15 sec and the respective mixtures comprising lignocellulosic particles and a binder were obtained.

### For board S41 (8.0 wt.-% esterification binder content, 1.2 wt.-% of urea, without paraffin):

Subsequently, a mixture of 128.0 g of binder 15 (with a solid content of all binder components present for hardening via esterification of 50 wt.-%), 9.60 g urea and 85.3 g water was sprayed within 1 min to 816 g (800 g dry weight) of spruce core layer chips (lignocellulosic particles, moisture content 2.0 %) while mixing in a paddle mixer. After completion of the spraying, mixing in the mixer was continued for 15 sec and the respective mixtures comprising lignocellulosic particles and a binder were obtained.

The pH values of the respective binders were determined (according to the measuring methods described above). In the examples S37 and S39 with 1.2 wt.-% urea the pH values of the binder were determined after addition of urea. In the example S40* the pH value of the binder was determined after addition of water. In the example S41 the pH value of the binder was determined after addition of urea and water.

### 6.3.b Compacting the mixture:

After 30 min, 850 g (examples S36*, S37, S38* and S39) or 1000 g (examples S40* and S41) of the resulting mixtures comprising lignocellulosic particles and a binder were scattered into a 320 mm x 380 mm mold and pre-pressed (compacted) under ambient conditions and a pressure of 1.2 N/mm² resulting in a pre-pressed chip mat (compacted mixture).

### 6.3.c Applying a high-frequency electrical field to the mixture during and/or after compacting, so that the binder hardens via esterification and binds the lignocellulosic particles, so that a single-layer lignocellulosic composite results (HF pressing method):

Subsequently, the pre-pressed chip mat (compacted mixture) thus obtained was removed from the mold. For monitoring the temperature in the center of said (compacted) mixture, i.e. in the approximate middle of the mat, a temperature sensor was introduced into the center of said pre-pressed chip mat. Nonwoven separators were then provided to the upper and lower side of the pre-pressed chip mat. The pre-pressed chip mat was inserted in a HLOP 170 press from Hoefer Presstechnik GmbH, whereby a birch plywood (thickness 6 mm) was placed between the nonwoven separator and the press plate on each side of the mat. The pre-pressed chip mat was then compacted to 10 mm thickness in the press within a period of 2 s, and then heated by applying a high-frequency electrical field (27.12 MHz) while the press was remaining closed. When 200 °C ("HF temperature") was reached in the center, the press was opened.

*6.3.d* After 3 d at ambient conditions the resulting single-layer chipboards (single-layer lignocellulosic composites) were sanded. 0.25 mm were sanded off on both the top and bottom side of the single-layer chipboard. After conditioning (at 65% humidity and 20° C) to constant mass, the thickness, the density, the internal bond strength, the formaldehyde emission and the 24 h swelling of the resulting single-layer chipboards were determined (according to the measuring methods described above).

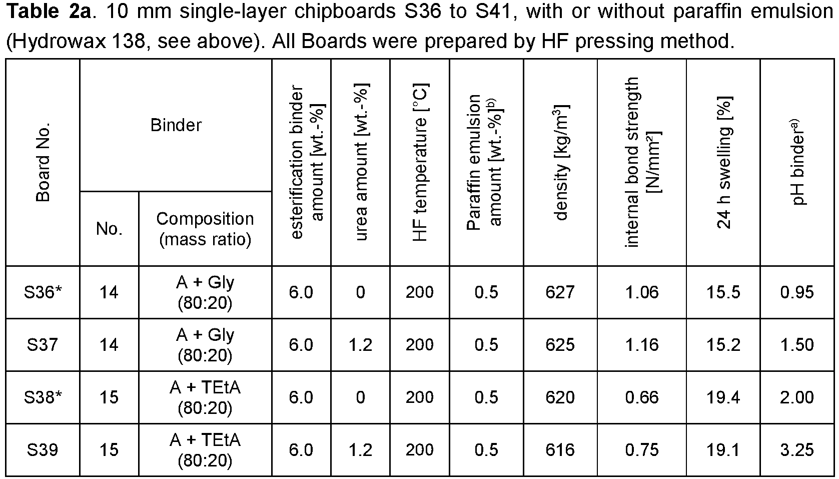

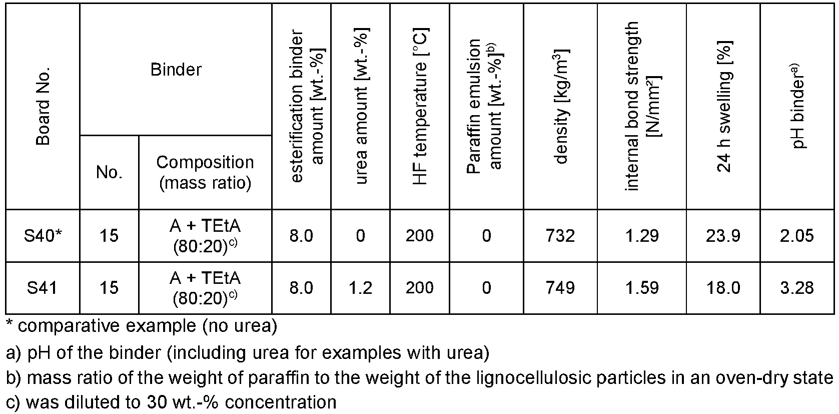

The results of example 6.3 as shown in table 2a show that the presence of urea in all cases led to an improvement in internal bond strengths and reduced 24 h swelling values, i.e. an improvement in the quality of the boards was achieved when urea was present.

### 7. Preparation of multilayer lignocellulosic composites (chipboards):

### 7.1 16 mm three-layer chipboards (Boards No. M1 to M15):

### 7.1.a Providing or preparing a first and a second individual mixture, each of these mixtures at least comprising lignocellulosic particles and a binder:

### Surface layers ("SL", first individual mixture):

### Surface layers for M1-M4:

15.0 g of water was sprayed within 1 min to 828 g (800 g dry weight) of a first type of lignocellulosic particles, i.e. spruce surface layer chips (moisture content 3.5 %), while mixing in a paddle mixer. Subsequently, a mixture of 96.0 g of the respective binder (with a solid content of all binder components present for hardening via esterification of 50 wt.-%) and 40.0 g of urea was sprayed to this mixture within 1 min while mixing so that a first individual mixture comprising lignocellulosic particles and a binder (containing urea) is obtained.

### Surface layers for M5-M15:

12.0 g of water was sprayed within 1 min to 828 g (800 g dry weight) of a first type of lignocellulosic particles, i.e. spruce surface layer chips (moisture content 3.5 %), while mixing in a paddle mixer. Subsequently, a mixture of 96.0 g of the respective binder (with a solid content of all binder components present for hardening via esterification of 50 wt.-%) and 8.0 g of urea was sprayed to this mixture within 1 min while mixing so that a first individual mixture comprising lignocellulosic particles and a binder (containing urea) is obtained.

### Core layer ("CL", second individual mixture):

### Core layers for M1* and M2:

14.1 g of water was sprayed within 1 min to 816 g (800 g dry weight) of a second type of lignocellulosic particles, i.e. spruce core layer chips (moisture content 2.0 %), while mixing in a paddle mixer. Subsequently, a mixture of 109 g of Kaurit Glue 347 (with a solid content of 66 wt.-%) and 5.76 g of a 50 wt.-% aqueous solution of ammonium nitrate was sprayed to this mixture within 1 min while mixing so that a first individual mixture comprising lignocellulosic particles and a binder is obtained.

### Core layers for M3* and M4:

7.3 g of water was sprayed within 1 min to 816 g (800 g dry weight) of a second type of lignocellulosic particles, i.e. spruce core layer chips (moisture content 2.0 %), while mixing in a paddle mixer. Subsequently, a mixture of 96.0 g of Binder 1 (with a solid content of all binder components present for hardening via esterification of 50 wt.-%) and 40.0 g of urea was sprayed to this mixture within 1 min while mixing so that a first individual mixture comprising lignocellulosic particles and a binder is obtained.

### Core layers for M5-M15:

4.8 g of water was sprayed within 1 min to 816 g (800 g dry weight) of a second type of lignocellulosic particles, i.e. spruce core layer chips (moisture content 2.0 %), while mixing in a paddle mixer. Subsequently, a mixture of 96.0 g of the respective binder (with a solid content of all binder components present for hardening via esterification of 50 wt.-%) and 8.0 g of urea was sprayed to this mixture within 1 min while mixing so that a first individual mixture comprising lignocellulosic particles and a binder is obtained.

### 7.1.b Preparing three layers by scattering individual layers on top of each other, each layer comprising lignocellulosic particles and a binder:

245 g of the first individual mixture for the surface layers, followed by 930 g of the second individual mixture for the core layer, followed by 245 g of the first individual mixture for the surface layers, were scattered into a 320 mm x 380 mm mold to give a three-layered pre-composite.

### 7.1.c Compacting the mixtures/layers so that the mixtures/layers are pre-compacted to give a pre-compacted mat:

The three-layered pre-composite obtained after 7.1.b is pre-pressed under ambient conditions and a pressure of 1.2 N/mm² to give a three-layered pre-pressed chip mat (compacted mixture).

### 7.1.d HF pressing vs. hot pressing:

Subsequently, the three-layered pre-pressed chip mat thus obtained was removed from the mold and pressed to a multilayer board either by a) applying a high-frequency electrical field (HF pressing) or b) hot pressing, wherein b) is a comparative process.

### a) HF pressing: Applying a high-frequency electrical field to the mixture after compacting, so that the binder hardens via esterification and binds the lignocellulosic particles, so that a multilayer lignocellulosic composite results:

For monitoring of the temperature in the center of said (compacted) mixture, i.e. in the approximate middle of the mat, a temperature sensor was introduced into the center of said mat, respectively into a horizontal hole in the center of the core. Nonwoven separators were then provided to the upper and lower side of the three-layered pre-pressed chip mat. The three-layered pre-pressed chip mat was inserted in a HLOP 170 press from Hoefer Presstechnik GmbH, whereby birch plywood boards (thickness 6 mm) were placed between the nonwoven separator and the press plate on each side of the mat. The three-layered pre-pressed chip mat was then compacted to 16 mm thickness in the press within a period of 2 s, and then heated by applying a high-frequency electrical field (27.12 MHz) while the press was remaining closed. When 170 °C was reached in the center, the press was opened.

### b) hot pressing (comparative examples, Boards No. M3*, M5* and M7*):

Nonwoven separators were provided to the upper and lower side of the three-layered pre-pressed chip mat. The three-layered pre-pressed chip mat was further compacted to 16 mm thickness in a lab hot press HLOP 350 from Hoefer Presstechnik GmbH at a temperature of 200 °C (press plate temperature). After a press time of 160 s the press was opened (press time factor 10 s/mm).

*7.1.e* After 3 d at ambient conditions the resulting three-layered chipboards (multilayer lignocellulosic composites) were sanded. 0.20 mm were sanded off on both the top and bottom side of the three-layered chipboards. After conditioning (at 65% humidity and 20° C) to constant mass. The thickness, the density, the internal bond strength, the formaldehyde emission, the 24 h swelling, the surface and edge screw holding of the three-layered chipboards were determined according to measuring methods described above.

**Table 3** shows the respective binder composition and esterification binder amount (ratio of the weight of the solid content of all binder components present for hardening via esterification to the weight of the lignocellulosic particles in an oven-dry state) used for the core layer (CL) and the surface layers (SL), the respective amount of urea (ratio of the weight of urea to the weight of the lignocellulosic particles in an oven-dry state) used for the core layer (CL) and the surface layers (SL), the pressing method, the density, the internal bond strength, the 24 h swelling, the FA emission, the surface screw holding and the edge screw holding of the resulting 16 mm three-layered chipboards No. M1 to M15. Boards No. M1, M3 and M5 are comparative examples (hot pressing method).

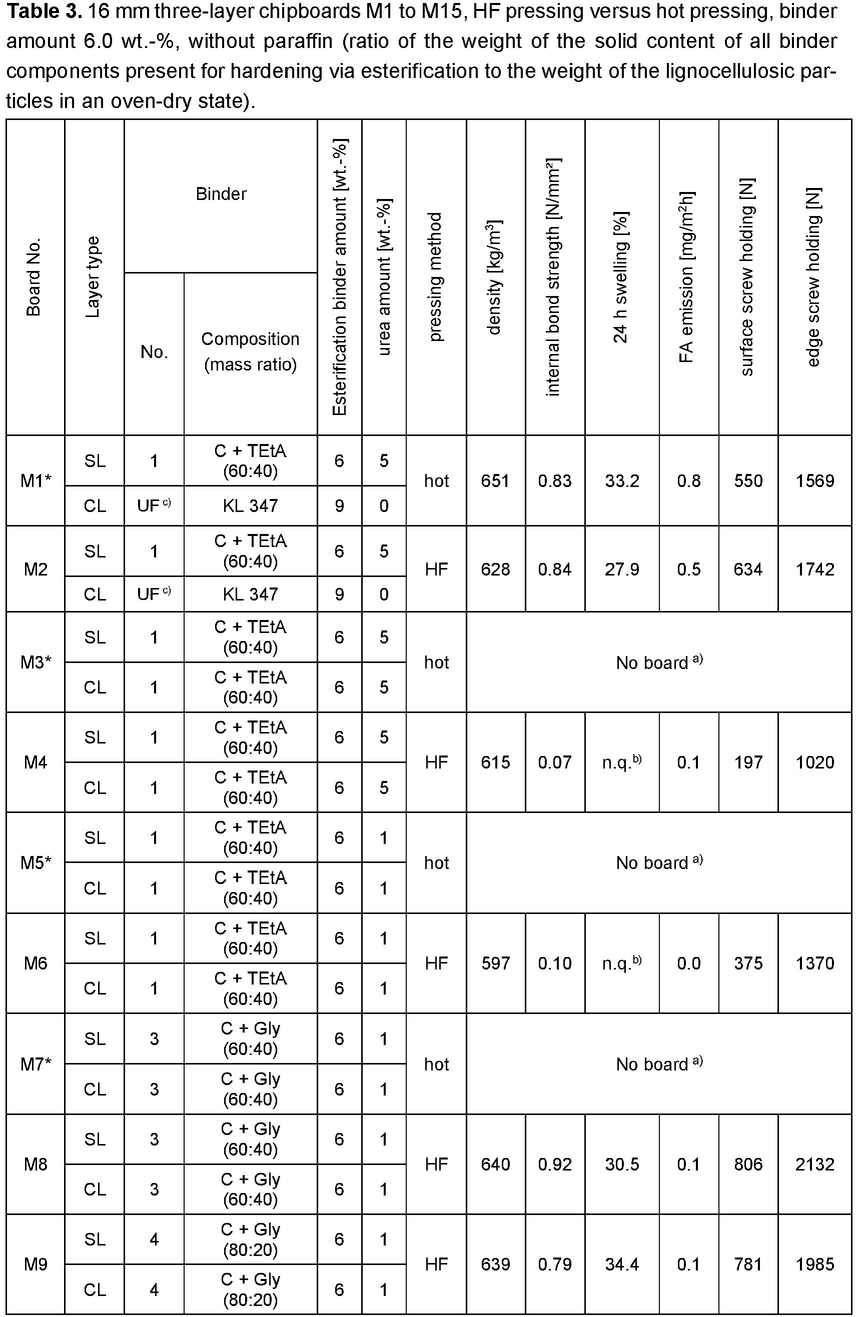

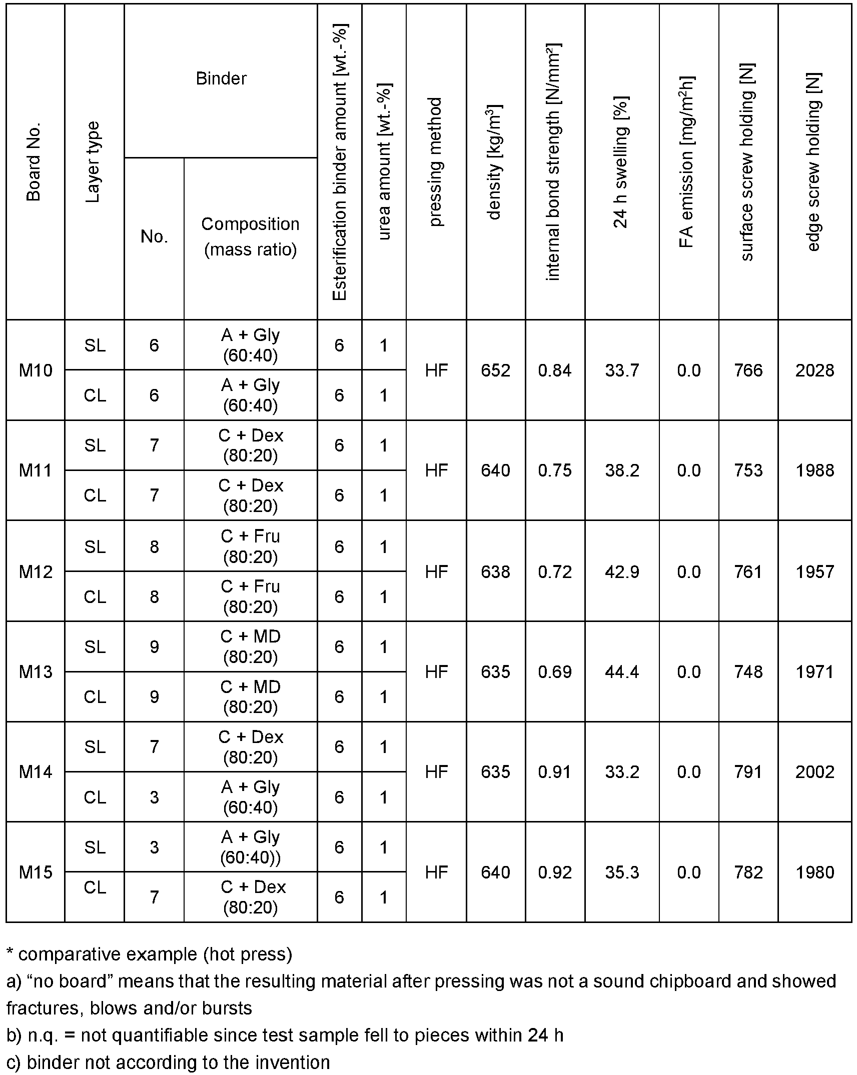

The results show that a multilayer lignocellulosic composite was prepared according to a process of the present invention, wherein the lignocellulosic composite is a 16 mm three-layer chipboard (Boards No. M2, M4, M6 and M8 to M15). All of these Boards were produced by process steps S1, S2) and S3, i.e. by providing or preparing a mixture at least comprising lignocellulosic particles and a binder; by compacting the mixture; and by applying a high-frequency electrical field to the mixture during and/or after compacting, so that the binder hardens via esterification and binds the lignocellulosic particles, so that a multilayer lignocellulosic composite results. All of these Boards were prepared from a binder comprising as components b1) one, two or more polymers comprising multiple carboxyl groups, b2) for crosslinking said polymers via esterification, one, two or more polymer or monomer compounds having two or more hydroxy groups, and b3) urea. According to the results, the binder according to the present invention may be present in all layers of the multilayer lignocellulosic composite (cf. Boards No. M4, M6 and M8 to M15). The binder according to the present invention may also be present at least in the upper and lower surface layer (cf. Board No. 2).

The results show that lignocellulosic composites (Boards No. M2, M4, M6 and M8 to M15), which were prepared according to a process of the present invention and with a binder according to the present invention, show a formaldehyde emission, determined according to EN ISO 12460-3:2020, during and/or after the production of the multilayer lignocellulosic composite of as low as 0.0 to 0.5 mg/m²h.

The results also show that it is particularly preferred that all layers of the multilayer lignocellulosic composite, i.e. the surface layers and the core layer of the three-layer board, are prepared with a binder according to the present invention, since Boards No. M4, M6 and M8 to M15 show a formaldehyde emission, determined according to EN ISO 12460-3:2020, during and/or after the production of the multilayer lignocellulosic composite of as low as 0.0 or 0.1 mg/m²h.

The results show that a multilayer lignocellulosic composite prepared according to the present invention may comprise more than one lignocellulosic composite layer, each layer comprising lignocellulosic particles and a binder, wherein in all layers the binders are the same (cf. Boards. No. M4, M6 and M8 to M13).

The results show that a multilayer lignocellulosic composite prepared according to the present invention may comprise more than one lignocellulosic composite layer, each layer comprising lignocellulosic particles and a binder, wherein in at least two layers the binders are different (cf. Boards. No. M14 and M15).

The results thus show that in the mixture provided or prepared in step S1) of the process, the presence of urea (as component b3) of the binder) in a total amount of 1 mass-% relative to the total mass of the lignocellulosic particles in an oven-dry state of the mixture, suffices to minimize the formaldehyde emission, determined according to EN ISO 12460-3:2020, to a value of as low as 0.0 or 0.1 mg/m²h (cf. "urea amount" in Boards No. M4, M6 and M8 to M15).

The results show that in the mixture provided or prepared in step S1) of the process, the presence of urea (as component b3) of the binder) in a total amount of 1 mass-% relative to the total mass of the lignocellulosic particles in an oven-dry state of the mixture, suffices to minimize the formaldehyde emission, determined according to EN ISO 12460-3:2020, to values as low as 0.0 or 0.1 mg/m²h (cf. "urea amount" in Boards No. M6 and M8 to M15).

The resulting multilayer lignocellulosic composites (Boards No. M8 to M15) prepared from a binder comprising compounds selected from the group consisting of glycerin, dextrose, fructose and maltodextrin as component b2), feature:
i) a thickness swelling after 24 hours in water at 20 °C, determined according to DIN EN 317:1993-08, of less than 50 %;
ii) an internal bond strength, determined according to DIN EN 319:1993-08, of at least 0.69 N/mm²;
iii) a surface screw holding, determined according to IKEA's Test Method: specification no. IOS-TM-0057, Date: 2018-07-13, Version no: AA-2120821-1, of ≥ 748 N; and
iv) and edge screw holding, determined according to IKEA's Test Method: specification no. IOS-TM-0057, Date: 2018-07-13, Version no: AA-2120821-1, of ≥ 1957 N.

These exceptional good mechanical properties of the multilayer lignocellulosic composites (Boards No. M8 to M15) confirm that it is particularly preferred that component b2) of the binder comprises compounds selected from the group consisting of glycerin, dextrose, fructose and maltodextrin.

Comparative examples Boards No. M1*, M3*, M5* and M7* (resulting material after pressing was not a sound chipboard and showed fractures, blows and/or bursts) show that the step of applying a high-frequency electrical field to the mixture during and/or after compacting, so that the binder hardens via esterification and binds the lignocellulosic particles, is advantageous compared to a conventional hot pressing.

### 7.2 19 mm three-layer chipboards (Boards No. M16 to M19):

### 7.2.a Providing or preparing a first and a second individual mixture, each of these mixtures at least comprising lignocellulosic particles and a binder:

### Surface layers ("SL", first individual mixture):

### Surface layers for M16* and M18*:

6.66 g of Hydrowax 138 (60 wt.-% paraffin in water) and 26.0 g of water was sprayed within 1 min to 813 g (800 g dry weight) of a first type of lignocellulosic particles, i.e. industrial surface layer chips (moisture content 1.6 %), while mixing in a paddle mixer. Subsequently, 96.0 g of the respective binder (with a solid content of all binder components present for hardening via esterification of 50 wt.-%) was sprayed to this mixture within 1 min while mixing so that a first individual mixture comprising lignocellulosic particles and a binder is obtained.

### Surface layers for M17 and M19:

6.66 g of Hydrowax 138 (60 wt.-% paraffin in water) and 27.0 g of water was sprayed within 1 min to 813 g (800 g dry weight) of a first type of lignocellulosic particles, i.e. industrial surface layer chips (moisture content 1.6 %), while mixing in a paddle mixer. Subsequently, a mixture of 96.0 g of the respective binder (with a solid content of all binder components present for hardening via esterification of 50 wt.-%) and 8.80 g of urea was sprayed to this mixture within 1 min while mixing so that a first individual mixture comprising lignocellulosic particles and a binder is obtained.

The pH values of the respective binders (including urea for M17 and M19) were determined (according to the measuring methods described above).

### Core layer ("CL", second individual mixture):

### Core layers for M16* and M18*:

8.00 g of Hydrowax 138 (60 wt.-% paraffin in water) and 24.0 g of water was sprayed within 1 min to 983 g (960 g dry weight) of a first type of lignocellulosic particles, i.e. industrial core layer chips (moisture content 2.4 %), while mixing in a paddle mixer.

Subsequently, 115 g of the respective binder (with a solid content of all binder components present for hardening via esterification of 50 wt.-%) was sprayed to this mixture within 1 min while mixing so that a first individual mixture comprising lignocellulosic particles and a binder is obtained.

### Core layers for M 17 and M19:

8.00 g of Hydrowax 138 (60 wt.-% paraffin in water) and 25.2 g of water was sprayed within 1 min to 983 g (960 g dry weight) of a first type of lignocellulosic particles, i.e. industrial core layer chips (moisture content 2.4 %), while mixing in a paddle mixer. Subsequently, a mixture of 115 g of the respective binder (with a solid content of all binder components present for hardening via esterification of 50 wt.-%) and 10.6 g of urea was sprayed to this mixture within 1 min while mixing so that a first individual mixture comprising lignocellulosic particles and a binder is obtained.

The pH values of the respective binders (including urea for M17 and M19) were determined (according to the measuring methods described above).

### 7.2.b Preparing three layers by scattering individual layers on top of each other, each layer comprising lignocellulosic particles and a binder:

269 g of the first individual mixture for the surface layers, followed by 1043 g of the second individual mixture for the core layer, followed by 269 g of the first individual mixture for the surface layers, were scattered into a 320 mm x 380 mm mold to give a three-layered pre-composite.

### 7.2.c Compacting the mixtures/layers so that the mixtures/layers are pre-compacted to give a pre-compacted mat:

The three-layered pre-composite obtained after 7.2.b is pre-pressed under ambient conditions and a pressure of 1.2 N/mm² to give a three-layered pre-pressed chip mat (compacted mixture).

### 7.2.d Applying a high-frequency electrical field to the mixture after compacting, so that the binder hardens via esterification and binds the lignocellulosic particles, so that a multilayer lignocellulosic composite results (HF pressing method):

Subsequently, the three-layered pre-pressed chip mat thus obtained was removed from the mold and pressed to a multilayer board either by applying a high-frequency electrical field (HF pressing). For monitoring of the temperature in the center of said (compacted) mixture, i.e. in the approximate middle of the mat, a temperature sensor was introduced into the center of said mat, respectively into a horizontal hole in the center of the core. Nonwoven separators were then provided to the upper and lower side of the three-layered pre-pressed chip mat. The three-layered pre-pressed chip mat was inserted in a HLOP 170 press from Hoefer Presstechnik GmbH, whereby birch plywood boards (thickness 6 mm) were placed between the nonwoven separator and the press plate on each side of the mat. The three-layered pre-pressed chip mat was then compacted to 19 mm thickness in the press within a period of 2 s, and then heated by applying a high-frequency electrical field (27.12 MHz) while the press was remaining closed. When 160 °C was reached in the center, the press was opened.

*7.2.e* After 3 d at ambient conditions the resulting three-layered chipboards (multilayer lignocellulosic composites) were sanded. 0.20 mm were sanded off on both the top and bottom side of the three-layered chipboards. After conditioning (at 65% humidity and 20° C) to constant mass. The thickness, the density, the internal bond strength, the formaldehyde emission and the 24 h swelling of the three-layered chipboards were determined according to measuring methods described above.

**Table 4** shows the respective binder composition and esterification binder amount (ratio of the weight of the solid content of all binder components present for hardening via esterification to the weight of the lignocellulosic particles in an oven-dry state) used for the core layer (CL) and the surface layers (SL), the respective amount of urea (ratio of the weight of urea to the weight of the lignocellulosic particles in an oven-dry state) used for the core layer (CL) and the surface layers (SL), the pH value of the binder, the density, the internal bond strength, the 24 h swelling and the FA emission of the resulting 19 mm three-layered chipboards No. M16 to M19. Boards No. M16 and M18 are comparative examples (no urea).

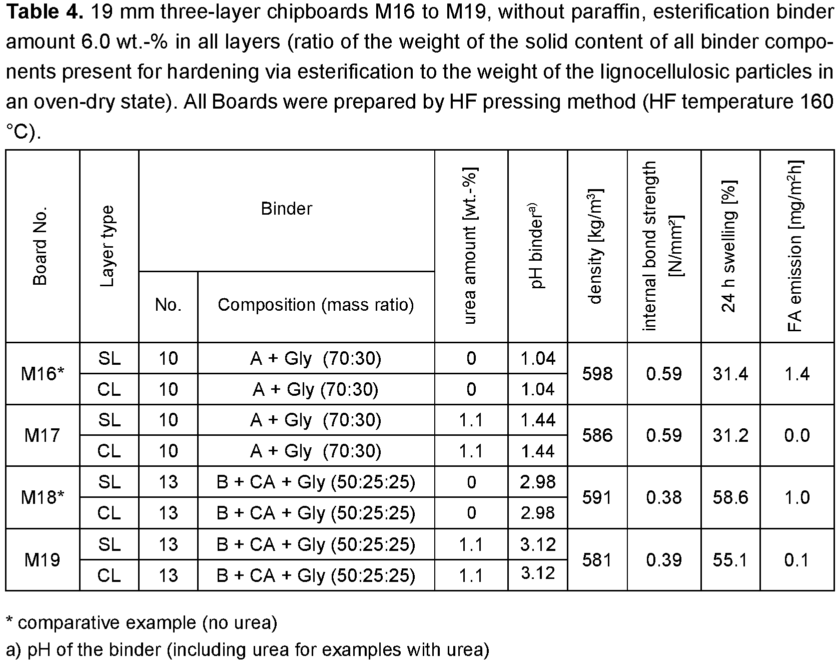

The results show that a multilayer lignocellulosic composite was prepared according to a process of the present invention, wherein the lignocellulosic composite is a 19 mm three-layer chipboard (Boards No. M17 and M19).

Boards No. M17 and M19 were produced by process steps S1, S2) and S3, i.e. by providing or preparing a mixture at least comprising lignocellulosic particles and a binder; by compacting the mixture; and by applying a high-frequency electrical field to the mixture during and/or after compacting, so that the binder hardens via esterification and binds the lignocellulosic particles, so that a multilayer lignocellulosic composite results.

Boards No. M17 and M19 were prepared from a binder comprising as components b1) one, two or more polymers comprising multiple carboxyl groups, b2) for crosslinking said polymers via esterification, one, two or more polymer or monomer compounds having two or more hydroxy groups, and b3) urea.

Board M19 was prepared from a binder comprising citric acid as component b4) one or more non-polymeric, preferably non-polymeric biobased, compounds having two or more carboxyl groups and/or one or more non-polymeric, preferably non-polymeric biobased, compounds having at least one carboxyl group and at least one hydroxy group.

The results show that lignocellulosic composites (Boards No. M17 and M19), which were prepared according to a process of the present invention and with a binder according to the present invention, show a formaldehyde emission, determined according to EN ISO 12460-3:2020, during and/or after the production of the multilayer lignocellulosic composite of as low as 0.0 or 0.1 mg/m²h.

The results thus show that in the mixture provided or prepared in step S1) of the process, the presence of urea (as component b3) of the binder) in a total amount of 1.1 mass-% relative to the total mass of the lignocellulosic particles in an oven-dry state of the mixture, suffices to minimize the formaldehyde emission, determined according to EN ISO 12460-3:2020, to a value of as low as 0.0 or 0.1 mg/m²h (cf. "urea amount" in Boards No. M17 and M19).

The resulting multilayer lignocellulosic composites (Boards No. M17 and M19), which were prepared according to a process of the present invention and with a binder according to the present invention, feature a thickness swelling after 24 hours in water at 20 °C, determined according to DIN EN 317:1993-08, of less than 60 %; and an internal bond strength, determined according to DIN EN 319:1993-08, of at least 0.39 N/mm².

Comparative examples Boards No. M16* and M18* (with no component b3), urea, in the binder) featuring a formaldehyde emission, determined according to EN ISO 12460-3:2020, during and/or after the production of the single-layer lignocellulosic composite, of as high as 1.0 or 1.4 mg/m²h show that the presence of binder component b3), urea, is advantageous for reducing the formaldehyde emission.

## Claims

1. Process of producing a multilayer lignocellulosic composite comprising two, three or more lignocellulosic composite layers or a single-layer lignocellulosic composite, and comprising at least the following steps:
S1) providing or preparing a mixture at least comprising
- lignocellulosic particles,
and
- a binder comprising as components at least
b1) one, two or more polymers comprising multiple carboxyl groups,
b2) for crosslinking said polymers via esterification, one, two or more polymer or monomer compounds having two or more hydroxy groups,
and
b3) urea,
S2) compacting the mixture,
S3) applying a high-frequency electrical field to the mixture during and/or after compacting, so that the binder hardens via esterification and binds the lignocellulosic particles, so that a single-layer lignocellulosic composite or a layer of a multilayer lignocellulosic composite results.

2. Process according to claim 1, wherein the one or at least one of the two or more polymer or monomer compounds having two or more hydroxy groups of component b2) is selected from the group consisting of
▪ carbohydrates, preferably selected from the group consisting of monosaccharides, disaccharides, oligosaccharides, polysaccharides and starch, more preferably selected from the group consisting of dextrose, fructose, saccharose, non-hydrolyzed starch; hydrolyzed starch and partially hydrolyzed starch, the latter preferably comprising maltodextrin and/or corn sirup, more preferably selected from the group consisting of maltodextrin and corn sirup;
▪ polyvinylalcohol, glycerol and sugar alcohols, the latter preferably selected from the group consisting of mannitol, sorbitol, xylitol, lactitol, isomalt, maltitol, erythritol and hydrogenated starch hydrolysates;
preferably glycerol;
and
▪ compounds selected from the group consisting of triols, preferably triethanolamine; tetrols, pentols and hexols, wherein the selected compounds are not carbohydrates, not sugar alcohols, and not alkylamines.

3. Process according to any of the preceding claims, wherein the binder comprises as an additional binder component, preferably for hardening the binder via esterification:
b4) one or more non-polymeric, preferably non-polymeric biobased, compounds having two or more carboxyl groups and/or one or more non-polymeric, preferably non-polymeric biobased, compounds having at least one carboxyl group and at least one hydroxy group,
wherein preferably
- the one non-polymeric, preferably non-polymeric biobased, compound having two or more carboxyl groups or at least one of the more than one non-polymeric, preferably non-polymeric biobased, compounds having two or more carboxyl groups is selected from the group consisting of hydroxy carboxylic acids, preferably is selected from the group consisting of alpha-hydroxy carboxylic acids, more preferably is selected from the group consisting of citric acid, malic acid and tartaric acid, and most preferably is citric acid;
and/or
- the one non-polymeric, preferably non-polymeric biobased, compound having at least one carboxyl group and at least one hydroxy group or at least one of the more than one non-polymeric, preferably non-polymeric biobased, compounds having at least one carboxyl group and at least one hydroxy group is selected from the group consisting of monohydroxy-monocarboxylic acids, preferably is selected from the group consisting of alpha-hydroxy monohydroxy-monocarboxylic acids, more preferably is selected from the group consisting of lactic acid, glycolic acid, and mandelic acid, and most preferably is lactic acid.

4. Process according to any of the preceding claims, wherein
- the one or at least one of the two or more polymer or monomer compounds having two or more hydroxy groups of component b2) is a biobased polymer or biobased monomer compound having two or more hydroxy groups,
and/or
- the total amount of said one, two or more polymer or monomer compounds, preferably the total amount of said one, two or more biobased polymer or biobased monomer compounds, of component b2) is above 5 mass-%, more preferably above 10 mass-%, and even more preferably above 15 mass-%, and is below 90 mass-%, more preferably below 80 mass-%, and even more preferably below 60 mass-% relative to the combined total masses of binder components b1), b2) and any present component b4).

5. Process according to any of the preceding claims, wherein the one or at least one of the two or more polymers comprising multiple carboxyl groups of component b1) is selected from the group consisting of:
- polymers of one or more unsaturated carboxylic acids, preferably acrylic acid, and mixtures thereof, preferably co-polymers of acrylic acid and more preferably copolymers of acrylic acid and maleic anhydride and/or maleic acid;
and
- biobased polyesters having two or more carboxyl groups, wherein preferably one, two or more of said, preferably biobased, polyesters are prepared by reacting:
▪ one or more alpha-hydroxy carboxylic acids, preferably citric acid,
and
▪ one, two or more compounds selected from the group consisting of:
• carbohydrates, preferably selected from the group consisting of monosaccharides, disaccharides, oligosaccharides, polysaccharides and starch, more preferably selected from the group consisting of dextrose, fructose, saccharose, non-hydrolyzed starch, hydrolyzed starch and partially hydrolyzed starch, the latter preferably comprising maltodextrin and/or corn sirup, more preferably selected from the group consisting of maltodextrin and corn sirup;
• sugar alcohols, preferably selected from the group consisting of mannitol, sorbitol, xylitol, lactitol, isomalt, maltitol, erythritol, hydrogenated starch hydrolysates and glycerol, more preferably glycerol, and
• compounds selected from the group consisting of triols, preferably triethanolamine; tetrols, pentols and hexols, wherein the compounds are not carbohydrates, not sugar alcohols, and not alkylamines,
preferably glycerol.

6. Process according to any of the preceding claims, wherein the binder as components at least comprises
(b1) one, two or more polymers comprising multiple carboxyl groups, selected from the group consisting of polymers of one or more unsaturated carboxylic acid, preferably acrylic acid, and mixtures thereof, preferably copolymers of acrylic acid and more preferably copolymers of acrylic acid and maleic anhydride and/or maleic acid,
and
(b2) for crosslinking said polymers via esterification, one, two or more polymer or monomer compounds having two or more hydroxy groups, wherein at least glycerol is present,
wherein the ratio of the total mass of said polymers of component (b1) to the total mass of glycerol present is in the range of from 80:20 to 50:50,
and wherein preferably the binder comprises as an additional binder component, preferably for hardening the binder via esterification, component b4) as defined in claim 3,
wherein preferably the total amount of said additional binder component b4) is 30 mass-% or lower, more preferably is in the range of from 5 mass-% to 30 mass-%, relative to the combined total masses of binder components b1), b2) and component b4).

7. Process according to any of the preceding claims, wherein
- the binder in step S1) of the process comprises water and has a pH in the range of from 1.0 to 3.5, preferably in the range of from 1.0 to 3.0, more preferably of from 1.0 to 2.5,
and/or
- an aqueous extract prepared according to the extraction process defined in the description from the mixture prepared or provided in step S1) of the process has a pH in the range of from 1.0 to 6.0, preferably in the range of from 2.0 to 5.0, more preferably of from 2.5 to 4.5.

8. Process according to any of the preceding claims, wherein
- component b3) of the binder, urea, is present in a total amount in the range of from ≥ 5 to ≤ 50 mass-%, preferably of from ≥ 10 to ≤ 35 mass-% and more preferably of from ≥ 15 to ≤ 35 mass-%, relative to the combined total masses of components b1), b2) and any present component b4) of the binder,
and/or
- in the mixture provided or prepared in step S1) of the process, component b3) of the binder, urea, is present in a total amount in the range of from ≥ 0.25 to ≤ 2.5 mass-%, preferably of from ≥ 0.5 to ≤ 1.75 mass-% and more preferably of from ≥ 0.75 to ≤ 1.75 mass-%, relative to the total mass of the lignocellulosic particles in an oven-dry state of the mixture,
and/or
- in the mixture provided or prepared in step S1) of the process, the total combined amounts of component b1), b2) and any present component b4) is in the range of from 3 to 8 mass-%, preferably of from 3.5 to 7.5 mass-%, and more preferably of from 4 to 6.5 mass-%, relative to the total mass of the lignocellulosic particles in an oven-dry state of the mixture.

9. Process according to any of the preceding claims, wherein the process of producing a multilayer lignocellulosic composite comprising two, three or more lignocellulosic composite layers or a single-layer lignocellulosic composite comprises one, two, three, more than three, or all of the following steps, which are preferably conducted semi-continuously or continuously:
- in step S1) for preparing said mixture blending said lignocellulosic particles with one or more or all components of the binder or spraying one or more or all components of the binder onto said lignocellulosic particles, wherein before blending or spraying said components of the binder are pre-mixed or not pre-mixed,
- preparing, preferably preparing by scattering, a layer of the mixture provided or prepared in step S1), and in step S2) compacting this layer,
- for preparing a multilayer lignocellulosic composite comprising more than one lignocellulosic composite layer, providing or preparing at least a first and a second individual mixture, and using said first and second individual mixtures for making a first and a second layer of the multilayer lignocellulosic composite, wherein the first and the second layer preferably are in contact with each other, and/or wherein the first and the second individual mixture have the same or a different composition,
- for preparing a multilayer lignocellulosic composite comprising more than one lignocellulosic composite layer, preparing two or more layers, preferably preparing two or more layers by scattering individual layers on top of each other, each layer comprising lignocellulosic particles and a binder, wherein in the two or more layers the lignocellulosic particles and/or the binders are the same or different,
- in step S2) compacting the mixture in two stages, wherein in the first stage the mixture is pre-compacted to give a pre-compacted mat, and wherein in the second stage this pre-compacted mat is further compacted,
- during or after compacting in step S2), hot pressing the mixture,
- during or after applying a high-frequency electrical field in step S3), hot pressing the mixture,
and
- applying in step S3) a high-frequency electrical field monitoring and/or controlling the temperature at the center of said mixture.

10. Binder composition for producing a lignocellulosic composite, preferably as defined in claims 1 to 9, comprising as components at least:
b1) one, two or more polymers comprising multiple carboxyl groups,
b2) one, two or more polymer or monomer compounds having two or more hydroxy groups,
and
b3) urea.

11. Binder composition according to claim 10, wherein the one or at least one of the two or more polymer or monomer compounds having two or more hydroxy groups of component b2) is selected from the group consisting of
▪ carbohydrates, preferably selected from the group consisting of monosaccharides, disaccharides, oligosaccharides, polysaccharides and starch, more preferably selected from the group consisting of dextrose, fructose, saccharose, non-hydrolyzed starch, hydrolyzed starch and partially hydrolyzed starch, the latter preferably comprising maltodextrin and/or corn sirup, more preferably selected from the group consisting of maltodextrin and corn sirup;
▪ glycerol, polyvinylalcohol and sugar alcohols, the latter preferably selected from the group consisting of mannitol, sorbitol, xylitol, lactitol, isomalt, maltitol, erythritol and hydrogenated starch hydrolysates; preferably glycerol;
and
▪ compounds selected from the group consisting of triols, preferably triethanolamine; tetrols, pentols and hexols, wherein the selected compounds are not carbohydrates, not sugar alcohols, and not alkylamines.

12. Binder composition according to any of claims 10 to 11, wherein
- the binder composition comprises water and has a pH in the range of from 1.0 to 3.5, preferably in the range of from 1.0 to 3.0, more preferably of from 1.0 to 2.5;
and/or
- the binder composition comprises as an additional binder component:
b4) one or more non-polymeric compounds having two or more carboxyl groups and/or one or more non-polymeric compounds having at least one carboxyl group and at least one hydroxy group, as defined in claim 3;
and/or
- component b3) of the binder, urea, is present in a total amount in the range of from ≥ 5 to ≤ 50 mass-%, preferably of from ≥ 10 to ≤ 35 mass-% and more preferably of from ≥ 15 to ≤ 35 mass-%, relative to the combined total masses of components b1), b2) and any present component b4) of the binder.

13. Single-layer or multilayer lignocellulosic composite, obtainable or obtained according to a process as defined in any of claims 1 to 9, or construction product comprising such single-layer or multilayer lignocellulosic composite.

14. Use of a lignocellulosic composite as defined in claim 13, as a building element in a construction product, preferably as a building element in furniture or parts of furniture, more preferably as a building element in a hollow construction in furniture or parts of furniture.

15. Kit for producing a binder composition for use in the production of a lignocellulosic composite, comprising as individual components at least:
b1) one, two or more polymers comprising multiple carboxyl groups, as defined in any of claims 1, 5 or 6,
b2) for crosslinking said polymers via esterification, one, two or more polymer or monomer compounds having two or more hydroxy groups, as defined in any of claims 1, 2 or 6,
and
b3) urea,
and preferably further comprising as an additional binder component:
b4) one or more non-polymeric, preferably non-polymeric biobased, compounds having two or more carboxyl groups and/or one or more non-polymeric, preferably non-polymeric biobased, compounds having at least one carboxyl group and at least one hydroxy group,
wherein at least one, two or more individual component(s) of the individual components b1), b2), b3), and optionally b4) of the kit is/are spatially separated from the other individual components.

## Patentansprüche

1. Verfahren zur Herstellung eines mehrschichtigen lignocellulosenen Verbundes, der aus zwei, drei oder mehr lignocellulosenen Verbundschichten oder einem einschichtigen lignocelluloseschen Verbund besteht und mindestens die folgenden Schritte umfasst:
S1) Eine Mischung, die mindestens aus besteht besteht oder zubereitet
- lignocellulosesche Teilchen,
und
- ein Bindemittel, das mindestens als Komponenten besteht
b1) eine, zwei oder mehrere Polymere, die aus mehreren Carboxylgruppen bestehen,
b2) Für das Vernetzen dieser Polymere durch Veresterung ein, zwei oder mehr Polymer- oder Monomerverbindungen mit zwei oder mehr Hydroxygruppen,
und
b3) Harnstoff,
S2) Verdichtung des Gemischs,
S3) Anlegen eines hochfrequenten elektrischen Feldes auf das Gemisch während und/oder nach der Verdichtung, sodass der Bindestoff durch Veresterung aushärtet und die lignocellulosehaltigen Partikel bindet, sodass ein einschichtiger lignocelluloserischer Verbundstoff oder eine Schicht eines mehrschichtigen lignocellulosereichen Verbundes entsteht.

2. Prozess gemäß Anspruch 1, bei dem eine oder mindestens eine der zwei oder mehr Polymer- oder Monomerverbindungen mit zwei oder mehr Hydroxygruppen der Komponente b2 aus der Gruppe ausgewählt wird, die aus
▪ Kohlenhydrate, vorzugsweise ausgewählt aus der Gruppe aus Monosacchariden, Disacchariden, Oligosacchariden, Polysacchariden und Stärke, vorzugsweise ausgewählt aus der Gruppe aus Dextrose, Fruktose, Saccharose, nicht hydrolysierter Stärke; hydrolysierte Stärke und teilweise hydrolysierte Stärke, wobei letztere vorzugsweise aus Maltodextrin und/oder Maissirup besteht, vorzugsweise aus der Gruppe aus Maltodextrin und Maissirup ausgewählt;
▪ Polyvinylalkohol, Glycerol und Zuckeralkohole, wobei letztere vorzugsweise aus der Gruppe ausgewählt werden, die aus Mannitol, Sorbitol, Xylitol, Laktitol, Isomalt, Maltitol, Erythritol und gehärteten Stärkehydrolysaten besteht;
vorzugsweise Glycerol;
und
▪ Verbindungen aus der Gruppe ausgewählt, die aus Triolen besteht, vorzugsweise Triethanolamin; Tetrole, Pentole und Hexole, wobei die ausgewählten Verbindungen keine Kohlenhydrate, keine Zuckeralkohole und keine Alkylamine sind.

3. Prozess gemäß einer der vorangegangenen Ansprüche, wobei das Bindemittel als zusätzliche Bindemittelkomponente besteht, vorzugsweise zum Härten des Bindemittels durch Veresterung:
b4) Eine oder mehrere nicht-polymere, vorzugsweise nicht-polymere biobasierte Verbindungen mit zwei oder mehr Carboxylgruppen und/oder einer oder mehreren nicht-polymeren, vorzugsweise nicht-polymeren biobasierten Verbindungen mit mindestens einer Carboxylgruppe und mindestens einer Hydroxygruppe,
wobei vorzugsweise
- Die eine nicht-polymere, vorzugsweise nicht-polymere biobasierte Verbindung mit zwei oder mehr Carboxylgruppen oder mindestens eine der mehreren nicht-polymeren, vorzugsweise nichtpolymeren biobasierten Verbindungen mit zwei oder mehr Carboxylgruppen wird aus der Gruppe ausgewählt, die aus Hydroxy-Carbonsäuren besteht, vorzugsweise aus der Gruppe mit Alpha-Hydroxy-Carboxylsäuren, vorzugsweise aus der Gruppe mit Alpha-Hydroxy-Carboxylsäuren, vorzugsweise aus der Gruppe mit Zitronensäure, Apfelsäure und Weinsäure, am besten ist Zitronensäure;
und/oder
- Die eine nicht-polymere, vorzugsweise nicht-polymere biobasierte Verbindung mit mindestens einer Carboxylgruppe und mindestens einer Hydroxygruppe oder mindestens einer der mehreren nicht-polymeren, vorzugsweise nicht-polymeren biobasierten Verbindungen mit mindestens einer Carboxylgruppe und mindestens einer Hydroxygruppe, wird aus der Gruppe ausgewählt, die aus Monohydroxy-Monocarbonsäuren besteht, vorzugsweise aus der Gruppe aus Alpha-Hydroxy-Monohydroxy-Monocarbonsäuren. Bevorzugter wird aus der Gruppe aus Milchsäure, Glykolsäure und Mandelsäure ausgewählt, am besten ist Milchsäure.

4. Verfahren gemäß einem der vorangegangenen Ansprüche, wobei
- Die eine oder mindestens eine der zwei oder mehr Polymer- oder Monomerverbindungen mit zwei oder mehr Hydroxygruppen der Komponente B2 ist ein biobasiertes Polymer oder eine biobasierte Monomerverbindung mit zwei oder mehr Hydroxygruppen,
und/oder
- Die Gesamtmenge dieser einen, zwei oder mehr Polymer- oder Monomerverbindungen, vorzugsweise die Gesamtmenge der genannten einen, zwei oder mehr biobasierten Polymere oder biobasierten Monomerverbindungen der Komponente B2, liegt über 5 Masse, vorzugsweise über 10 Masse, noch besser über 15 Masse, und unter 90 Masse, besser unter 80 Masse. und noch vorzugsweise unter 60 Massenprozent relativ zu den kombinierten Gesamtmassen der Bindemittelkomponenten B1), B2) und jeder vorhandenen Komponente B4).

5. Prozess gemäß einer der vorangegangenen Behauptungen, bei der das eine oder mindestens eines der zwei oder mehr Polymere, die mehrere Carboxylgruppen der Komponente b1 bilden, aus der Gruppe ausgewählt wird, bestehend aus:
- Polymere einer oder mehrerer ungesättigter Carbonsäuren, vorzugsweise Acrylsäure, und deren Mischungen, vorzugsweise Copolymere aus Acrylsäure und vorzugsweise Kopolymere aus Acrylsäure und Maleinsäure und/oder Malinsäure;
und
- Biobasierte Polyester mit zwei oder mehr Carboxylgruppen, wobei vorzugsweise ein, zwei oder mehr dieser vorzugsweise biobasierten Polyester durch Reaktion hergestellt werden:
▪ eine oder mehrere Alpha-Hydroxy-Carbonsäuren, vorzugsweise Zitronensäure,
und
▪ eine, zwei oder mehr Verbindungen ausgewählt aus der Gruppe, bestehend aus:
• Kohlenhydrate, vorzugsweise ausgewählt aus der Gruppe aus Monosacchariden, Disacchariden, Oligosacchariden, Polysacchariden und Stärke, vorzugsweise ausgewählt aus der Gruppe aus Dextrose, Fruktose, Saccharose, nicht hydrolysierter Stärke, hydrolysierter Stärke und teilweise hydrolysierter Stärke, wobei letztere vorzugsweise aus Maltodextrin und/oder Maissirup bestehen, vorzugsweise aus der Gruppe mit Maltodextrin und Maissirup ausgewählt;
• Zuckeralkohole, vorzugsweise ausgewählt aus der Gruppe aus Mannitol, Sorbitol, Xylitol, Lactitol, Isomalt, Maltitol, Erythritol, gehärteten Stärkehydrolysaten und Glycerol, vorzugsweise Glycerol, und
• Verbindungen aus der Gruppe ausgewählt, die aus Triolen besteht, vorzugsweise Triethanolamin; Tetrole, Pentole und Hexole, wobei die Verbindungen keine Kohlenhydrate, keine Zuckeralkohole und keine Alkylamine sind,
Am besten Glycerol.

6. Prozess gemäß einer der vorangegangenen Ansprüche, wobei das Bindemittel als Bestandteil mindestens aus Bestandteilen besteht
(b1) eine, zwei oder mehrere Polymere bestehen aus mehreren Carboxylgruppen, ausgewählt aus der Gruppe aus Polymeren einer oder mehrerer ungesättigter Carbonsäure, vorzugsweise Acrylsäure, und deren Mischungen, vorzugsweise Kopolymeren aus Acrylsäure und vorzugsweise Kopolymeren aus Acrylsäure, Malinsäure und/oder Malinsäure,
und
(b2) zum Vernetzen dieser Polymere durch Veresterung ein, zwei oder mehr Polymer- oder Monomerverbindungen mit zwei oder mehr Hydroxygruppen, wobei mindestens Glycerol vorhanden ist,
wobei das Verhältnis der Gesamtmasse der genannten Polymere der Komponente (B1) zur Gesamtmasse des vorhandenen Glycerols im Bereich von 80:20 bis 50:50 liegt,
und wobei vorzugsweise der Bindestoff als zusätzliche Bindemittelkomponente, vorzugsweise zum Härten des Bindemittels durch Veresterung, Bauteil B4) wie in Anspruch 3 definiert, umfasst,
wobei vorzugsweise die Gesamtmenge der genannten zusätzlichen Bindemittelkomponente b4) 30 Massenprozent oder weniger beträgt, vorzugsweise im Bereich von 5 Massenprozent bis 30 Massenprozent relativ zu den kombinierten Gesamtmassen der Bindemittelkomponenten b1), b2) und der Komponente b4).

7. Verfahren gemäß einem der vorangegangenen Ansprüche, wobei
- das Bindemittel in Schritt S1) des Prozesses besteht aus Wasser und hat einen pH-Wert im Bereich von 1,0 bis 3,5, vorzugsweise im Bereich von 1,0 bis 3,0, vorzugsweise von 1,0 bis 2,5.
und/oder
- ein wässriger Extrakt, der gemäß dem in der Beschreibung beschriebenen Extraktionsprozess aus der in Schritt S1 hergestellten Mischung zubereitet wird, hat einen pH-Wert im Bereich von 1,0 bis 6,0, vorzugsweise im Bereich von 2,0 bis 5,0, vorzugsweise von 2,5 bis 4,5.

8. Verfahren gemäß einem der vorangegangenen Ansprüche, wobei
- Komponente B3) des Bindemittels, Harnstoff, ist in einer Gesamtmenge im Bereich von ≥ 5 bis ≤ 50 Massenprozent vorhanden, vorzugsweise von ≥ 10 bis ≤ 35 Massenprozent und mehr, vorzugsweise von ≥ 15 bis ≤ 35 Massenprozent, relativ zu den kombinierten Gesamtmassen der Komponenten b1), b2) und jeder vorhandenen Komponente b4) des Bindemittels,
und/oder
- in der in Schritt S1) des Prozesses bereitgestellten oder hergestellten Mischung ist die Komponente b3) des Bindemittels, Harnstoff, in einer Gesamtmenge im Bereich von ≥ 0,25 bis ≤ 2,5 Massenprozent vorhanden, vorzugsweise von ≥ 0,5 bis ≤ 1,75 Massenprozent und mehr, vorzuzugsweise von ≥ 0,75 bis ≤ 1,75 Massenprozent relativ zur Gesamtmasse der lignocellulosehaltigen Partikel im ofentrockenen Zustand der Mischung,
und/oder
- in der im Schritt S1) bereitgestellten oder hergestellten Mischung des Prozesses liegen die Gesamtmengen der Komponente b1), b2) und jeder vorhandenen Komponente b4) im Bereich von 3 bis 8 Massenprozent, vorzugsweise zwischen 3,5 und 7,5 Masseprozent und vorzugsweise zwischen 4 und 6,5 Massenprozent im Verhältnis zur Gesamtmasse der lignocellulosereichen Partikel im ofentrockenen Zustand der Mischung.

9. Der Prozess gemäß einer der vorangegangenen Ansprüche, bei dem der Prozess zur Herstellung eines mehrschichtigen lignocellulosereichen Kompositen, der aus zwei, drei oder mehr lignocellulosereichen Kompositschichten oder einem einschichtigen lignocellulosereichen Komposit besteht, einen, zwei, drei, mehr als drei oder alle folgenden Schritte umfasst, die vorzugsweise halbkontinuierlich oder kontinuierlich durchgeführt werden:
- in Schritt S1) zur Herstellung der genannten Mischung durch das Vermischen der genannten lignocellulosehaltigen Partikel mit einem oder mehreren oder allen Komponenten des Bindemittels oder dem Sprühen eines oder mehrerer oder alle Komponenten des Bindemittels auf diese lignocellulosehaltigen Partikel, wobei vor dem Mischen oder Sprühen der genannten Komponenten des Bindemittels vorgemischt oder nicht vorgemischt sind,
- wobei eine Schicht der in Schritt S1 bereitgestellten oder vorbereiteten Mischung vorbereitet wird, vorzugsweise durch Streuung, und in Schritt S2) Verdichtung dieser Schicht,
- zur Herstellung eines mehrschichtigen lignocellulosereichen Komposits, der aus mehr als einer lignocellulosehaltigen Kompositschicht besteht, wobei mindestens eine erste und eine zweite individuelle Mischung bereitgestellt oder hergestellt werden und diese ersten und zweiten Einzelmischungen zur Herstellung einer ersten und zweiten Schicht des mehrschichtigen lignocellulosehaltigen Verbundes verwendet werden, wobei die erste und zweite Schicht vorzugsweise miteinander in Kontakt stehen, und/oder wobei die erste und die zweite einzelne Mischung dieselbe oder eine andere Zusammensetzung haben,
- Für die Herstellung eines mehrschichtigen lignocelluloseschen Verbundwerks, der aus mehr als einer lignocellulosehaltigen Zusammensatzschicht besteht, die Herstellung von zwei oder mehr Schichten, vorzugsweise zwei oder mehr Schichten, indem einzelne Schichten übereinander gestreut werden, wobei jede Schicht aus lignocellulosehaltigen Partikeln und einem Bindemittel besteht, wobei in den zwei oder mehr Schichten die lignocellulosehaltigen Partikel und/oder die Bindemittel gleich oder unterschiedlich sind,
- in Schritt S2) das Gemisch in zwei Stufen verdichtet, wobei in der ersten Stufe das Gemisch vorkomprimiert wird, um eine vorkomprimierte Matte zu erhalten, und in der zweiten Stufe wird diese vorkomprimierte Matte weiter verdichtet,
- während oder nach dem Verdichten in Schritt S2), wobei die Mischung heiß gepresst wird,
- während oder nach dem Anlegen eines hochfrequenten elektrischen Feldes in Schritt S3), wobei das Gemisch heißgepresst wird,
und
- wobei in Schritt S3) ein hochfrequentes elektrisches Feld überwacht und/oder die Temperatur im Zentrum des Gemisches gesteuert wird.

10. Binderkomposition für die Herstellung eines lignocellulosereichen Verbundwerks, vorzugsweise wie in den Forderungen 1 bis 9 definiert, bestehend als Komponenten zumindest:
b1) eine, zwei oder mehrere Polymere, die aus mehreren Carboxylgruppen bestehen,
b2) eine, zwei oder mehr Polymer- oder Monomerverbindungen mit zwei oder mehr Hydroxygruppen,
und
b3) Harnstoff.

11. Binderzusammenstellung gemäß Anspruch 10, wobei die eine oder mindestens eine der zwei oder mehr Polymer- oder Monomerverbindungen mit zwei oder mehr Hydroxygruppen der Komponente B² aus der Gruppe ausgewählt wird, bestehend aus
▪ Kohlenhydrate, vorzugsweise ausgewählt aus der Gruppe aus Monosacchariden, Disacchariden, Oligosacchariden, Polysacchariden und Stärke, vorzugsweise ausgewählt aus der Gruppe aus Dextrose, Fruktose, Saccharose, nicht hydrolysierter Stärke, hydrolysierter Stärke und teilweise hydrolysierter Stärke, wobei letztere vorzugsweise aus Maltodextrin und/oder Maissirup bestehen, vorzugsweise aus der Gruppe mit Maltodextrin und Maissirup ausgewählt;
▪ Glycerol, Polyvinylalkohol und Zuckeralkohole, wobei letztere vorzugsweise aus der Gruppe aus Mannitol, Sorbitol, Xylitol, Lactitol, Isomalt, Maltitol, Erythritol und gehärteten Stärkehydrolysaten ausgewählt werden; vorzugsweise Glycerol;
und
▪ Verbindungen aus der Gruppe ausgewählt, die aus Triolen besteht, vorzugsweise Triethanolamin; Tetrole, Pentole und Hexole, wobei die ausgewählten Verbindungen keine Kohlenhydrate, keine Zuckeralkohole und keine Alkylamine sind.

12. Binderzusammensetzung gemäß einem der Ansprüche 10 bis 11, wobei
- die Bindemittelzusammensetzung besteht aus Wasser und hat einen pH-Wert im Bereich von 1,0 bis 3,5, vorzugsweise im Bereich von 1,0 bis 3,0, vorzugsweise von 1,0 bis 2,5;
und/oder
- Die Bindemittelzusammensetzung besteht als zusätzliche Bindemittelkomponente: b4) eine oder mehrere nicht-polymere Verbindungen mit zwei oder mehr Carboxylgruppen und/oder eine oder mehrere nicht-polymere Verbindungen mit mindestens einer Carboxylgruppe und mindestens einer Hydroxygruppe, wie in Anspruch 3 definiert;
und/oder
- Bestandteil B3) des Bindestoffs, Harnstoff, ist in einer Gesamtmenge im Bereich von ≥ 5 bis ≤ 50 % vorhanden, vorzugsweise von ≥ 10 bis ≤ 35 Massenprozent und mehr, vorzuziehend von ≥ 15 bis ≤ 35 % Massenprozent relativ zu den kombinierten Gesamtmassen der Komponenten b1), b2) und jeder vorhandenen Komponente b4) des Binders.

13. Einschichtige oder mehrschichtige lignocellulosehaltige Verbundverbindung, die nach einem in jedem der Ansprüche 1 bis 9 definierten Prozess gewonnen oder gewonnen werden kann, oder ein Bauprodukt, das einen solchen einschichtigen oder mehrschichtigen lignocelluloseschen Verbundstoff umfasst.

14. Verwendung eines lignocelluloseschen Verbundwerks, wie in Anspruch 13 definiert, als Bauelement in einem Bauprodukt, vorzugsweise als Bauelement in Möbeln oder Möbelteilen, vorzugsweise als Bauelement in einer hohlen Konstruktion in Möbeln oder Möbelteilen.

15. Kit zur Herstellung einer Bindemittelzusammensetzung für die Herstellung eines lignocellulosehaltigen Verbundwerks, der als einzelne Komponenten mindestens besteht:
b1) ein, zwei oder mehr Polymere, die aus mehreren Carboxylgruppen bestehen, wie definiert in einem der Ansprüche 1, 5 oder 6,
b2) Für das Vernetzen dieser Polymere durch Veresterung werden eine, zwei oder mehr Polymer- oder Monomerverbindungen mit zwei oder mehr Hydroxygruppen definiert verwendet In einem der Ansprüche 1, 2 oder 6,
und
b3) Harnstoff,
und vorzugsweise als zusätzliche Bindemittelkomponente:
b4) Eine oder mehrere nicht-polymere, vorzugsweise nicht-polymere biobasierte Verbindungen mit zwei oder mehr Carboxylgruppen und/oder einer oder mehreren nicht-polymeren, vorzugsweise nicht-polymeren biobasierten Verbindungen mit mindestens einer Carboxylgruppe und mindestens einer Hydroxygruppe,
wobei mindestens ein, zwei oder mehr einzelne Komponenten der einzelnen Komponenten b1), b2), b3) und optional b4) des Bausatzes räumlich von den anderen einzelnen Komponenten getrennt sind.

## Revendications

1. Procédé de production d'un composite lignocellulolisique multicouche composé de deux, trois ou plus couches composites lignocellulosiques ou d'un composite lignocellulosique monocouche, comprenant au moins les étapes suivantes :
S1) fournir ou préparer un mélange comprenant au moins
- des particules lignocellulosiques,
et
- un liant composé d'au moins comme composants
b1) un, deux ou plusieurs polymères comprenant plusieurs groupes carboxyles,
b2) pour la réticulation de ces polymères par estérification, un, deux ou plus composés polymères ou monomères contenant deux groupes hydroxylés ou plus,
et
b3) urée,
S2) compactant le mélange,
S3) appliquer un champ électrique à haute fréquence au mélange pendant et/ou après le compactage, de sorte que le liant durcit par estérification et lie les particules lignocellulosiques, de sorte qu'un composite lignocellulosique à couche unique ou une couche d'un composite lignocellulosique multicouche obtient.

2. Procédé selon la revendication 1, dans lequel un ou au moins un des deux ou plusieurs composés polymères ou monomères possédant deux groupes hydrox-yliques ou plus de composant b2 est sélectionné parmi le groupe composé de
▪ les glucides, de préférence sélectionnés parmi le groupe composé de monosaccharides, disaccharides, oligosaccharides, polysaccharides et amidons, de préférence sélectionnés parmi le groupe composé de dextrose, fructose, saccharose, amidon non hydrolysé ; amidon hydrolysé et amidon partiellement hydrolysé, ce dernier étant de préférence composé de maltodextrine et/ou de sirop de maïs, plus préférablement sélectionnés parmi le groupe composé de maltodextrine et de sirop de maïs ;
▪ des alcools polyvinyliques, glycérol et alcools de sucre, ces derniers étant de préférence sélectionnés parmi le groupe composé de mannitol, sorbitol, xylitol, lactitol, isomalt, maltitol, érythritol et hydrolysats d'amidon hydrogéné ;
de préférence le glycérol ;
et
▪ des composés sélectionnés dans le groupe composé de triols, de préférence de triéthanolamine ; les tétrols, pentols et hexols, où les composés sélectionnés ne sont ni les glucides, ni les alcools de sucre, ni les alkylamines.

3. Procédé selon l'une des affirmations précédentes, où le liant constitue un composant supplémentaire du liant, de préférence pour le durcissement par estérification :
b4) un ou plusieurs composés non polymériques, de préférence bio-basés non polymériques, possédant deux groupes carboxyle ou plus et/ou un ou plusieurs composés non polymériques, de préférence bio-basés non polymériques, possédant au moins un groupe carboxyle et au moins un groupe hydroxy,
où de préférence
- Le composé non polymérique, de préférence bio-basé non polymérique, contenant deux groupes carboxyle ou au moins un des plus d'un composé non polymérique, de préférence bio-basé non polymérique, est sélectionné parmi le groupe composé d'acides hydroxy-carboxyliques ou plus, de préférence sélectionné parmi le groupe composé d'acides hydroxy-carboxyliques, de préférence sélectionné parmi le groupe composé d'acides carboxyliques alpha-hydroxylés, de préférence sélectionné parmi le groupe composé d'acides citriques, l'acide malique et l'acide tartrique, et de préférence l'acide citrique ;
et/ou
- Le composé non polymérique, de préférence bio-basé non polymérique, possédant au moins un groupe carboxyle et au moins un groupe hydroxy, ou au moins un des plus d'un composé non polymérique, de préférence bio-basé non polymérique, ayant au moins un groupe carboxyle et au moins un groupe hydroxy, est sélectionné parmi le groupe composé d'acides monohydroxy-monocarboxyliques ; de préférence il est sélectionné parmi le groupe composé d'acides alpha-hydroxy-monohydroxy-monocarboxyliques, Il est préférable de sélectionner parmi les groupes comprenant l'acide lactique, l'acide glycolique et l'acide mandélique, et le plus préférable est l'acide lactique.

4. Procédure selon l'une des revendications précédentes, dans laquelle
- L'un ou au moins un des deux composés polymères ou monomères possédant deux groupes hydroxylés ou plus de composant B2) est un polymère biobasé ou un composé monomère biobasé possédant deux groupes hydroxylés ou plus,
et/ou
- La quantité totale de ces un, deux ou plus composés polymères ou monomères, de préférence la quantité totale de ces un, deux ou plus composés polymères ou monomères biod'origine, de la composante B2, est supérieure à 5 %, de préférence au-dessus de 10 %, et encore plus largement au-dessus de 15 %, et est en dessous de 90 %, de préférence en dessous de 80 %. et encore de préférence inférieur à 60 % de masse par rapport à la masse totale combinée des composantes du liant b1), b2) et toute composante présente b4).

5. Procédé selon l'une des revendications précédentes, dans lequel un ou au moins un des deux polymères ou plus composés de plusieurs groupes carboxyles du composant b1 est sélectionné parmi le groupe composé de :
- des polymères d'un ou plusieurs acides carboxyliques insaturés, de préférence de l'acide acrylique, et des mélanges de ceux-ci, de préférence des copolymères d'acide acrylique et de préférence des copolymères d'acide acrylique et d'anhydride maléique et/ou d'acide maléique ;
et
- Les polyesters bio-d'origine possèdent deux groupes carboxyles ou plus, où de préférence un, deux ou plus de ces polyesters, de préférence bio-bases, sont préparés en réagissant :
▪ un ou plusieurs acides alpha-hydroxyliques carboxyliques, de préférence de l'acide citrique,
et
▪ un, deux ou plusieurs composés sélectionnés parmi le groupe composé de :
• les glucides, de préférence sélectionnés parmi le groupe composé de monosaccharides, disaccharides, oligosaccharides, polysaccharides et amidon, de préférence sélectionnés parmi le groupe composé de dextrose, fructose, saccharose, amidon non hydrolysé, amidon hydrolysé et amidon partiellement hydrolysé, ce dernier comprenant de préférence la maltodextrine et/ou le sirop de maïs, plus préférablement sélectionnés dans le groupe composé de maltodextrine et de sirop de maïs ;
• alcools de sucre, de préférence sélectionnés parmi le groupe composé de mannitol, sorbitol, xylitol, lactitol, isomalt, maltitol, érythritol, hydrolysats d'amidon hydrogéné et glycérol, de préférence glycérol, et
• des composés sélectionnés dans le groupe composé de triols, de préférence de triéthanolamine ; des tétrols, pentols et hexols, où les composés ne sont ni des glucides, ni des alcools de sucre, ni des alkylamines,
De préférence le glycérol.

6. Processus selon l'une des revendications précédentes, où le liant en tant que composants comprend au moins
(b1) un, deux ou plusieurs polymères comprenant plusieurs groupes carboxyles, sélectionnés parmi le groupe constitué de polymères d'un ou plusieurs acides carboxyliques insaturés, de préférence acide acrylique, et de leurs mélanges, de préférence des copolymères d'acide acrylique et plus de préférence des copolymères d'acide acrylique, d'anhydride maléique et/ou d'acide maléique,
et
(b2) pour la réticulation de ces polymères par estérification, un, deux ou plus composés polymères ou monomères comportant deux groupes hydroxy ou plus, où au moins le glycérol est présent,
où le rapport entre la masse totale des polymères desdits composant (b1) et la masse totale de glycérol présente est de 80:20 à 50:50,
et où de préférence le liant constitue comme composante supplémentaire du liant, de préférence pour le durcissement par estérification, la composante b4) telle que définie dans l'affirmation 3,
où de préférence la quantité totale de ce composant liant supplémentaire b4) est de 30 % de masse ou moins, de préférence dans la fourchette de 5 % de masse à 30 %, par rapport aux masses totales combinées des composants du liant b1), b2) et des composantes b4).

7. Procédure selon l'une des revendications précédentes, dans laquelle
- le liant de l'étape S1) du procédé est composé d'eau et a un pH compris entre 1,0 et 3,5, de préférence entre 1,0 et 3,0, de préférence entre 1,0 et 2,5,
et/ou
- un extrait aqueux préparé selon le procédé d'extraction défini dans la description du mélange préparé ou fourni à l'étape S1) du procédé a un pH compris entre 1,0 et 6,0, de préférence entre 2,0 et 5,0, de préférence entre 2,5 et 4,5.

8. Procédure selon l'une des revendications précédentes, dans laquelle
- La composante b3) du liant, l'urée, est présente en quantité totale allant de ≥ 5 à ≤ 50 %, de préférence de ≥ 10 à ≤ 35 % de masse, et de préférence de ≥ 15 à ≤ 35 %, par rapport aux masses totales combinées des composants b1), b2) et de toute composante présente b4) du liant,
et/ou
- dans le mélange fourni ou préparé à l'étape S1) du procédé, la composante b3) du liant, l'urée, est présente en quantité totale allant de ≥ 0,25 à ≤ 2,5 %, de préférence entre ≥ 0,5 et ≤ 1,75 % de masse, et plus encore de préférence de ≥ 0,75 à ≤ 1,75 % de masse par rapport à la masse totale des particules lignocellulosiques à l'état sec au four du mélange,
et/ou
- dans le mélange fourni ou préparé à l'étape S1) du procédé, les quantités combinées totales des composants b1), b2) et de tout composant présent b4) sont dans la plage de 3 à 8 en masse, de préférence entre 3,5 et 7,5 %, et de préférence entre 4 et 6,5 %, par rapport à la masse totale des particules lignocellulosiques à l'état sec au four du mélange.

9. Procédé selon l'une des revendications précédentes, dans lequel le processus de production d'un composite lignocellulosique multicouche comprenant deux, trois ou plusieurs couches composites lignocellulosiques ou un composite lignocellulocellulosique monocouche comprend une, deux, trois, plus de trois, voire toutes les étapes suivantes, qui sont de préférence menées de manière semi-continue ou continue :
- à l'étape S1) pour préparer ce mélange, mélanger ces particules lignocellulosiques avec un ou plusieurs ou tous les composants du liant ou pulvériser un ou plusieurs ou tous les composants du liant sur ces particules lignocellulosiques, où, avant le mélange ou la pulvérisation, ces composants du liant sont pré-mélangés ou non prémélangés,
- préparer, de préférence par diffusion, une couche du mélange fournie ou préparée à l'étape S1), et à l'étape S2) compacter cette couche,
- pour préparer un composite lignocellulosique multicouche comprenant plus d'une couche composite lignocellulosique, fournir ou préparer au moins un premier et un second mélange individuel, et utiliser ces premier et second mélanges individuels pour fabriquer une première et une seconde couche du composite lignocellulosique multicouche, où la première et la deuxième couche sont de préférence en contact l'une avec l'autre, et/ou où la première et la seconde mixture individuelle ont la même composition ou une composition différente,
- pour préparer un composite lignocellulosique multicouche comprenant plus d'une couche composite lignocellulosique, préparer deux couches ou plus, de préférence préparer deux couches ou plus en diffusant des couches individuelles les unes sur les autres, chaque couche comprenant des particules lignocellulosiques et un liant, dans lesquelles dans les deux couches ou plus les particules lignocellulosiques et/ou les liants sont identiques ou différentes,
- à l'étape S2) le compactage du mélange en deux étapes, où dans la première étape le mélange est précompacté pour obtenir un tapis pré-compacté, et dans lequel dans la seconde étape ce tapis précompacté est encore compacté,
- pendant ou après le compactage à l'étape S2), pressant à chaud le mélange,
- pendant ou après l'application d'un champ électrique à haute fréquence à l'étape S3), pressant à chaud le mélange,
et
- appliquant à l'étape S3) un champ électrique haute fréquence de surveillance et/ou de contrôle de la température au centre de ce mélange.

10. Composition du classeur pour produire un composite lignocellulosique, de préférence tel que défini dans les revendications 1 à 9, comprenant au moins comme composants :
b1) un, deux ou plusieurs polymères comprenant plusieurs groupes carboxyles,
b2) un, deux ou plusieurs composés polymères ou monomères possédant deux groupes hydroxy ou plus,
et
b3) urée.

11. Composition du classeur selon la revendication 10, où un ou au moins un des deux ou plusieurs composés polymères ou monomères possédant deux groupes hydroxylés ou plus de composant b2) est sélectionné parmi le groupe composé de
▪ les glucides, de préférence sélectionnés parmi le groupe composé de monosaccharides, disaccharides, oligosaccharides, polysaccharides et amidon, de préférence sélectionnés parmi le groupe composé de dextrose, fructose, saccharose, amidon non hydrolysé, amidon hydrolysé et amidon partiellement hydrolysé, ce dernier comprenant de préférence la maltodextrine et/ou le sirop de maïs, plus préférablement sélectionnés dans le groupe composé de maltodextrine et de sirop de maïs ;
▪ glycérol, polyvinylalcool et alcools de sucre, ces derniers étant de préférence sélectionnés parmi le groupe composé de mannitol, sorbitol, xylitol, lactitol, isomalt, maltitol, érythritol et hydrolysats d'amidon hydrogéné ; de préférence le glycérol ;
et
▪ des composés sélectionnés dans le groupe composé de triols, de préférence de triéthanolamine ; les tétrols, pentols et hexols, où les composés sélectionnés ne sont ni les glucides, ni les alcools de sucre, ni les alkylamines.

12. Composition du classeur selon l'une des revendications 10 à 11, où
- la composition du liant comprend de l'eau et a un pH allant de 1,0 à 3,5, de préférence entre 1,0 et 3,0, de préférence entre 1,0 et 2,5 ;
et/ou
- La composition du classeur comprend en tant que composante supplémentaire :
b4) un ou plusieurs composés non polymériques ayant deux groupes carboxyle ou plus et/ou un ou plusieurs composés non polymériques possédant au moins un groupe carboxyle et au moins un groupe hydroxy, comme défini dans l'affirmation 3 ;
et/ou
- La composante b3) du liant, l'urée, est présente en quantité totale allant de ≥ 5 à ≤ 50 %, de préférence de ≥ 10 à ≤ 35 % de masse, et plus encore de préférence entre ≥ 15 et ≤ 35 %, par rapport aux masses totales combinées des composants b1), b2) et de toute composante présente b4) du liant.

13. Composite lignocellulosique monocouche ou multicouche, obtenable ou obtenu selon un procédé tel que défini dans l'une des revendications 1 à 9, ou produit de construction comprenant ce composite lignocellulocellulosique monocouche ou multicouche.

14. Utilisation d'un composite lignocellulosique tel que défini à la revendication 13, comme élément de construction dans un produit de construction, de préférence comme élément de construction dans un mobilier ou des parties de meubles, de préférence comme élément de construction dans une construction creuse de meubles ou parties de meubles.

15. Kit pour produire une composition de liant destinée à la production d'un composite lignocellulosique, comprenant au moins comme composants individuels :
b1) Un, deux ou plusieurs polymères comprenant plusieurs groupes carboxyles, tels que définis dans l'une des revendications 1, 5 ou 6,
b2) pour la réticulation de ces polymères par estérification, un, deux ou plus composés polymères ou monomères comportant deux groupes hydroxylés ou plus, tel que défini dans l'une des revendications 1, 2 ou 6,
et
b3) urée,
et de préférence en comprenant en plus comme composant supplémentaire du liant: b4) un ou plusieurs composés non polymériques, de préférence bio-basés non polymériques, possédant deux groupes carboxyle ou plus et/ou un ou plusieurs composés non polymériques, de préférence bio-basés non polymériques, possédant au moins un groupe carboxyle et au moins un groupe hydroxy,
où au moins un, deux ou plusieurs composants individuels des composants b1, b2), b3), et éventuellement b4) du kit sont séparés spatialement des autres composants individuels.
